# EUROPEAN PATENT APPLICATION

(11) **EP 4 831 715 A2**
(43) Date of publication of application: **28.10.2026**
(21) Application number: 26196372.2
(22) Date of filing: 09.08.2021
(51) Int. Cl.: G02B 13/24

(54) **POP-OUT ZOOM CAMERA**

(30) Priority: 18.09.2020 US 202063080047 P; 11.04.2021 US 202163173446 P
(62) Document number(s) of the earlier application(s) in accordance with Art. 76 EPC: 21868808.3 / 4 127 788
(71) Applicant: Corephotonics Ltd., 6492103 Tel Aviv (IL)
(72) Inventor: SHABTAY, Gal, 6958313 Tel Aviv (IL); GOLDENBERG, Ephraim, 7751025 Ashdod (IL); RUDNICK, Roy, 6437313 Tel Aviv (IL); YEDID, Itay, 9979700 Karme Yosef (IL); DROR, Michael, 7401905 Nes Ziona (IL); SCHERER, Michael, 6910705 Tel Aviv (IL); SHEMESH, Ziv, 4900512 Petah Tikva (IL); GOULINSKI, Nadav, 4906228 Petah Tikva (IL)
(74) Representative: Valet Patent Services Limited

(57) **Abstract**

Cameras with OIS capable of performing multi zoom super macro photography and handheld electronic devices comprising such cameras. A camera may include a lens comprising N lens elements L₁-L_{N} divided into two or more lens groups arranged along a lens optical axis starting with L₁ on an object side and ending with L_{N} on an image side, adjacent lens groups separated by a respective air-gap d₁ along the lens optical axis; an image sensor with a sensor diagonal S_{D} between 7 and 20mm separated from lens element L_{N} by an air-gap d₂ along the lens optical axis; and an actuator for controlling air-gaps d₁ and d₂ to switch the camera between M ≥1 operative pop-out states and a collapsed state and to focus the camera on an object at an object-lens distance of less than 30cm.

## Description

### CROSS REFERENCE TO EXISTING APPLICATIONS

This application claims priority from US Provisional Patent Applications No. 63/080,047 filed September 18, 2020 and 63/173,446 filed April 11, 2021, which are incorporated herein by reference in their entirety.

### FIELD

The presently disclosed subject matter is generally related to the field of digital cameras, and in particular to zoom compact multi-aperture cameras.

### BACKGROUND

Compact multi-cameras and their incorporation in handheld electronic devices (also referred to herein as "devices") such as tablets and mobile phones (the latter referred to hereinafter generically as "smartphones") are known. These cameras provide advanced imaging capabilities such as zoom, see e.g. co-owned PCT patent application No. PCT/IB2063/060356. A typical triple-camera system exemplarily includes an ultra-wide-angle (or "Ultra-Wide" or "UW") camera, wide-angle (or "Wide" or "W") camera and a telephoto (or "Tele" or "T") camera, wherein their fields of view (FOVs) fulfill FOVuw > FOVw > FOV_{T}.

First smartphone models that provide Macro-photography capabilities by enabling very close focusing with a UW camera, which has a relatively short focal length (e.g. 2.5mm), have entered the consumer market. Drawbacks of UW Macro cameras include a need for small object-lens distances ("u"), and small object-to-image magnifications ("M"). For example, when a 2.5mm UW lens is focused to an object at 5cm (lens-object distance), the UW camera will have object-to-image a M of about 19:1.

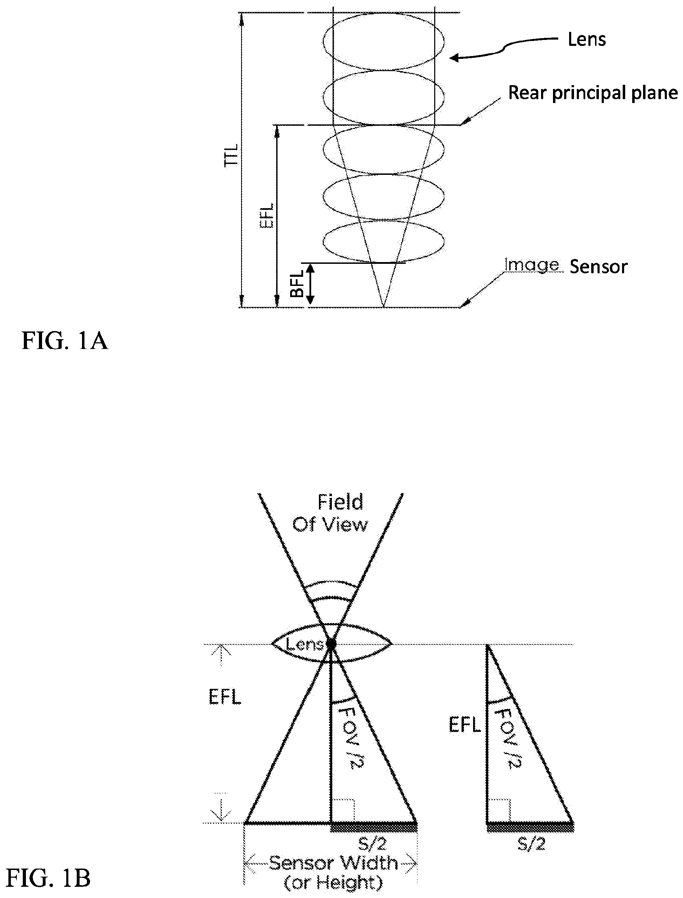

Challenges with zoom cameras relates to camera height or length (correlated e.g. with a total track length or "TTL"), to the effective focal length (EFL) and to the size of the image sensor of camera ("Sensor Diagonal" or "SD"). FIG. 1A illustrates schematically the definition of various entities such as TTL, EFL and back focal length ("BFL"). TTL is defined as the maximal distance between the object-side surface of a first lens element facing the object and a camera image sensor plane. BFL is defined as the minimal distance between the image-side surface of a last lens element facing the image sensor and a camera image sensor plane.

FIG. 1B shows an exemplary camera system having a lens with a FOV, an EFL, and an image sensor with a sensor width W and height H. SD connects to a sensor width W and a height H via SD = √(W²+H²). For fixed width/height ratios of a (normally rectangular) image sensor, the sensor diagonal is proportional to the sensor width and height. The diagonal field of view (FOV) relates to EFL and SD as follows: $tan \left(\frac{FOV}{2}\right) = \frac{SD / 2}{EFL}$ (Eq. 1) This shows that a camera with a larger SD but same FOV requires a larger EFL.

A Tele camera enables optical zoom. The TTL of a Tele lens is smaller than its EFL, typically satisfying 0.7<TTL/EFL< 1.0. Typical Tele EFL values in vertical Tele cameras range from 6mm to 10mm (without applying 35mm equivalence conversion). In folded Tele cameras, they range and from 10mm to 40mm. Larger EFL is desirable for enhancing the optical zoom effect, but this results in larger TTL, which is undesirable.

In a continuous attempt to improve the obtained image quality, there is a need to incorporate larger image sensors into Tele cameras. Larger sensors allow for improved low-light performance and larger number of pixels, hence improving spatial resolution as well. Other image quality characteristics, such as noise characteristics, dynamic range and color fidelity may also improve as the sensor size increases. In most Tele cameras, the SD of the sensor pixel array ranges from about 4.5mm (typically referred to as 1/4" sensor) to 7mm (typically referred to 1/2.5" sensor).

It would be beneficial to have a Tele camera design which both supports large EFL for
- large optical zoom effect;
- incorporation of large sensors (e.g. SD > 10 mm or 1/1.7" sensor);
- large M (e.g. 2:1 - 10:1) at lens-object distances of 5-15cm,
while still having small TTL for slim design. This can be achieved by a "pop-out camera", i.e. a camera having two or more lens states. In a first ("pop-out") lens state the camera is operative and has a large height H_{O}. A second lens state is a collapsed lens state where the camera is not operative and has a height H_{N-O}< H_{O}. Such design is presented for example in co-owned international patent application No. PCT/IB2020/058697.

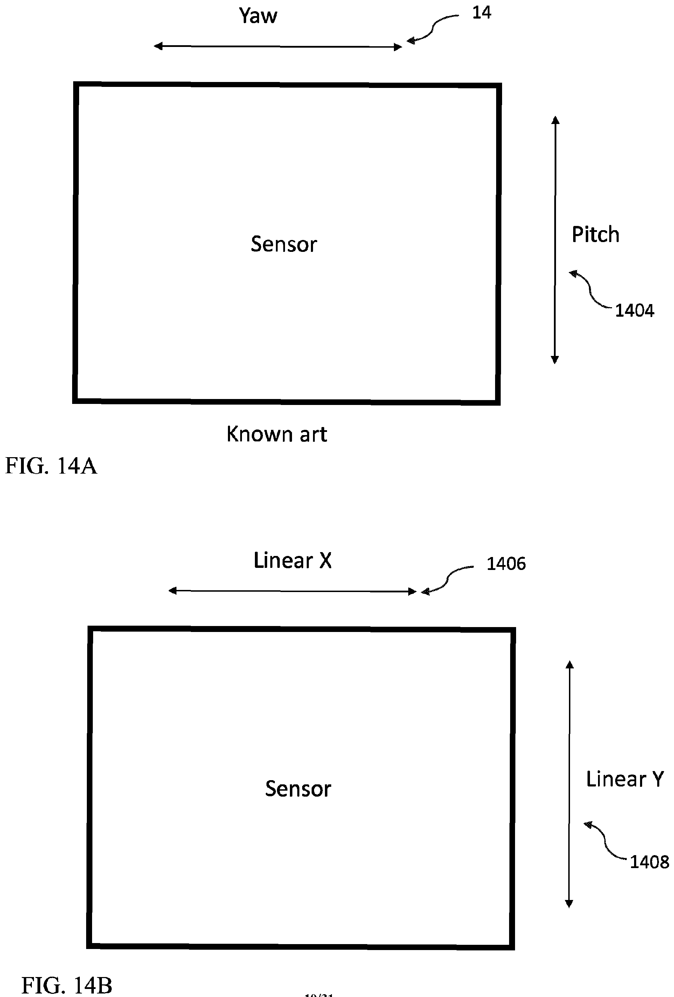

Modern multi-cameras usually further include optical image stabilization (OIS). OIS is required to mitigate undesired camera host device motion ("hand motion" or "hand-shake"). For OIS, the lens or the image sensor or the entire camera can be linearly moved in two directions that are perpendicular to the camera's optical axis (see FIG. 14A).

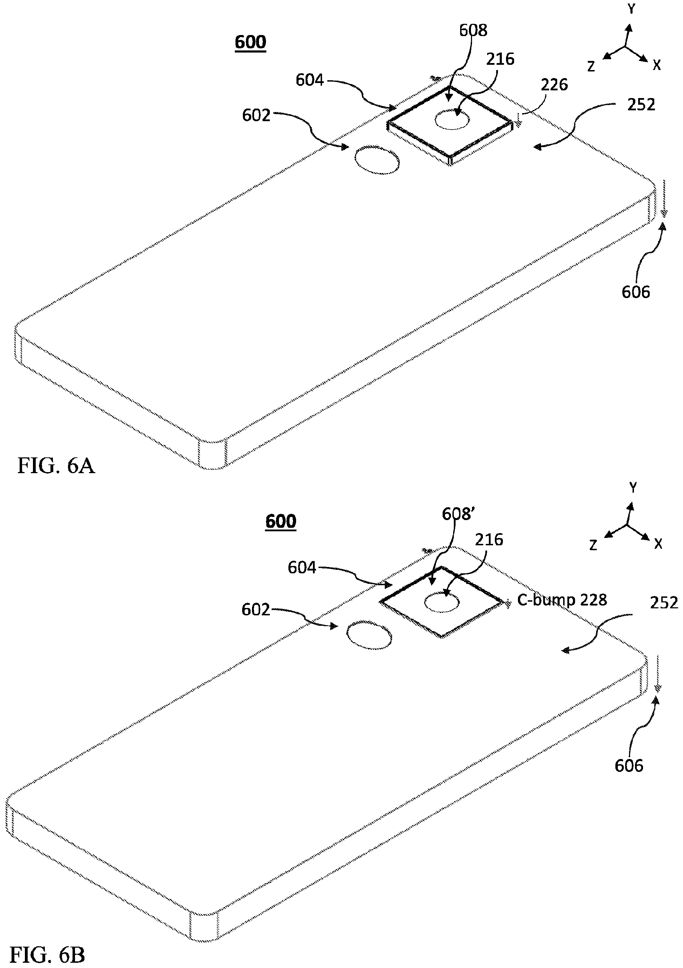

Undesired host device motions shift the camera in 6 degrees of freedom, namely linear movements in X-Y-Z (coordinates given with reference to the coordinate system shown in FIG. 6A), roll ("tilt about" or "tilt around") the Y axis, yaw (tilt around the Y axis) and pitch (tilt around the X axis), wherein mainly yaw and pitch are accountable for significant image deterioration. As undesired linear motion in X-Y-Z affects the image quality only negligibly for lens-object distances of 1m or more, most known premium smartphones include OIS that corrects for yaw and pitch only. In contrast, for Macro photography with a Tele camera allowing for large M of 10:1 or larger, undesired linear motion in X-Y may significantly affect the image quality. It would thus be beneficial to have an OIS mechanism that corrects for undesired linear motion during Macro capture.

### SUMMARY

In various embodiments, there are provided cameras, comprising: a lens comprising N lens elements L₁-L_{N} arranged along a lens optical axis starting with L₁ on an object side and ending with L_{N} on an image side, wherein N is ≥ 5, wherein the lens elements are divided into two or more lens groups and wherein two adjacent lens groups are separated by a respective air-gap d₁ along the lens optical axis; an image sensor separated from lens element L_{N} by an air-gap d₂ along the lens optical axis, image sensor having a sensor diagonal S_{D} between 7 and 20mm; and an actuator for controlling air-gaps d₁ and d₂ to switch the camera between M ≥1 operative pop-out states and a collapsed state and to focus the camera on an object at an object-lens distance of less than 30cm, wherein in each operative pop-out state m ∈ {1,2,...M} the lens has a respective effective focal length EFLₘ and a total track length TTLₘ, wherein in the collapsed state the lens has a total track length c-TTL, wherein a minimal EFL in the set of m EFLs is equal to or greater than 7mm, wherein c-TTL < 0.7EFL.

In some embodiments, M=2 or 3 or 4.

In some embodiments, the operative state is continuous such that the EFL changes continuously from EFL₁ to EFL_{M}.

In some embodiments, for a minimal EFL in the set of m EFLs, c-TTL < 0.65EFL.

In some embodiments, a camera can focus the lens to an object at a distance of less than 25cm.

In some embodiments, a camera can focus the lens to an object at a distance of less than 15cm.

In some embodiments, the actuator comprises a spring.

In some embodiments, d₁ is larger than TTL_{M}/6.

In some embodiments, d₁ is larger than TTL_{M}/5.

In various embodiments, there are provided camera systems comprising a camera as above or below (referred to now as "first camera") together with a second camera comprising a second lens system having at least one air-gap, wherein in the collapsed state the second lens has a total track length c-TTL₂, wherein the actuator is operative to control the at least one air-gap of the second camera for simultaneously switching the first camera and the second camera between M ≥1 operative pop-out states and a collapsed state. In some embodiments, cTTL₂ = cTTL ±10%. The cameras or a camera system as above or below may be incorporated in a handheld electronic device. The handheld electronic device may have a device exterior surface, wherein in an operative state any of the cameras extends beyond the device exterior surface by 2mm-10mm and in a non-operative state any of the cameras of any of the claims 1-11 and 13 extends beyond the device exterior surface by less than 2mm.

In various embodiments, there are provided handheld electronic devices, comprising: a Tele camera having a camera optical axis and comprising an image sensor and a lens having a lens axis substantially parallel to the camera optical axis, the Tele camera having an EFL ≥ 9mm; a motion sensor for sensing an undesired linear motion of the handheld electronic device; a depth estimator for estimating the distance between the Tele camera and an object; and an actuator for moving the Tele camera or a component of the Tele camera to compensate for the handheld electronic device's undesired linear motion, wherein the compensation depends on the handheld electronic device's undesired linear motion and on the distance between the Tele camera and an object, wherein the distance between the Tele camera and the object is smaller than 50cm.

In some embodiments, a handheld device further comprises an Ultra-Wide camera having a field of view FOVuw larger than a field of view FOV_{T} of the Tele camera.

In some embodiments, a handheld device further comprises a Wide camera having a field of view FOVw larger than a field of view FOV_{T} of the Tele camera.

In some embodiments, the estimating the distance between the Tele camera and an object is based on Phase detection auto focus (PDAF).

In some embodiments, the estimating the distance between the Tele camera and an object is based on the Wide camera and the Tele camera or based on the Ultra-Wide camera and the Tele camera.

In some embodiments, the sensing the linear motion includes measuring the linear motion in one or more directions.

In some embodiments, the sensing the linear motion includes measuring the linear motion in two or more directions.

In some embodiments, the moving component is the lens. An amount of lens movement d_{Lens} is calculated as ${d}_{Lens} = {d}_{0} \frac{EFL}{u}$*,* wherein d₀ is an undesired linear motion of device, EFL is the effective focal length and u is an object-lens distance.

In some embodiments, the moving component is the image sensor. An amount of image sensor movement d_{Sensor} is calculated as ${d}_{sensor} = {d}_{0} \frac{EFL}{u - EFL}$ wherein d₀ is an undesired linear motion of device and u is an object-lens distance.

In some embodiments, the motion sensor includes an inertial measurement unit (IMU).

### BRIEF DESCRIPTION OF THE DRAWINGS

Non-limiting embodiments of the presently disclosed subject matter are described below with reference to figures attached hereto that are listed following this paragraph. Identical structures, elements or parts that appear in more than one figure may be labeled with the same numeral in the figures in which they appear. The drawings and descriptions are meant to illuminate and clarify embodiments disclosed herein, and should not be considered limiting in any way.
FIG. 1A illustrates schematically the definition of various entities in a camera;
FIG. 1B illustrates schematically an exemplary camera system having a lens with a FOV, an EFL and an image sensor with a sensor width W;
FIG. 1C shows schematically in cross-section an exemplary Tele camera lens system disclosed herein in a collapsed, non-operative state;
FIG. 1D shows the camera of FIG. 1C in a first operative Tele lens state;
FIG. 1E shows the camera of FIG. 1C in a second operative Tele lens state;
FIG. 1F shows the camera of FIG. 1C in an operative Macro lens state;
FIG. 2A shows a cross-sectional view of a of a pop-out Tele camera disclosed herein in an extended state and incorporated in a camera hosting handheld electronic device;
FIG. 2B shows a cross-sectional view of pop-out mechanism of the camera of FIG. 2A in a pop-out state;
FIG. 3A shows the pop-out camera of FIG. 2A in a collapsed or non-operative state;
FIG. 3B shows the pop-out mechanism in the camera of FIG. 3A in the respective collapsed state;
FIG. 4A shows in cross-sectional view an optics module in a pop-out state;
FIG. 4B shows the optics module of FIG. 4A in a collapsed state with a collapsed c-TTL;
FIG. 5A shows in cross-sectional another optics module in a pop-out state;
FIG. 5B shows the optics module of FIG. 5A in a collapsed state;
FIG. 6A shows an embodiment of a handheld electronic device with a camera system comprising an upright Wide camera and a pop-out Tele camera in a pop-out state;
FIG. 6B shows the device of FIG. 6A with the pop-out Tele camera in a collapsed state;
FIG. 7A shows another embodiment of a handheld electronic device with a camera system comprising an upright Wide camera and a pop-out Tele camera in a pop-out state;
FIG. 7B shows the device of FIG. 7A with the pop-out Tele camera in a collapsed state;
FIG. 8A shows an embodiment of a lens system disclosed herein;
FIG. 8B shows an embodiment of another lens system disclosed herein;
FIG. 9 shows yet another lens system disclosed herein in a pop-out lens state;
FIG. 10 shows yet another lens system disclosed herein in a pop-out lens state;
FIG. 11A shows yet another lens system disclosed herein in a first pop-out lens state;
FIG. 11B shows the lens system of FIG. 11A in a second, Macro pop-out lens state;
FIG. 12A shows yet another lens system disclosed herein in a first pop-out lens state;
FIG. 12B shows the lens system of FIG. 12A in a second, Macro pop-out lens state;
FIG. 13A shows yet another lens system disclosed herein in a first pop-out lens state;
FIG. 13B shows the lens system of FIG. 13A in a second, Macro pop-out lens state;
FIG. 14A shows a known sensor shift setup;
FIG. 14B shows a sensor shift setup disclosed herein;
FIG. 15A shows an exemplary optical system at an initial time, e.g. when starting image sensor exposure for image capture;
FIG. 15B shows the optical system of FIG. 15A at a later time during exposure of its image sensor for image capture and after the camera hosting handheld device underwent an undesired linear motion in the negative Y direction by a distance d₀ relative to an object at rest;
FIG. 16A shows schematically in a block diagram a handheld electronic device operative to perform OIS for correcting undesired linear motion in X and Y directions as described herein;
FIG. 16B shows schematically in a block diagram another handheld electronic device operative to perform OIS for correcting undesired linear motion in X and Y directions as described herein.

### DETAILED DESCRIPTION

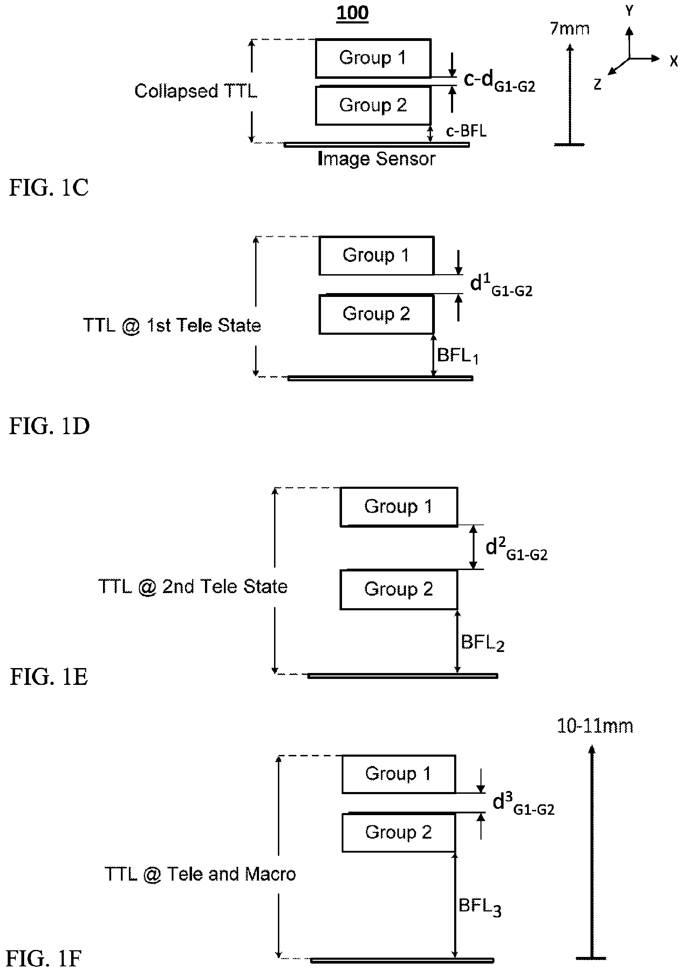

FIGS. 1C-F show schematically an embodiment of a Tele camera lens system (or simply "lens system") numbered **100** disclosed herein in a cross-sectional view. FIG. 1C shows lens system **100** in a collapsed, non-operative state. FIG. 1D shows lens system **100** in a first operative Tele lens state (or "Tele state"). FIG. 1E shows lens system **100** in a second operative Tele state. FIG. 1F shows lens system **100** in an operative Macro lens state (or "Macro state"). Lens system **100** comprises a lens (with lens elements), an optional optical window, and an image sensor.

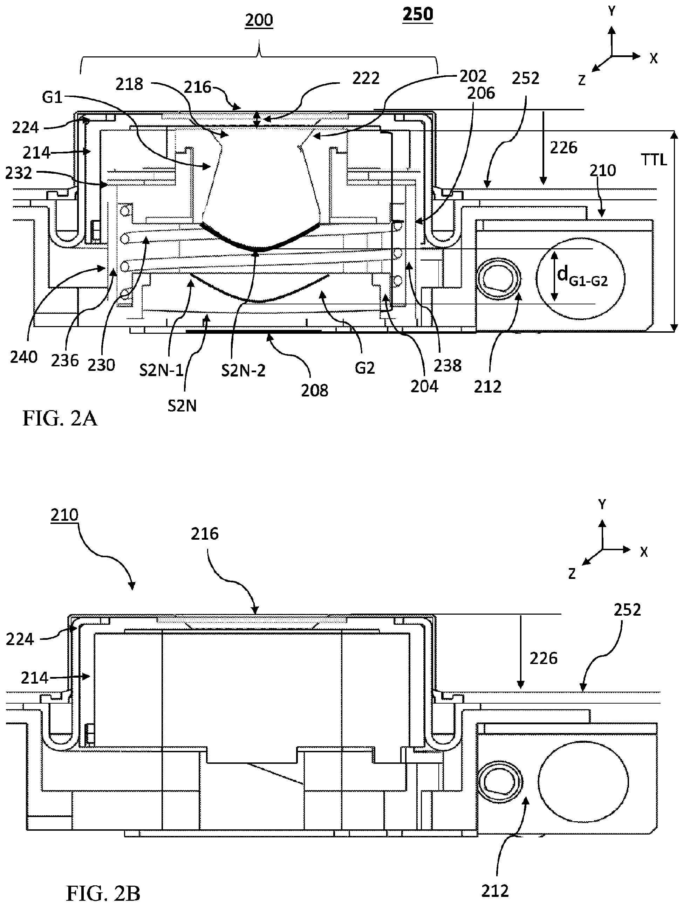

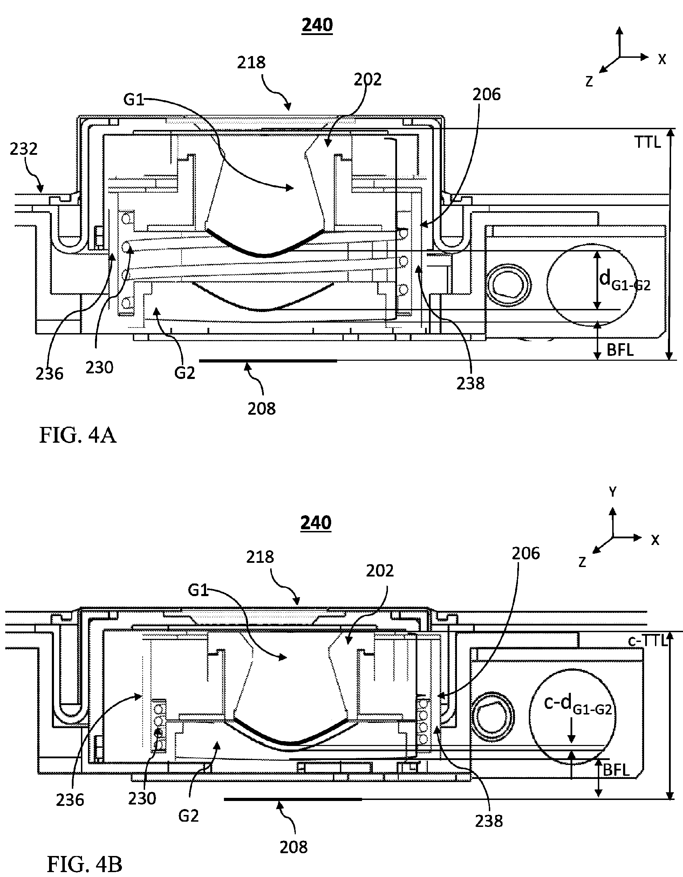

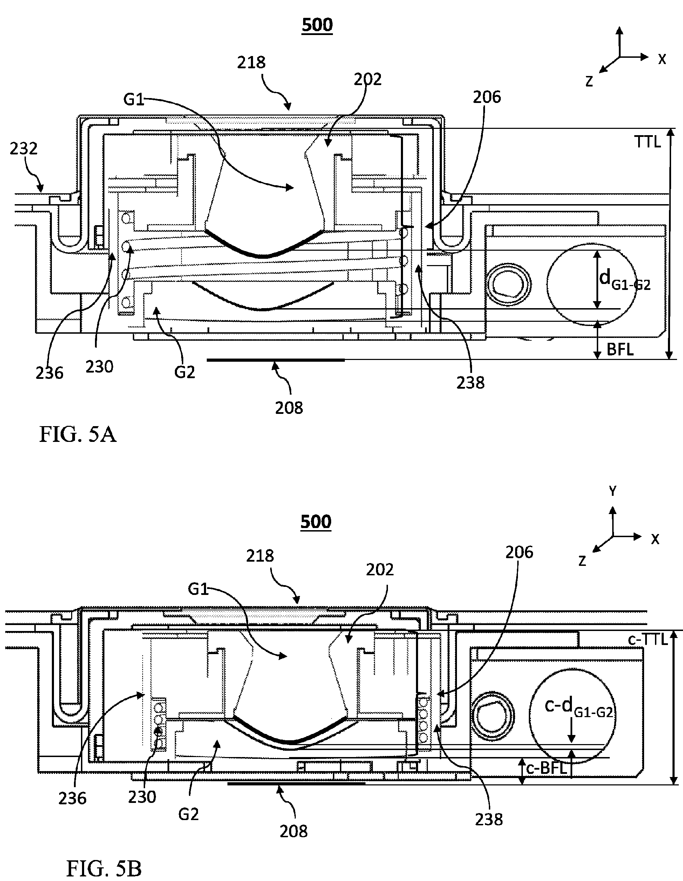

Lens system **100** may be included in a pop-out Tele camera such as camera **200,** an optics module such as an optics module **240** (see FIGS. 4A-B) or **500** (see FIG. 5A-B) wherein the optics module may be included in a pop-out mechanism such as pop-out mechanism **210** (see FIG. 2A-B, FIG. 3A-B and FIG. 4A-B) to form a pop-out camera. If not stated otherwise, a "Tele state" refers to a state in which the lens system that can focus to objects in the range from infinity to about 50cm, while a "Macro state" refers to a state in which the lens system that can focus to objects in the range from about 50cm to about 5cm or less. Tele states enable Tele photography, while Macro states enable Macro photography.

Henceforth and for simplicity, the use of the term "pop-out" before various components may be skipped, with the understanding that if defined the first time as being a "pop-out" component, that component is such throughout this description.

Lens system **100** comprises two groups of lens elements, Group 1 (G1) and Group 2 (G2). G1 and G2 are movable along a common optical axis to occupy different positions that correspond to different Tele states. In some embodiments, two or three or four or five particular lens states may be supported, e.g. the four lens states shown in FIGS. 1C-E. A folded lens divided into several lens groups for realization of various lens states is described for example in PCT/IB2020/051405. FIGS. 1C-E show also the meaning of TTL, a first collapsed back focal length c-BFL, a BFL of the 1^{st} operative Tele state ("second" back focal length) BFL₁, a third back focal length BFL₂ and a fourth back focal length BFL₃.

The pop-out design allows for a slim lens when the camera is not in use. When the camera is in use ("activated"), the lens pops out of an exterior device surface into an operative state, acting as an optical system that produces a crisp image on an image sensor. Each lens group comprises lens elements that have fixed distances to each other, but an air gap **d_{G1-G2}** between G1 and G2 may change between the different lens states. G1 and G2 can be moved relative to each other by an actuator such as actuator **212** see below. The actuator may move G1 and G2 by e.g. 0.05-8.5mm with respect to each other (e.g. for modifying an air-gap such as **d_{G1-G2}**) or it may move G1 and G2 together relative to the image sensor for switching from one lens state to another lens state, e.g. from a Tele state to a Macro state

In some embodiments, the transition between different lens focus distances may be continuous, e.g. the pop-out camera may be capable of focusing from infinity to e.g. 5cm continuously. In other embodiments, the transition may be discrete with ranges for continuous focusing. For example, in a Tele state, the pop-out camera may be capable of focusing continuously to object-lens distances ("u") from infinity to e.g. 1m, and in a Macro state the pop-out camera may be capable of focusing continuously to u from e.g. 40cm to 5cm. The F number (f/#) may undergo only slight changes when transitioning between the different lens states, e.g. by less than 5%, or less than 10%, or less than 30% with respect to, respectively, a lens state at infinity, at 10 cm, or at 5 cm. In yet other embodiments, only two different lens states may be provided, e.g. one collapsed lens state and one Tele lens state. The Tele lens state may be switched to a Macro lens state by changing only the BFL, i.e. by moving all lens elements.

FIG. 1C shows lens system **100** in a collapsed state. Here, a collapsed TTL ("c-TTL") of the lens may be 4-13mm, a collapsed BFL ("c-BFL") may be 0.15-4mm and a collapsed air gap "**c-d_{G1-G2}**" may be 0.02-2.5mm. In the collapsed state, the camera is not functional, i.e. the optics cannot project a scene as a crisp image onto the image sensor.

As an example ("SD-Example ") for TTL and SD, in the following we apply Eq. 1 to a Tele camera with FOV=30 degrees. We assume EFL = TTL and that an image sensor may be in a 4:3 width/height format, so that sensor width W ~ 0.8SD.

FIG. 1D shows lens system **100** in a first extended (or "operative" or "pop-out") state having a first zoom factor ZF1. The lens acts as a Tele lens. Here, a first extended state TTL (TTL₁) may be 5-13mm, a first extended state BFL (BFL₁) may be 0.25-5mm and a first extended air gap **d¹_{G1-G2}** may be 0.15-3mm. For SD-Example with a TTL₁ = 12mm, SD = 8.1mm.

FIG. 1E shows lens system **100** in a second lens state having a second zoom factor ZF2 > ZF1. The lens acts as a Tele lens. Here, TTL₂ may be 6-17mm, BFL₂ may be 0.45-6mm and **d²**_{**G1**-**G2**} may be 0.25-5mm. For SD-Example with a TTL₂ = 14mm, SD = 9.5mm.

FIG. 1F shows lens system **100** in a third lens state having a third zoom factor ZF3 > ZF2. In this state, the lens acts as a Tele lens and a Macro lens. A magnification M for Macro photography at camera-object distances of < 15cm may be 15:1 - 2:1. TTL₃ may be 7-20mm, the BFL₃ may be 0.5-8mm and **d³_{G1-G2}** may be 0.35-8mm. For SD-Example with a TTL₃ = 19mm, SD = 13mm (corresponding to a 1/1.3" sensor).

For embodiments that support a continuous lens state change, there may be continuous transitions between the lens states shown in FIGS. 1C-F. In some embodiments, G1 may include the majority of optical power Φ of the entire lens and G2 may correct for Field curvature. The "majority of optical power" refers to more than a factor of 2 between the optical power of G1 and G2, i.e. Φ_{G1} > 2·Φ _{G2}, wherein Φ = 1/EFL.

FIG. 2A shows in cross-sectional view an embodiment numbered **200** of a pop-out Tele camera disclosed herein in an extended state and incorporated in a device **250.** Camera **200** comprises a pop-out optics module **240** that includes a pop-out lens **206.** Camera **200** further comprises an image sensor **208** and a pop-out mechanism **210** that includes an actuator **212** and a window frame **214** carrying a window **216.** The window covers an aperture **218** of pop-out Tele camera **200.** Optics module **240** is covered by a cover **232.**

An entrance pupil (or "aperture size") of camera **200** may be for example 4 - 9 mm. For comparison, a folded Tele camera usually has an entrance pupil smaller than 4.5mm, while a dedicated Macro camera usually has an entrance pupil smaller than 1mm. Assuming pop-out Tele camera **200** has an aperture size of 7mm vs. a size of 4mm for the folded Tele camera, camera **200** will receive about 3 times more light, corresponding to a better low light signal-to-noise ratio ("SNR"). In comparison with the dedicated Macro camera with a 1mm aperture size, camera **200** will have a 6-fold larger EFL, and a ~ 40 times shallower Depth of Field (DOF), translating into a ~ 40 times stronger optical Bokeh effect.

The lens, image sensor and (optionally) an optical window or "filter" (not shown here but shown e.g. in lens systems **800, 850, 900, 1000, 1100, 1200, 1300, 1700, 1800, 1900, 2000, 2100**) form a pop-out lens system **260.** The camera may have a Tele FOV_{T} of 15 - 50 deg.

The TTL of the lens in a pop-out Tele camera disclosed herein may be 5-35mm. The image sensor may have a sensor diagonal SD in the range 3.5 - 25mm and EFL of 6mm to 45mm.

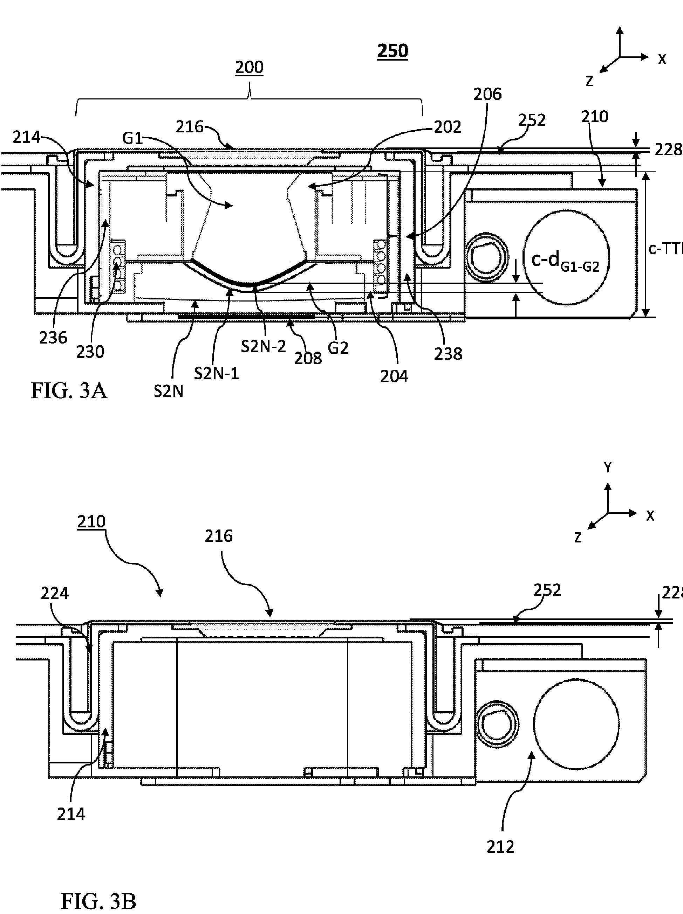

FIG. 2B shows a cross-sectional view of an embodiment of pop-out mechanism **210** in a pop-out state. Pop-out mechanism **210** is essentially camera **200** without optics module **240.** Camera **200** has also a collapsed ("c" or "non-operative") state, shown in FIGS. 3A-B. FIG. 3A shows a cross-sectional view of camera **200** in the collapsed state. FIG. 3B shows a cross-sectional view of pop-out mechanism **210** in the respective collapsed state. Camera **200** switches between a pop-out state and a collapsed state according to a first method, where the gap **d_{G1-G2}** between G1 and G2 collapses. The BFL does not change. Lens system **800** switches according to the first method.

Pop-out optics module **240** and window frame **214** form an air-gap (or simply "gap") **222** between lens **206** and window **216,** which gap may be for example 0.15-1.2mm. Air-gap **222** allows for a combined movement of about 0.1-1.1mm of a first lens barrel section **202** and a second lens barrel section **204** by for performing auto-focus (AF) and OIS by moving the lens. First lens barrel section **202** includes G1. Second lens barrel section **204** includes G2. In other embodiments, air-gap **222** may be significantly larger, e.g. 6mm. A module seal **224** prevents particles and fluids from entering the camera.

Camera **200** exceeds an exterior surface **252** of host device **250** by a significant pop-out bump height H_{P-O-B} **226.** "Significant" may be for example 1.0mm-15.0mm. In the extended state, camera **200** increases the height of host device **250** to a "height in a pop-out state" H_{P-O} (not shown). H_{P-O} is given by adding H_{P-O-B} **226** to a device height H₀ that does not include the bump, see e.g. H₀ **606,** H_{P-O} = H₀ +H_{P-O-B}. In FIG. 2A, a single spring **230** pushes first lens barrel section **202** towards window frame **214.** In other embodiments, the single spring may be replaced by a plurality of springs. In the pop-out state, the spring is in an extended state (characterized by an increased gap between G1 and G2), see also FIG. 4A. A guiding pin **236** and a guiding pin **238** guide movements of first lens barrel section **202.**

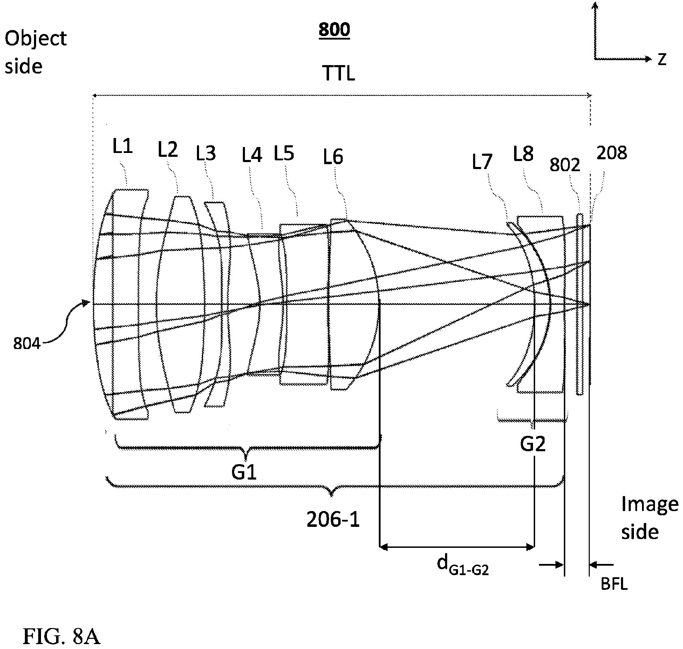

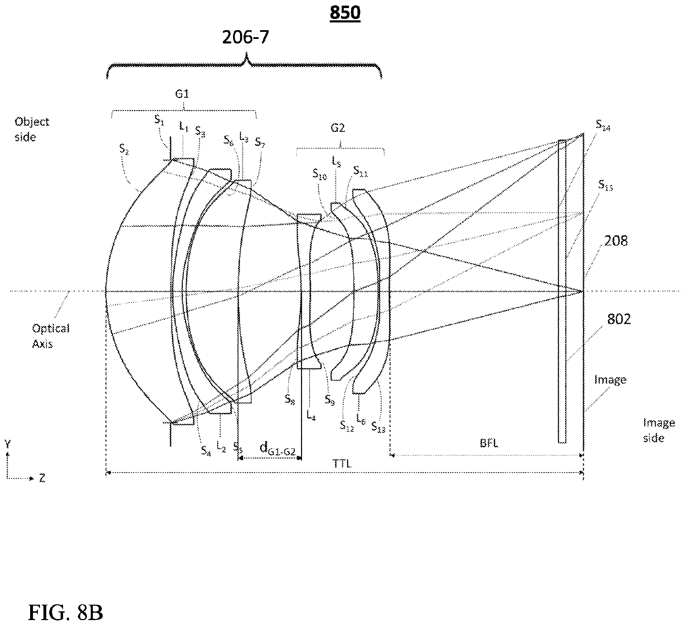

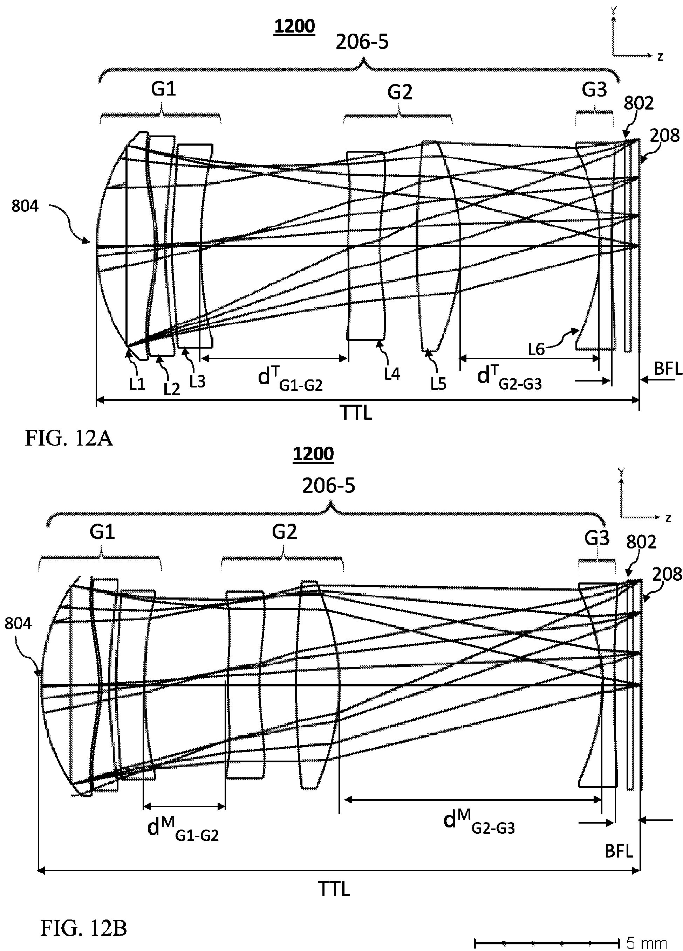

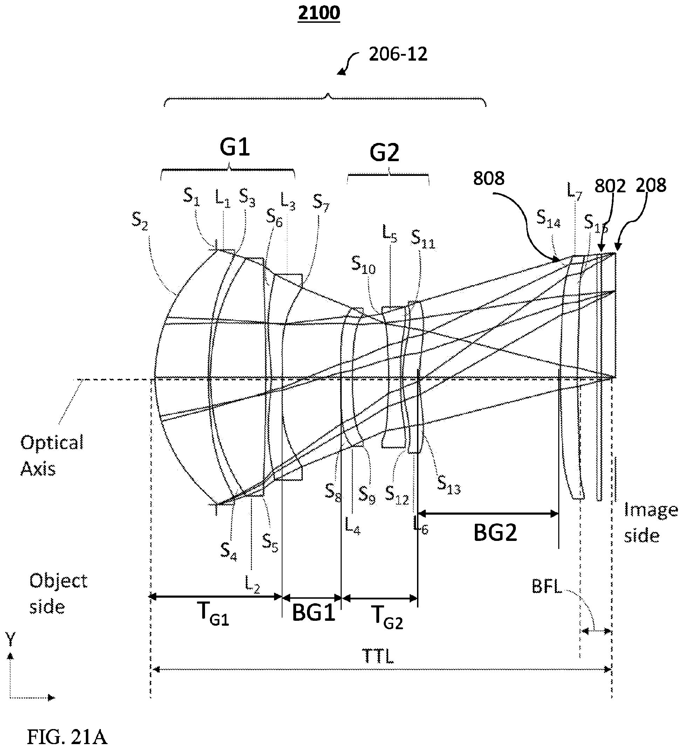

In general, lens **206** includes N ≥ 5 lens elements. In some embodiments, there may be more than two lens barrel sections with one lens groups each. For example, there may be 3, 4, 5 lens barrel sections, with each lens barrel section carrying a lens group. Examples of lens systems with two lens groups are lens systems **206-1, 206-2, 206-3, 206-4, 206-6,206-7, 206-8, 206-9, 206-10** and **206-11** shown in FIGS. 8-13 and FIGS. 17-20. Examples with lens systems with three lens groups are lens systems **206-5** and **206-12** shown in FIG. 12B and in FIG.21A-B respectively. The lens barrel sections may be divided into fixed lens barrel sections and movable lens barrel sections. In lens **206,** G1 may include lens elements L1-LN-1 and G2 includes lens element LN. Air-gaps of changing thickness d may be formed between lens groups according to their relative movement. In examples with more than two lens barrel sections, some or all lens barrel sections may be movable and have respective air-gaps formed between the lens groups. In some examples, all air-gaps between lens groups may collapse in a non-operative camera state. In other examples, only some but not all of the air-gaps between lens groups may collapse in a non-operative state. The total length of such air-gaps may be 1-9.5mm.

Lens groups may be determined by the largest air-gaps between consecutive lens elements. For example, the largest air-gap present between two consecutive lens elements may be used to divide a lens into two lens groups, the largest air-gap and the second largest air-gap present between two consecutive lens elements may be used to define three lens groups, etc. In some examples, collapsible air-gaps are formed between two consecutive lens elements. In other examples, the collapsible air-gaps are formed between a lens element and another optical component, e.g. between a lens element and an optical filter, or between a lens element and an image sensor (i.e. the air-gap is the BFL).

For examples that support two or three or four particular lens states, there may be two or three or four particular values for air-gaps. For other embodiments that support a continuous change of lens states, values for air-gaps may change continuously.

In the extended state and with reference to FIG. 2A, air-gap **d_{G1-G2}** may be 1-9mm. Guiding pins **236** and **238** may guide the movement of first barrel section **202** and G1 in the X-Z plane for providing mechanical stability and repeatability in X-Z plane.

In some embodiments, a guiding and positioning mechanism such as described in PCT/ IB2020/058697 may be based on a kinematic coupling mechanism.

An optical system such as camera **200** may be designed to support, e.g. by means of a guiding and positioning mechanism based on kinematic coupling mechanism, in some examples, accuracy tolerances for decenter of e.g. ±20µm in the X-Z plane and of e.g. ±10µm in the Y direction, as well as for a tilt of ±0.5°. Repeatability tolerances for decenter may be e.g. ±10µm in the X-Z plane and of e.g. ±5µm in the Y direction, as well as for a tilt of ±0.25°. In other examples, accuracy tolerances for decenter may be e.g. ±10µm in the X-Z plane and of e.g. ±5µm in the Y direction, as well as e.g. ±0.15°. Repeatability tolerances for decenter may be e.g. ±5µm in the X-Z plane and of e.g. ±2.5µm in the Y direction, as well as for a tilt of ±0.08°. In yet other examples, accuracy tolerances for decenter may be e.g. ±5µm in the X-Z plane and of e.g. ±2.5 µm in the Y direction, as well as e.g. ±0.1°. Repeatability tolerances for decenter may be e.g. ±1.5µm in the X-Z plane and of e.g. ±0.8µm in the Y direction, as well as for a tilt of ±0.05°.

"Accuracy tolerances" refer here to a maximum variation of the distances between optical elements and between mechanical elements. "Repeatability tolerances" refer here to a maximum variation of the distances between optical elements and between mechanical elements in different pop-out cycles, i.e. the capability of the mechanical and optical elements to return to their prior positions after one or many pop-out (or collapse) events. Tolerances in the Y direction may be less important, as variations in Y can be compensated by optical feedback and moving the lens for auto-focus.

FIG. 3A shows pop-out camera **200** in a collapsed or non-operative state. To switch optics module **240** to the collapsed state, actuator **212** decreases air-gap **d_{G1-G2}** by moving window frame **214** to apply pressure to first (and here collapsible) lens barrel section **202** that translates into a movement of the collapsible lens barrel section towards the image sensor. The TTL of the camera is now a collapsed TTL (c-TTL) and may be 4.5-12mm. A "collapsed air-gap" c-**d_{G1-G2}** may be 0.05-2.5mm. Examples of lens systems for a pop-out camera with a collapsible air gap **d_{G1-G2}** and a non-collapsible BFL include lens systems **800, 1200** and **1300.**

In FIG. 3A, camera **200** forms a collapsed bump (c-bump) height H_{C-B} **228** with respect to device exterior surface **252.** H_{C-B} may be 0-3mm. In the collapsed state, the camera increases the height of host device **250** to a "height in the collapsed state" H_{C} = H₀ + H_{C-B}.

A plurality of lens states such as shown in FIGS. 1C-F may be achieved by modifying air-gaps such as e.g. **d_{G1-G2}.** In other examples, a pop-out mechanism may have more than 2 lens states, e.g. 3 states or 4 states. The 3 lens states may include one collapsed state and two pop-out (operative) states having 2 different or identical pop-out bump heights. The 4 lens states may include one collapsed state and three pop-out (operative) states having 3 different or identical pop-out bump heights.

FIG. 4A shows in cross-sectional view optics module **240** in a pop-out state. FIG. 4B shows in cross-sectional view optics module **240** in a collapsed state with a collapsed c-TTL. The BFL does not change when switching from the pop-out to the collapsed state. Camera **240** switches between a pop-out state and a collapsed state according to the first method.

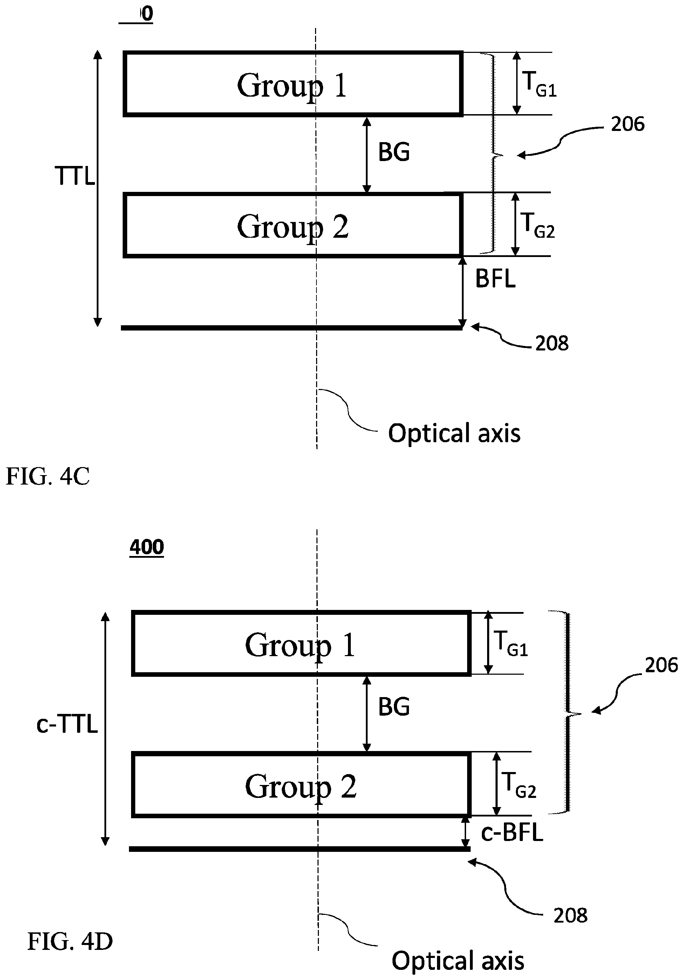

FIG. 4C shows schematically in cross-sectional view a lens system **400** in a pop-out state. System **200** comprises a pop-out lens **206** and an image sensor **208.** Lens **206** includes two lens groups (G1 and G2 respectively) separated by a big gap (BG). The thickness (along an optical axis of the lens) of G1 and G2 is indicated by T_{G1} and T_{G2} respectively. FIG. 4D shows schematically in cross-sectional view lens system **400** in a first collapsed state. Camera **400** switches between a pop-out state and a collapsed state according to a second method, where the BFL collapses to a c-BFL, but the gap between G1 and G2 does not change. Lens systems **850, 900, 1000, 1700** and **1800** switch between a pop-out state and a collapsed state according to the second method.

FIG. 5A shows in cross-sectional view optics module **500** in a pop-out state. FIG. 5B shows in cross-sectional view optics module **500** in a collapsed state. To form a pop-out camera, optics module **500** may be integrated into a pop-out mechanism such as **210** (not shown here) having a window **216** covering an aperture **518.** In the collapsed state, c-**d_{G1-G2}** may be 0.05-1.5mm and c-BFL may be 0.05-2.5mm. Here, the BFL does change when switching from the pop-out to the collapsed state. The difference between c-TTL and TTL stems from two modified distances: a modified distance between G1 and G2, given by the difference of **d_{G1-G2}** and c-**d_{G1-G2}**, and a modified distance between G2 and image sensor **208,** given by the difference between BFL and c-BFL. Camera **500** switches between a pop-out state and a collapsed state according to a third method, where a gap between two lens groups collapses and additionally the BFL collapses. Lens systems **850, 900, 1000, 1900** and **2000** switch between a pop-out state and a collapsed state according to the third method.

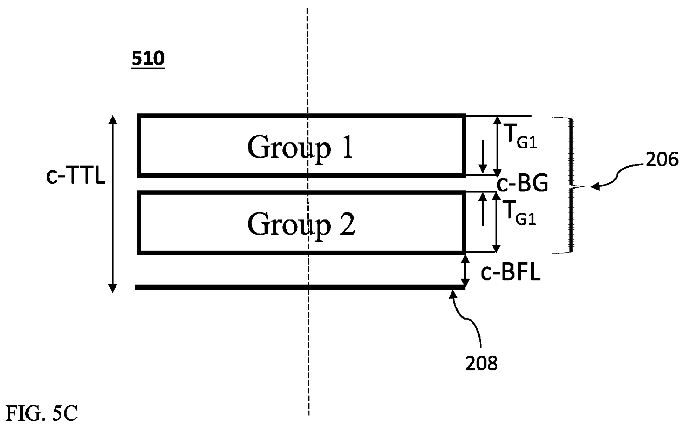

FIG. 5C shows schematically in cross-sectional view another lens system **510** in a collapsed state. In a pop-out state, camera **510** is identical with camera **400.** Camera **510** switches between a pop-out state and a collapsed state according to the third method.

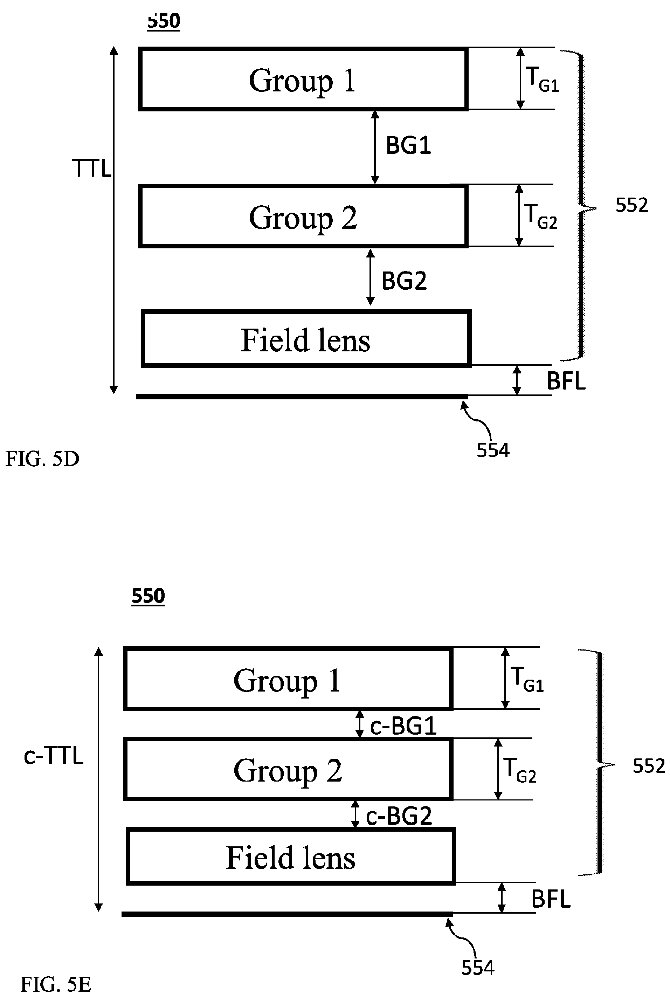

FIGS. 5D-5E show an embodiment of a lens system **550** disclosed herein which switches between a pop-out state and a collapsed state according to a fourth method, where two gaps between three lens groups collapse. System **550** comprises a pop-out lens **552** and an image sensor **554.** FIG. 5D shows system **550** in a pop-out state. Lens **552** includes two lens groups G1 and G2 separated by a first big gap (BG1), and a field lens separated from G2 by a second big gap (BG2).

FIG. 5E shows lens system **550** in a collapsed state. BG1 is collapsed to a collapsed BG1 ("c-BG1") and BG2 is collapsed to a collapsed BG2 ("c-BG2"). The BFL does not change. Lens systems **1100, 1200, 1300** and **2100** switch between a pop-out state and a collapsed state according to the fourth method. FIG. 6A shows an embodiment of a handheld electronic device (e.g. smartphone) **600** with a camera system comprising a regular (upright) Wide camera **602** and a pop-out Tele camera **604** in an operative pop-out state. Height H₀ **606** is the height of device **600** (not including a "camera bump"). In the pop-out state, the Tele pop-out camera extends (raises) the device's exterior surface **252** by a camera bump **608** of height H_{P-O-B} **226.** A large image sensor such as **208** (not visible here) and a pop-out mechanism such as pop-out mechanism **210** (not fully visible here) required for switching between a collapsed and a pop-out camera state may define a minimum area of the device's exterior surface **252** that is covered by the pop-out camera (in the X-Z plane).

FIG. 6B shows host device **600** with pop-out Tele camera **604** in a collapsed state, illustrating the small height H_{C-B} **228** of the c-bump **608'** when Tele camera **604** is in the collapsed state.

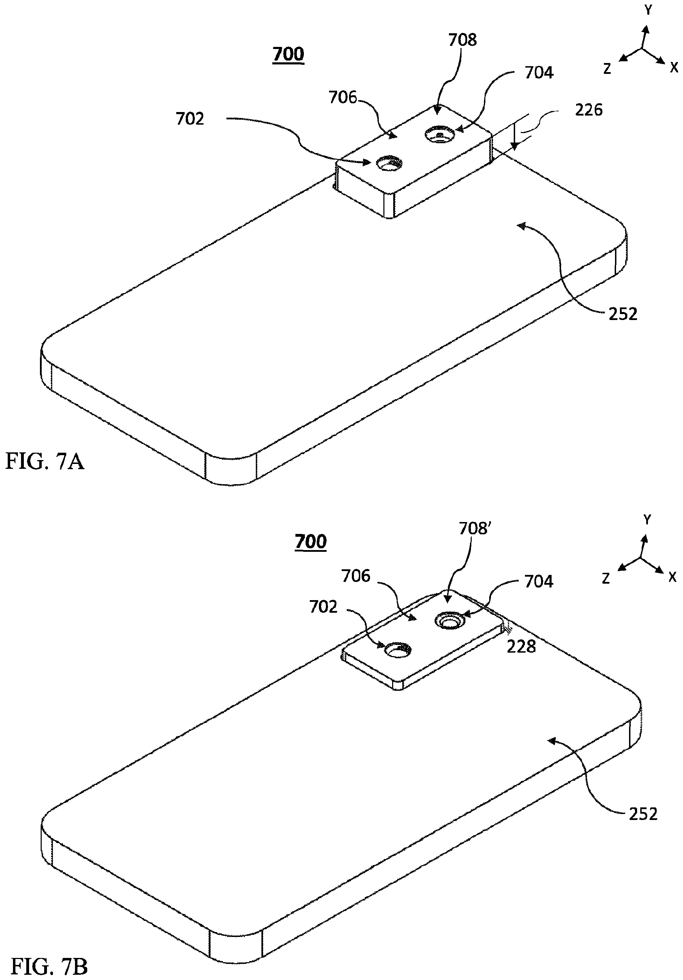

FIG. 7A shows another embodiment of a device **700** with a camera system comprising a Wide pop-out camera **702** and a Tele pop-out camera **704** as disclosed herein in an operative pop-out state. Pop-out bump **708** of height H_{P-O-B} **226** is visible. A pop-out mechanism cover **706** covers both the Tele and the Wide cameras. A pop-out mechanism like mechanism **210** (not shown) switches the Tele and the Wide camera between one or more pop-out states and a collapsed state together and simultaneously, i.e. an actuator for state switching such as actuator **212** may control one or more air-gaps of both the Tele and the Wide camera. FIG. 7B shows host device **700** with the cameras in a collapsed state, with c-bump 708' of height H_{C-B} **228** visible. A collapsed TTL of the Wide camera, c-TTL_{W} may be similar to the collapsed TTL of the Tele camera, c-TTL_{T}, e.g. cTTL_{W} = cTTL_{T} ±10% or cTTL₂ = cTTL ±20%.

All lens systems shown in the following may be included in a pop-out optics module such as **240** or **500** and in a pop-out camera such as **200.**

FIG. 8A shows a lens system **800** in a pop-out state. Lens system **800** comprises a first embodiment of a lens numbered **206-1.** Lens **206-1** includes eight lens elements marked L1-L8, starting with L1 on an object side facing the object and ending with L8 on an image side toward the image sensor. The lens elements are arranged in two lens groups G1 and G2. G1 includes lens elements L1-L6, and G2 includes L7 and L8. An optional window **802** may e.g. be an optical filter. The optical axis is indicated **804.** Lens **206-1** is shown in a first zoom state having ZF1 with EFL_{T} = 13mm, F# = 1.1 - 1.8 and TTL = 19.84mm. Lens **206-1** may be switched to further zoom states continuously or discretely (having particular ZF2 or ZF3) by modifying **d_{G1-G2}** and/or BFL.

In the pop-out state, G1 is separated from G2 by an air-gap **d_{G1-G2}**= 6.22mm (i.e. T13, the distance between S₁₃ and S₁₄ in Table 1) and G2 is separated from window **802** by an air-gap d17 = 0.51mm (T17, the distance between S₁₃ and S₁₄ in Table 1). The BFL is 1.02mm.

In a collapsed state with a collapsed c-TTL, G1 may be separated from G2 by **c**-**d_{G1-G2}** = 0.02-2.5mm and G2 may be separated from image sensor **208** by c-BFL = 0.2-0.8mm. The c-TTL of lens system **800** may be c-TTL = 12.6-16mm, c-TTL/EFL may be equal to or greater than 0.97 and c-TTL/TTL may be equal to or greater than 0.64.

In other examples, when switching between a pop-out state and a collapsed state only air-gap **d_{G1-G2}** may be modified to **c-d_{G1-G2}**, which may be 0.2-2.5mm. BFL may remain unchanged.

In some examples, G1+G2 are movable together relative to image sensor **208** in a range R_{AF} for focusing of camera **200** from infinity down to 1m or even down to 4cm. R_{AF} may be up to 1mm for focusing down to 1m, and up to 7mm for focusing down to 4cm.

Lens system **800** is represented by Tables 1-2. Table 1 provides optical data for lens **206-1** in the pop-out state, and Table 2 provides aspheric data.

**Table 1**

| Group | Lens | Surface | Type | R [mm] | T [mm] | Nd | Vd | D [mm] |
|---|---|---|---|---|---|---|---|---|
| Object | | S₀ | Flat | Infinity | Infinity | | | |
| Stop | | S₁ | Flat | Infinity | -0.775 | | | 9.000 |
| G1 | L1 | S₂ | QFORB type 1 | 17.302 | 1.786 | 1.5661 | 37.43 | 8.577 |
| G1 | L1 | S₃ | QFORB type 1 | 62.771 | 0.725 | | | 8.652 |
| G1 | L2 | S₄ | QFORB type 1 | 10.090 | 1.928 | 1.5449 | 55.91 | 8.557 |
| G1 | L2 | S₅ | QFORB type 1 | -23.147 | 0.689 | | | 8.086 |
| G1 | L3 | S₆ | QFORB type 1 | 80.507 | 0.232 | 1.6991 | 19.44 | 8.073 |
| G1 | L3 | S₇ | QFORB type 1 | 10.360 | 1.287 | | | 5.509 |
| G1 | L4 | S₈ | QFORB type 1 | -4.430 | 0.928 | 1.5449 | 55.91 | 5.543 |
| G1 | L4 | S₉ | QFORB type 1 | -7.104 | 0.144 | | | 5.555 |
| G1 | L5 | S₁₀ | QFORB type 1 | 440.072 | 1.646 | 1.6991 | 19.44 | 6.397 |
| G1 | L5 | S₁₁ | QFORB type 1 | 28.935 | 0.033 | | | 6.494 |
| G1 | L6 | S₁₂ | QFORB type 1 | 39.391 | 2.010 | 1.5449 | 55.91 | 6.726 |
| G1 | L6 | S₁₃ | QFORB type 1 | -5.075 | 6.224 | | | 6.322 |
| G2 | L7 | S₁₄ | QFORB type 1 | -6.250 | 0.601 | 1.6991 | 19.44 | 6.435 |
| G2 | L7 | S₁₅ | QFORB type 1 | -4.314 | 0.033 | | | 6.292 |
| G2 | L8 | S₁₆ | QFORB type 1 | -4.226 | 0.553 | 1.5449 | 55.91 | 6.944 |
| G2 | L8 | S₁₇ | QFORB type 1 | 45.368 | 0.510 | | | 7.179 |
| Glass window | | S₁₈ | Flat | Infinity | 0.21 | 1.5168 | 64.17 | 7.235 |
| | | S₁₉ | Flat | Infinity | 0.3 | | | 7.000 |
| Image sensor | | S₂₀ | Flat | Infinity | 0 | | | 7.000 |

**Table 2**

| Surface | Conic (k) | NR | A₂ | A₂ | A₃ | A4 |
|---|---|---|---|---|---|---|
| S₂ | 0 | 4.500 | 1.937E-01 | 3.246E-02 | 1.318E-03 | 2.280E-04 |
| S₃ | 0 | 4.500 | 2.594E-01 | 8.795E-02 | 5.484E-03 | 3.649E-03 |
| S₄ | 0 | 4.000 | -1.694E-01 | 7.487E-04 | -3.651E-03 | 1.653E-03 |
| S₅ | 0 | 4.000 | -8.607E-02 | -4.556E-02 | 9.328E-03 | -1.115E-04 |
| S₆ | 0 | 4.000 | -8.318E-01 | 8.107E-02 | -3.312E-03 | 1.627E-04 |
| S₇ | 0 | 3.600 | -7.475E-01 | 6.703E-02 | -6.921E-03 | 5.168E-04 |
| S₈ | 0 | 3.540 | 1.184E+00 | -7.816E-02 | 6.294E-03 | -5.495E-03 |
| S₉ | 0 | 3.540 | 1.068E+00 | -3.634E-02 | 4.046E-03 | -3.309E-03 |
| S₁₀ | 0 | 3.540 | -7.538E-01 | -8.548E-02 | -3.579E-02 | -4.211E-03 |
| S₁₁ | 0 | 3.540 | -3.354E-01 | 5.277E-03 | -9.014E-03 | -8.400E-04 |
| S₁₂ | 0 | 3.540 | -6.434E-02 | -5.113E-04 | 3.479E-04 | -1.573E-03 |
| S₁₃ | 0 | 3.540 | 5.865E-03 | 1.176E-03 | 3.052E-03 | 5.638E-04 |
| S₁₄ | 0 | 3.540 | -3.496E-01 | -4.291E-02 | -1.806E-02 | -1.974E-03 |
| S₁₅ | 0 | 3.540 | -9.519E-03 | 2.425E-02 | -8.039E-03 | -5.814E-03 |
| S₁₆ | 0 | 3.540 | 2.311E-01 | 7.899E-02 | 9.116E-03 | -5.414E-03 |
| S₁₇ | 0 | 3.540 | -2.319E-01 | 8.502E-03 | -2.231E-04 | -1.988E-04 |

FIG. 8B shows another lens system **850.** Lens system **850** is shown in a pop-out state. The design data is given in Tables 3-5. Lens system **850** includes a lens **206-7** having six lens elements L1-L6, optical window **802** and image sensor **208.** L1-L3 form **G1,** and L4-L6 form **G2.** The TTL is 13.5 mm and the BFL is 5.49mm. Focal length is EFL=15.15 mm, F number =2.0 and the FOV = 32.56 deg. Air-gap **d_{G1-G2}** is 1.78mm.

In a collapsed state, a "collapsed" cTTL may be 5-11 mm. The difference between cTTL and TTL stems from a modified air-gap between L3 and L4, which is a collapsed air-gap c-**d_{G1-G2}** and which may be 0.05-1.0mm and a modified BFL which is a c-BFL and may be 0.1-1.5mm. For lens system **850,** a ratio TTL/EFL is 0.89, i.e. EFL > TTL. The ratio cTTL/EFL may be 0.35-0.75.

**Table 3**

| Embodiment **850** | | | | | | | | | |
|---|---|---|---|---|---|---|---|---|---|
| EFL = 15.15 mm, F number = 2.0, FOV = 32.56 deg. | | | | | | | | | |
| Surface # | Comment | Type | Curvature Radius | Thickness | Aperture Radius (D/2) | Material | Index | Abbe # | Focal Length |
| 1 | A.S | Plano | Infinity | -1.823 | 3.731 | | | | |
| 2 | Lens 1 | ASP | 4.314 | 1.837 | 3.731 | Plastic | 1.54 | 55.91 | 9.50 |
| 3 | | | 21.571 | 0.048 | 3.560 | | | | |
| 4 | Lens 2 | ASP | 4.978 | 0.265 | 3.419 | Plastic | 1.67 | 19.44 | -17.41 |
| 5 | | | 3.422 | 0.113 | 3.139 | | | | |
| 6 | Lens 3 | ASP | 5.764 | 1.473 | 3.113 | Plastic | 1.67 | 19.44 | 20.20 |
| 7 | | | 11.201 | 1.780 | 2.909 | | | | |
| 8 | Lens 4 | ASP | -6.075 | 0.260 | 2.143 | Plastic | 1.67 | 19.44 | -14.33 |
| 9 | | | -17.446 | 1.230 | 2.008 | | | | |
| 10 | Lens 5 | ASP | -18.298 | 0.688 | 2.264 | Plastic | 1.54 | 55.91 | 184.98 |
| 11 | | | -16.202 | 0.040 | 2.468 | | | | |
| 12 | Lens 6 | ASP | 10.235 | 0.273 | 2.679 | Plastic | 1.54 | 55.91 | -93.97 |
| 13 | | | 8.454 | 4.783 | 2.848 | | | | |
| 14 | Filter | Plano | Infinity | 0.210 | - | Glass | 1.52 | 64.17 | |
| 15 | | | Infinity | 0.500 | - | | | | |
| 16 | Image | Plano | Infinity | - | - | | | | |

**Table 4**

| Aspheric Coefficients | | | | | |
|---|---|---|---|---|---|
| Surface # | Conic | A4 | A6 | A8 | A10 |
| 2 | 0 | -4.57E-04 | -5.55E-05 | 2.46E-05 | -4.65E-06 |
| 3 | 0 | 8.55E-04 | 7.37E-04 | -1.07E-04 | 9.78E-06 |
| 4 | 0 | -1.51E-02 | 3.43E-03 | -6.33E-04 | 8.54E-05 |
| 5 | 0 | -2.21E-02 | 5.71E-03 | -1.50E-03 | 2.85E-04 |
| 6 | 0 | -3.61E-03 | 3.56E-03 | -1.08E-03 | 2.29E-04 |
| 7 | 0 | -1.74E-04 | 2.47E-04 | 5.66E-05 | -3.21E-05 |
| 8 | 0 | 1.75E-02 | 2.27E-03 | -2.24E-03 | 7.99E-04 |
| 9 | 0 | 1.79E-02 | 5.45E-03 | -3.71E-03 | 1.37E-03 |
| 10 | 0 | -4.37E-03 | -1.59E-02 | 1.33E-02 | -6.54E-03 |
| 11 | 0 | -7.77E-02 | 4.02E-02 | -1.21E-02 | 1.65E-03 |
| 12 | 0 | -1.39E-01 | 7.50E-02 | -2.44E-02 | 4.78E-03 |
| 13 | 0 | -5.32E-02 | 1.90E-02 | -4.73E-03 | 6.11E-04 |

**Table 5**

| Aspheric Coefficients | | | |
|---|---|---|---|
| Surface # | A12 | A14 | A16 |
| 2 | 4.92E-07 | -2.88E-08 | 5.71E-10 |
| 3 | -6.44E-07 | 1.90E-08 | -1.21E-10 |
| 4 | -6.96E-06 | 3.18E-07 | -6.61E-09 |
| 5 | -3.28E-05 | 2.13E-06 | -6.25E-08 |
| 6 | -2.83E-05 | 1.87E-06 | -5.35E-08 |
| 7 | 5.30E-06 | -4.54E-07 | 1.54E-08 |
| 8 | -1.70E-04 | 1.94E-05 | -9.28E-07 |
| 9 | -2.64E-04 | 2.29E-05 | -1.78E-07 |
| 10 | 1.83E-03 | -2.76E-04 | 1.73E-05 |
| 11 | -8.43E-06 | -2.54E-05 | 2.18E-06 |
| 12 | -5.86E-04 | 4.30E-05 | -1.42E-06 |
| 13 | -2.86E-05 | -1.51E-06 | 1.53E-07 |

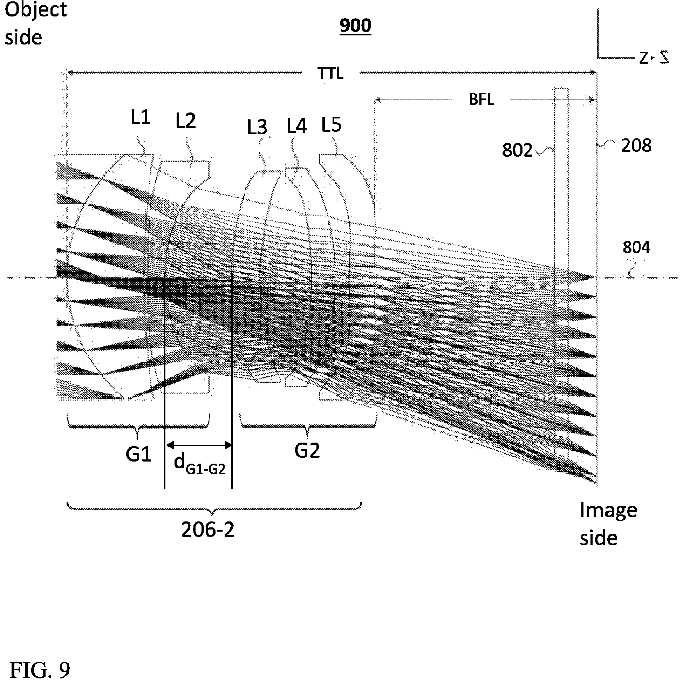

FIG. 9 shows a lens system **900** in a pop-out state. Lens system **900** comprises a second embodiment of a lens numbered **206-2.** Lens **206-2** includes five lens elements marked L1-L5 arranged in G1 (L1 and L2) and G2 (L3, L4 and L5). Lens **206-2** is shown in a first zoom state having ZF1 with EFL_{T} = 7.97mm, F# = 1.2 - 2.0 and TTL = 7.78mm. Lens **206-2** may be switched to further zoom states continuously or discretely (having particular ZF2 or ZF3) by modifying **d_{G1-G2}** and/or BFL.

In the pop-out state, G1 is separated from G2 by an air-gap **d_{G1-G2}** = 0.974mm (T4 in Table 3) and G2 is separated from window **802** by an air-gap d10 = 2.66mm (T10). The BFL is 3.27mm.

In a collapsed state with a collapsed c-TTL, G1 may be separated from G2 by **c**-**d_{G1-G2}** = 0.02-0.75mm and G2 may be separated from image sensor **208** by c-BFL = 0.2-2.5mm.

In other examples, when switching between a pop-out state and a collapsed state only BFL may be modified to c-BFL = 0.2-2.5mm and air-gap **d_{G1-G2}** may not change. The c-TTL of lens system **900** may be 3.6-7.7mm. Ratio c-TTL/EFL may be equal to or greater than 0.45, and ratio c-TTL/TTL may be equal to or greater than 0.46.
G1+G2 are movable together relative to image sensor **208** and in a range R_{AF}.

Lens system **900** is represented by Tables 6-7.

**Table 6**

| **#** | **Type** | | **Comments** | | **R** | **T** | **Nd** | **Vd** | **CA/2** | **k** |
|---|---|---|---|---|---|---|---|---|---|---|
| 1 | | Evn-asph | L₁ | S₁ | 2.271 | 1.127 | 1.67 | 54.96 | 1.8 | 7.979E-07 |
| 2 | | Evn-asph | | S₂ | 11.822 | 0.06 | | | 1.725 | 2.410 |
| 3 | | Evn-asph | L₂ | S₃ | 14.756 | 0.27 | 1.64 | 23.52 | 1.7 | 13.805 |
| 4 | | Evn-asph | | S₄ | 2.728 | 0.974 | | | 1.45 | 2.902E-03 |
| 5 | | Evn-asph | L₃ | S₅ | 3.713 | 0.416 | 1.64 | 23.52 | 1.55 | -2.868 |
| 6 | | Evn-asph | | S₆ | 3.524 | 0.764 | | | 1.5 | -8.486 |
| 7 | | Evn-asph | L₄ | S₇ | -5.301 | 0.338 | 1.64 | 23.52 | 1.48 | 2.743 |
| 8 | | Evn-asph | | S₈ | -4.321 | 0.212 | | | 1.6 | 2.578 |
| 9 | | Evn-asph | L₅ | S₉ | 4.327 | 0.352 | 1.53 | 55.66 | 1.68 | -9.755 |
| 10 | | Evn-asph | | S₁₀ | 3.771 | 2.656 | | | 1.8 | -6.534 |
| 11 | | Flat | | | Infinity | 0.210 | 1.52 | 64.16 | 2.894 | |
| 12 | | Flat | | | Infinity | 0.401 | | | 2.938 | |
| 13 | | Flat | | | Infinity | - | | | 3.028 | |

**Table 7**

| **#** | **A1** | **A2** | **A3** | **A4** | **A5** | **A6** | **A7** |
|---|---|---|---|---|---|---|---|
| 1 | 4.421E-05 | -2.009E-04 | -1.152E-04 | -6.051E-10 | | | |
| 2 | 6.027E-03 | -1.244E-03 | -5.380E-08 | | | | |
| 3 | 0.020 | 7.012E-04 | -1.081E-03 | -6.297E-08 | | | |
| 4 | 0.024 | 0.011 | 4.241E-04 | -9.114E-08 | | | |
| 5 | -0.022 | 8.939E-03 | 2.200E-03 | -1.002E-06 | | | |
| 6 | -0.012 | 6.756E-03 | -2.299E-03 | 1.314E-03 | 1.758E-04 | -1.030E-05 | |
| 7 | -0.017 | 0.053 | -0.044 | 7.968E-03 | -1.599E-03 | 6.117E-04 | 7.436E-09 |
| 8 | -0.086 | 0.159 | -0.117 | 0.041 | -9.090E-03 | 1.280E-03 | 2.793E-07 |
| 9 | -0.252 | 0.182 | -0.084 | 0.016 | -6.759E-04 | -1.940E-06 | |
| 10 | -0.175 | 0.095 | -0.040 | 8.597E-03 | -7.751E-04 | -8.160E-07 | |

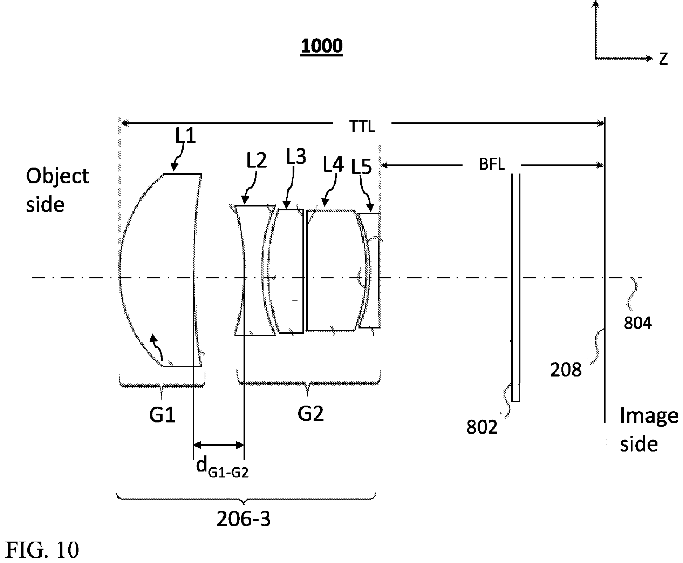

FIG. 10 shows a lens system **1000** in a pop-out state. Lens system **1000** comprises a third embodiment of a lens numbered **206-3.** Lens **206-3** includes five lens elements L1-L5 arranged in G1 (L1) and G2 (L2-L5) and is shown in a first zoom state having ZF1 with EFL_{T} = 16mm and TTL = 15mm. Lens **206-3** may be switched to further zoom states continuously or discretely (having particular ZF2 or ZF3) by modifying **d_{G1-G2}** and/or BFL.

In the pop-out state, G1 is separated from G2 by an air-gap **d_{G1-G2}=** 1.547mm (T2 in Table 5) and G2 is separated from window **802** by an air-gap d10 = 4.115mm (T10). The BFL is 6.998mm.

In a collapsed state with a collapsed c-TTL, G1 may be separated from G2 by **c**-**d_{G1-G2}** = 0.02-0.75mm and G2 may be separated from image sensor **208** by c-BFL = 0.2-5mm. In other examples, when switching between a pop-out state and a collapsed state only BFL may be modified to c-BFL = 0.2-2.5mm and air-gap **d_{G1-G2}** may not change. The c-TTL of lens system **1000** may be 6.2-13mm. Ratio c-TTL/EFL may be equal to or greater than 0.39 and ratio c-TTL/TTL may be equal to or greater than 0.41.

G1+G2 are movable together relative to image sensor **208** and in a range R_{AF}. R_{AF} may be up to 0.6mm for focusing down to 1m, and up to 8mm for focusing down to 0.04m.

Lens system **1000** is represented by Tables 8-9. Table 5 provides optical data for lens **206-3** being in a pop-out state Table 6 provides aspheric data.

**Table 8**

| **#** | **R** | **Thickness** | **Material** | **CA/2** | **Conic coefficient K** |
|---|---|---|---|---|---|
| 0 | Infinity | 1.00E+06 | | | |
| 1 | 4.009 | 2.271 | H-ZK3 | 2.96 | 0 |
| 2 | 18.115 | 1.547 | | 2.55 | 0 |
| 3 | -5.167 | 0.562 | EP6000L | 2.00 | -2.296 |
| 4 | 6.968 | 0.162 | | 2.00 | 9.483 |
| 5 | 4.666 | 1.082 | K26R | 1.90 | -2.619 |
| 6 | 52.645 | 0.121 | | 1.90 | 10.398 |
| 7 | 28.168 | 1.851 | EP6000L | 1.83 | -367.355 |
| 8 | -5.062 | 0.101 | | 1.83 | -10.130 |
| 9 | -5.098 | 0.291 | K26R | 1.76 | -10.587 |
| 10 | 15.000 | 4.115 | | 1.76 | -9.745 |
| 11 | Infinity | 0.210 | BK7 | 2.44 | |
| 12 | Infinity | 2.673 | | 2.47 | |
| 13 | Infinity | | | 2.94 | |

**Table 9**

| **#** | **A1** | **A2** | **A3** | **A4** | **A5** | **A6** | **A7** |
|---|---|---|---|---|---|---|---|
| 1 | 0 | 0 | 0 | 0 | 0 | 0 | 0 |
| 2 | 0 | 0 | 0 | 0 | 0 | 0 | 0 |
| 3 | 7.1296E-03 | -1.3791E-04 | -2.8926E-05 | 3.7349E-06 | 0 | 0 | 0 |
| 4 | -2.8741E-03 | 8.8769E-04 | -1.2786E-04 | 2.0275E-05 | 0 | 0 | 0 |
| 5 | -2.1504E-03 | -3.1621E-04 | -3.2758E-06 | -2.2831E-07 | 0 | 0 | 0 |
| 6 | 4.1139E-03 | -1.9087E-03 | 1.9639E-04 | -3.2249E-05 | 0 | 0 | 0 |
| 7 | -4.3880E-03 | -7.7699E-04 | 1.8992E-04 | -6.8854E-06 | 0 | 0 | 0 |
| 8 | -6.5726E-03 | -5.8651E-04 | 1.3315E-04 | -2.0025E-05 | 0 | 0 | 0 |
| 9 | -7.8205E-03 | -1.1425E-03 | 2.7014E-04 | -4.0371E-05 | 0 | 0 | 0 |
| 10 | -5.0642E-03 | 3.6557E-04 | -9.7321E-05 | 1.7319E-05 | 0 | 0 | 0 |

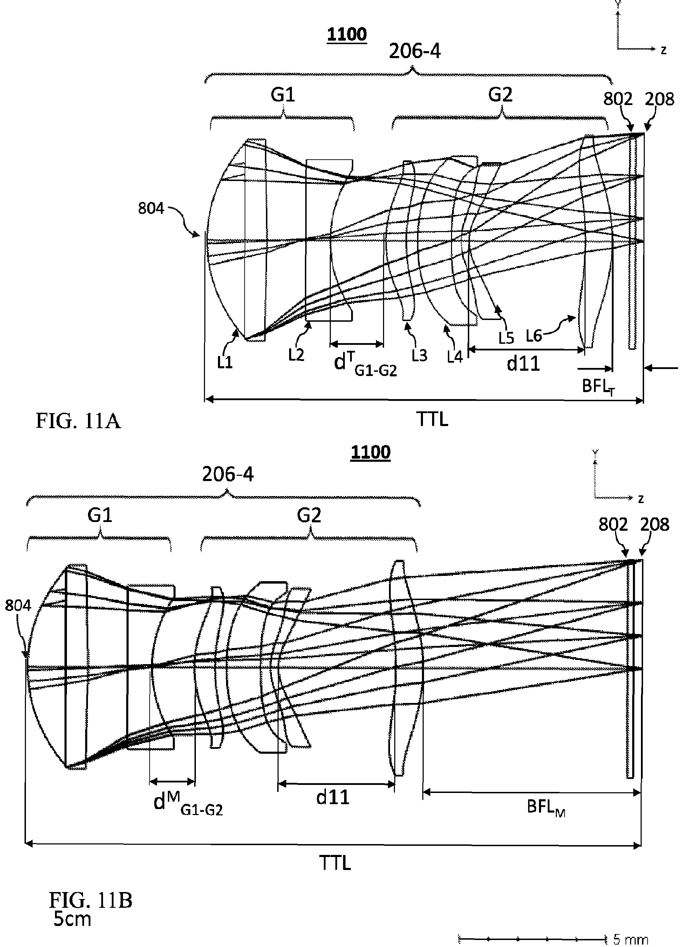

FIG. 11A-B show a lens system **1100** in two pop-out states. Lens system **1100** comprises a fourth embodiment of a lens numbered **206-4.** Lens **206-4** includes six lens elements L1-L6 arranged in G1 (L1 - L2) and G2 (L3 - L6) separated by air-gap **d_{G1-G2}.** Lens system **1100** may be able to focus continuously from infinity to e.g. 5cm. FIG. 11A shows lens system **1100** in a Tele lens state focused at infinity. FIG. 11B shows lens system **1100** in a Macro lens state focused at 5cm. For focusing lens **206-4, d_{G1-G2}** and BFL are modified, i.e. two air-gaps present in **1100** are modified. The TTL changes continuously and in dependence on u from TTL=15mm (focus at infinity) to TTL = 20.9mm (focus at 5cm).

In the Tele state (see FIG. 11A) having ZF1 and being focused at infinity, **206-4** has F/# = 1.3 - 1.9, EFL_{T} = 14.98mm and TTL = 15mm. In the Tele state, G1 is separated from G2 by an air-gap **d^{T}_{G1-G2}** = 1.909mm (i.e. T5, the distance between S₅ and S₆ in Table 8) and G2 is separated from image sensor by BFL_{T}= 0.586mm (i.e. T13 in Table 8). For the Tele state, a ratio of c-TTL/EFL may be c-TTL/EFL≥0.57, a ratio of c-TTL/TTL may be c-TTL/EFL≥0.57. **206-4** may be switched to further zoom states continuously or discretely (having particular ZF2 or ZF3) by modifying **d_{G1-G2}** and/or BFL.

In the Macro configuration (see FIG. 11B) with focus at 5cm, **206-4** has F/# = 1.7 - 2.8, EFL_{M} = 14.8mm and TTL = 20.9mm. In the Macro state, G1 is separated from G2 by an air-gap **d^{M}_{G1-G2}** = 1.441mm and G2 is separated from image sensor by BFL_{M} = 6.955mm. According to thin lens equation (Eq. 2) $\frac{1}{EFL} = \frac{1}{u} + \frac{1}{v}$ for EFL≈15mm and u=50 mm the effective lens-image distance v is v≈ 21mm and a M of about 2.4:1 is achieved.

In a collapsed state with a collapsed c-TTL, G1 may be separated from G2 by e.g. **c-d_{G1-G2}** = 0.02-1.4mm and G2 may be separated from image sensor **208** by c-BFL = 0.2-0.8mm. A c-TTL of lens system **1100** may be c-TTL = 8.5-14mm. For the Macro state, ratio c-TTL/EFL may be equal to or greater than 0.57 and ratio c-TTL/TTL may be equal to or greater than 0.41.

In some examples, another (large) air gap such as air gap d11 between L5 and L6 may be collapsed when switching to a collapsed state. For an example with a collapsible air gap d11, c-TTL of lens system **1100** may be 8.5-11mm.

In other examples, when switching between a pop-out state and a collapsed state only **d_{G1-G2} =** 0.02-1.4mm may be modified to **c-d_{G1-G2} =** 0.02-1.4mm and BFL may not change. In yet other examples, when switching between a pop-out state and a collapsed state only BFL may be modified to c-BFL = 0.2-0.8mm and air-gap **d_{G1-G2}** may not change.

Lens system **1100** is represented by Tables 10-13. Table 10 and Table 11 provide optical data for lens **206-4** being in pop-out state and (focused at infinity (left) and at 5cm (right)). Table 12 provides aspheric data and Table 13 provides data on the focus lengths of L1-L6 as well as on G1 and G2.

**Table 10**

| Group | Lens | Surface | Type | R [mm] | T [mm] | Nd | Vd | D [mm] |
|---|---|---|---|---|---|---|---|---|
| Object | | S₀ | Flat | Infinity | See Table 11 | | | |
| Stop | | S₁ | Flat | Infinity | -1.297 | | | 3.39 |
| G1 | L1 | S₂ | Even Asphere | 4.760 | 2.049 | 1.5348 | 3.40 | 8.577 |
| G1 | L1 | S₃ | Even Asphere | -40.471 | 1.341 | | 3.25 | 8.652 |
| G1 | L2 | S₄ | Even Asphere | -208.624 | 0.838 | 1.6397 | 2.72 | 8.557 |
| G1 | L2 | S₅ | Even Asphere | 3.942 | See table 11 | | 2.35 | 8.086 |
| G2 | L3 | S₆ | Even Asphere | 3.675 | 0.703 | 1.5348 | 2.60 | 8.073 |
| G2 | L3 | S₇ | Even Asphere | 5.768 | 0.391 | | 2.68 | 5.509 |
| G2 | L4 | S₈ | Even Asphere | 6.436 | 1.160 | 1.6397 | 2.84 | 5.543 |
| G2 | L4 | S₉ | Even Asphere | 13.466 | 0.330 | | 2.51 | 5.555 |
| G2 | L5 | S₁₀ | Even Asphere | 1.745 | 0.270 | 1.5348 | 2.63 | 6.397 |
| G2 | L5 | S₁₁ | Even Asphere | 1.377 | 4.000 | | 2.61 | 6.494 |
| G2 | L6 | S₁₂ | Even Asphere | -8.989 | 0.924 | 1.5348 | 3.57 | 6.726 |
| G2 | L6 | S₁₃ | Even Asphere | -6.006 | See table 11 | | 3.59 | 6.322 |
| Glass window | | S₁₈ | Flat | Infinity | 0.210 | 1.5168 | 64.17 | 3.68 |
| | | S₁₉ | Flat | Infinity | 0.290 | | | 3.69 |
| Image sensor | | S₂₀ | Flat | Infinity | 0 | | | 3.71 |

**Table 11**

| Object position | | at infinity | at 50mm |
|---|---|---|---|
| T [mm] | S₀ | Infinity | 50 |
| | S₅ | 1.909 | 1.441 |
| | S₁₃ | 0.586 | 6.955 |

**Table 12**

| Surface | Conic (k) | A₂ | A₃ | A4 | A4 | A8 |
|---|---|---|---|---|---|---|
| S₂ | -0.630 | 0 | 4.4054E-04 | 1.2583E-05 | -2.9783E-07 | 6.0963E-09 |
| S₃ | -17.322 | 0 | 1.1175E-03 | -7.2647E-05 | 3.0989E-06 | -5.5328E-08 |
| S₄ | 10.896 | 0 | 2.8072E-04 | -1.8071E-05 | 1.0399E-05 | -5.1263E-07 |
| S₅ | -3.542 | 0 | 4.3261E-03 | -2.3939E-04 | 4.7495E-05 | -1.4155E-06 |
| S₆ | 0.550 | 0 | -4.6101E-03 | -6.4645E-04 | -5.5036E-05 | -9.0004E-06 |
| S₇ | 2.038 | 0 | -1.9132E-03 | -9.1925E-04 | -1.1892E-04 | 7.4560E-06 |
| S₈ | -0.407 | 0 | 7.3254E-03 | -9.5079E-04 | 1.4267E-04 | -4.1002E-06 |
| S₉ | 10.906 | 0 | 9.1614E-03 | -7.9578E-04 | 1.5907E-04 | 1.1780E-05 |
| S₁₀ | -1.309 | 0 | -5.7321E-02 | 7.4146E-03 | -5.5742E-04 | 3.4068E-05 |
| S₁₁ | -1.653 | 0 | -4.4174E-02 | 7.6947E-03 | -6.6729E-04 | 2.6326E-05 |
| S₁₂ | -8.851 | 0 | 1.5094E-03 | 1.3664E-04 | 2.1531E-06 | -1.9460E-07 |
| S₁₃ | 1.231 | 0 | 2.2125E-03 | 7.1788E-05 | 7.8923E-06 | 1.8970E-07 |

**Table 13**

| Lens # | Lens or group focal length [mm] |
|---|---|
| L1 | 8.057 |
| L2 | -5.978 |
| L3 | 16.869 |
| L4 | 17.921 |
| L5 | -16.324 |
| L6 | 30.404 |
| G1 | 49.457 |
| G2 | 12.122 |

FIG. 12A-B show a lens system **1200** in two pop-out states. Lens system **1200** comprises a fifth embodiment of a lens **206-5.** Lens **206-5** comprises six lens elements L1-L6 in three lens groups G1 (L1-L3), G2 (L4-L5) and G3 (L6). G1 and G2 are separated by an air-gap **d_{G1-G2}** and G2 and G3 are separated by an air-gap **d_{G2-G3}.** Lens system **1200** may be able to focus continuously from infinity to e.g. 5cm. FIG. 12A shows lens system **1200** in a Tele lens state focused at infinity. FIG. 12B shows lens system **1200** in a Macro lens state focused at 5cm. For focusing lens **206-5, d_{G1-G2}** and **d_{G2-G3}** are increased or decreased. The TTL changes continuously from TTL=15mm (focus at infinity) to TTL= 20.9mm (focus at 5cm).

In the Tele state (see FIG. 12A) having ZF1 and being focused at infinity, **206-5** has F/# = 1.2 - 1.8, EFL_{T} = 15mm and TTL= 18.7mm. In the Tele state, **d^{T}_{G1-G2}=** 5.073mm (i.e. T7, the distance between S₇ and S₈ in Table 11) and G2 is separated from G3 by **d^{T}_{G2-G3}** = 4.813mm (i.e. T11). For the Tele state, ratio c-TTL/EFL may be equal to or greater than 0.59, and ratio c-TTL/TTL may equal to or greater than 0.48. **206-5** may be switched to further zoom states continuously or discretely (having particular ZF2 or ZF3) by modifying **d_{G1-G2}, d_{G2-G3}** and/or BFL.

In the Macro configuration (see FIG. 12B) with focus at 5cm, **206-5** has F/# = 1.3 - 1.9, EFL_{M} = 9.8mm and TTL = 20.9mm. In the Macro state, **d^{M}_{G1-G2}** = 2.908mm and **d^{M}_{G2-G3}** = 9.175mm. The BFL of **206-5** is = 0.95mm and is not modified for focusing. According to eq. 2 for EFL≈10mm and u=50 mm, the lens-image distance ("v") is v≈ 12.5mm and a M of about 4:1 is achieved.

In a collapsed state with a collapsed c-TTL, G1 may be separated from G2 by **c**-**d_{G1-G2}** = 0.02-2.5mm and G2 may be separated from G3 by **c-d_{G2-G3} =** 0.02-4.5mm. When switching between a pop-out state and a collapsed state two air-gaps may be modified. A c-TTL of lens system **1200** may be 8.8-15mm. For the Macro state, ratio c-TTL/EFL may be equal to or greater than 0.89 and ratio c-TTL/TTL may be equal to or greater than 0.43.

In some examples, another (large) air gap such as air gap d9 between L4 and L5 may be collapsed when switching to a collapsed state. For an example with a collapsible air gap d9, c-TTL of lens system **1200** may be 7.6-15mm, corresponding to a ratio c-TTL/EFL ≥ 0.76.

In other examples, when switching between a pop-out state and a collapsed state only **d_{G1-G2}** may be modified to **c**-**d_{G1-G2}** = 0.02-1.4mm and **d_{G2-G3}** may not change. In yet other examples, when switching between a pop-out state and a collapsed state only **d_{G2-G3}** may be modified to **c-d_{G2-G3}** = 0.02-4.5mm **d_{G1-G2}** may not change.

Lens system **1200** is represented by Tables 14-17. Table 14 and Table 15 provide optical data for lens **206-5** being in pop-out state (focus at infinity and at 5cm), Table 16 provides aspheric data, and Table 17 provides data on the focus lengths of each lens element and on G1, G2 and G3.

**Table 14**

| Group | Lens | Surface | Type | R [mm] | T [mm] | Nd | Vd | D [mm] |
|---|---|---|---|---|---|---|---|---|
| Object | | S₀ | Flat | Infinity | See Table 15 | | | |
| Stop | | S₁ | Flat | Infinity | -1.015 | | | 3.46 |
| G1 | L1 | S₂ | Even Asphere | 6.387 | 2.000 | 1.5449 | 55.913 | 8.577 |
| G1 | L1 | S₃ | Even Asphere | -6.110 | 0.093 | | | 8.652 |
| G1 | L2 | S₄ | Even Asphere | -5.663 | 0.260 | 1.5661 | 37.426 | 8.557 |
| G1 | L2 | S₅ | Even Asphere | 12.316 | 0.236 | | | 8.086 |
| G1 | L3 | S₆ | Even Asphere | 13.536 | 1.000 | 1.6397 | 23.529 | 8.073 |
| G1 | L3 | S₇ | Even Asphere | 16.733 | See table 15 | | | 5.509 |
| G2 | L4 | S₈ | Even Asphere | 16.483 | 1.093 | 1.651 | 21.514 | 5.543 |
| G2 | L4 | S₉ | Even Asphere | 9.528 | 1.279 | | | 5.555 |
| G2 | L5 | S₁₀ | Even Asphere | 26.649 | 1.500 | 1.5449 | 55.913 | 6.397 |
| G2 | L5 | S₁₁ | Even Asphere | -7.769 | See table 15 | | | 6.494 |
| G3 | L6 | S₁₂ | Even Asphere | -5.892 | 0.402 | 1.5449 | 55.913 | 6.726 |
| G3 | L6 | S₁₃ | Even Asphere | 66.620 | 0.450 | | | 6.322 |
| Glass window | | S₁₈ | Flat | Infinity | 0.210 | 1.5168 | 64.17 | 3.62 |
| | | S₁₉ | Flat | Infinity | 0.290 | | | 3.65 |
| Image sensor | | S₂₀ | Flat | Infinity | 0 | | | 3.70 |

**Table 15**

| Object position | | at infinity | at 50mm |
|---|---|---|---|
| T [mm] | S₀ | Infinity | 50 |
| | S₇ | 5.073 | 2.908 |
| | S₁₁ | 4.813 | 9.175 |

**Table 16**

| Surface | Conic (k) | A₂ | A₃ | A4 | A4 | A8 |
|---|---|---|---|---|---|---|
| S₂ | 0.677 | 0 | -3.662E-04 | 1.359E-05 | 0.000E+00 | -3.662E-04 |
| S₃ | -4.775 | 0 | 4.898E-03 | -1.397E-04 | 1.591E-06 | 4.898E-03 |
| S₄ | -6.366 | 0 | 4.765E-03 | -1.692E-04 | 3.254E-06 | 4.765E-03 |
| S₅ | 5.346 | 0 | -3.075E-03 | 9.482E-05 | 9.656E-07 | -3.075E-03 |
| S₆ | -8.028 | 0 | -2.837E-03 | 1.380E-04 | -1.763E-06 | -2.837E-03 |
| S₇ | 16.045 | 0 | 1.797E-04 | -1.949E-05 | 1.044E-06 | 1.797E-04 |
| S₈ | -6.134 | 0 | -3.752E-03 | -7.964E-06 | -3.621E-07 | -3.752E-03 |
| S₉ | -1.248 | 0 | -3.976E-03 | 2.575E-05 | -3.337E-07 | -3.976E-03 |
| S₁₀ | 26.732 | 0 | -5.210E-04 | -6.374E-06 | 5.625E-07 | -5.210E-04 |
| S₁₁ | -1.100 | 0 | -1.300E-04 | 1.134E-05 | 9.762E-07 | -1.300E-04 |
| S₁₂ | -0.839 | 0 | 1.998E-03 | -1.041E-04 | 2.466E-06 | 1.998E-03 |
| S₁₃ | 26.744 | 0 | 5.185E-04 | 3.489E-06 | -3.179E-06 | 5.185E-04 |

**Table 17**

| Lens # | Lens or group focal length [mm] |
|---|---|
| L1 | 6.054 |
| L2 | -6.785 |
| L3 | 97.901 |
| L4 | -36.686 |
| L5 | 11.176 |
| L6 | -9.882 |
| G1 | 21.183 |
| G2 | 15.420 |
| G3 | -9.882 |

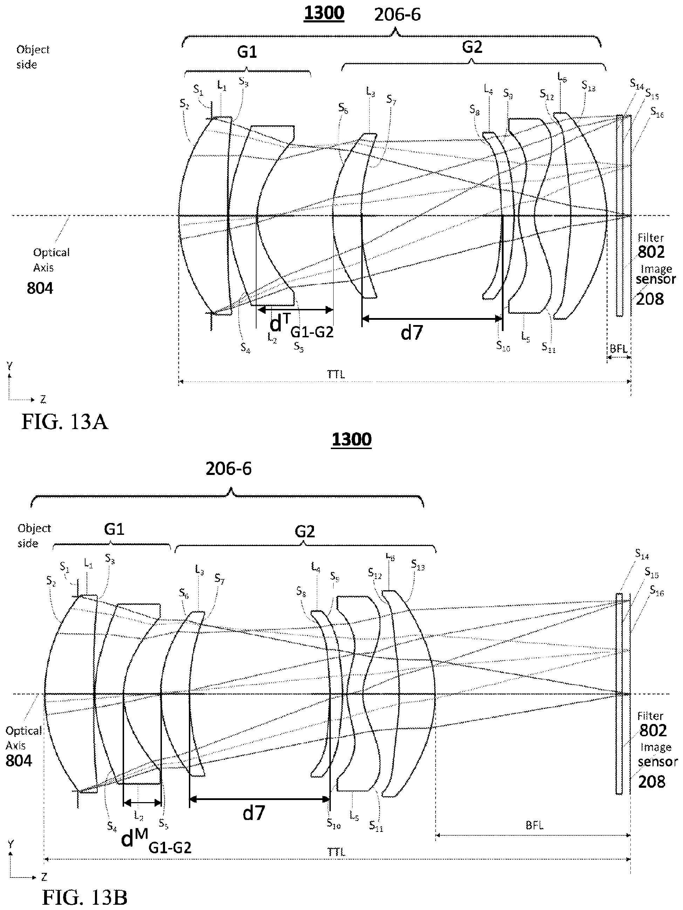

FIG. 13A-B show a lens system **1300** in two pop-out states. Lens system **1300** comprises a sixth embodiment of a lens **206-6.** FIG. 13A shows lens system **1300** in a Tele lens state focused at infinity ("Config. A"). FIG. 13B shows lens system **1300** in a Macro lens state focused at 5cm ("Config. C"). Lens **206-6** comprises two lens groups G1 (L1-L2) and G2 (L3-L6), separated by an air-gap **d_{G1-G2}.** Lens system **1300** may be able to focus continuously from infinity to e.g. 5cm. For focusing lens **206-6, d_{G1-G2}** and the BFL are changed. The TTL changes continuously and depending on u from TTL=15.8mm (focus at infinity) to TTL = 20.4mm (focus at 5cm). I.e. for focusing, there is a relative movement of G1 and G2 and in addition a movement of G1 and G2 together (see Table 20).

In the Tele state (see FIG. 13A) having ZF1 and being focused at infinity, lens **206-6** has F/# = 1.3 - 1.9, EFL_{T} = 15mm and TTL = 15.8mm. In the Tele state, **d^{T}_{G1-G2}** = 2.625mm (i.e. T5, the distance between S₅ and S₆ in Table 20) and BFL= 0.844mm. **206-6** may be switched to further zoom states continuously or discretely (having particular ZF2 or ZF3) by modifying **d_{G1-G2}** and/or BFL.

In the Macro configuration (see FIG. 13B) with focus at 5cm, **206-6** has F/# = 1.5 - 2.6, EFL_{M} = 15mm and TTL = 20.4mm. In the Macro state, **d^{M}_{G1-G2}** = 1.303mm and BFL = 6.818mm. AM of about 2.5:1 is achieved.

In a collapsed state with a collapsed c-TTL, G1 may be separated from G2 by e.g. c-**d_{G1-G2} =** 0.02-1.5mm and L3 may be separated from L4 by **c-d₇=** 0.02-2.5mm. A c-TTL of lens system **1200** may be 9.5-13.5mm.

In other examples, when switching between a pop-out state and a collapsed state only **d₇** may be modified to **c-d₇** = 0.02-2.5mm and **d_{G1-G2}** may not change. In yet other examples, when switching between a pop-out state and a collapsed state only **d_{G1-G2}** may be modified to **c**-**d_{G1-G2}** = 0.02-1.5mm **d₇** may not change.

The lens system **1300** is represented by Tables 18-21. FOV is given as half FOV (HFOV). Table 18 and Table 19 provide optical data for lens **206-5** being in pop-out state. Table 20 provides aspheric data.

Table 20 shows three focus configurations of lens system **1300:** focused to infinity ("Config. A"), focused to 100mm ("Config. B", no Figure shown) and focused to 50mm ("Config. C"). The u which is focused on is given by Surface 0 in Table 20. Table 21 provides data on the half FOV (HFOV), M and f/#. Lens system **1300** can focus continuously from Infinity to 50mm. For changing focus of lens system **1300** continuously, the values of **d_{G1-G2}** and BFL change continuously.

**Table 18**

| Embodiment **1300** | | | | | | | | | |
|---|---|---|---|---|---|---|---|---|---|
| EFL = 15.0 mm, F number = 2.2, HFOV = 13.1 deg. | | | | | | | | | |
| Surface # | Comment | Type | Curvature Radius | Thickness | Aperture Radius (D/2) | Material | Index | Abbe # | Focal Length |
| 1 | A.S | Plano | Infinity | -1.138 | 3.394 | | | | |
| 2 | Lens 1 | ASP | 5.548 | 1.713 | 3.399 | Plastic | 1.53 | 55.66 | 10.11 |
| 3 | | | -225.776 | 0.031 | 3.268 | | | | |
| 4 | Lens 2 | ASP | 4.454 | 1.000 | 3.084 | Plastic | 1.64 | 23.52 | -9.96 |
| 5 | | | 2.401 | 2.625 | 2.627 | | | | |
| 6 | Lens 3 | ASP | 4.197 | 1.000 | 2.722 | Plastic | 1.53 | 55.66 | 15.25 |
| 7 | | | 7.888 | 4.910 | 2.661 | | | | |
| 8 | Lens 4 | ASP | -6.881 | 0.435 | 2.717 | Plastic | 1.66 | 20.37 | 1841.21 |
| 9 | | | -7.016 | 0.162 | 2.848 | | | | |
| 10 | Lens 5 | ASP | 2.335 | 0.551 | 2.906 | Plastic | 1.53 | 55.66 | -24.20 |
| 11 | | | 1.816 | 1.274 | 3.339 | | | | |
| 12 | Lens 6 | ASP | -7.488 | 1.251 | 3.393 | Plastic | 1.53 | 55.66 | 20.05 |
| 13 | | | -4.675 | 0.344 | 3.546 | | | | |
| 14 | Filter | Plano | Infinity | 0.210 | - | Glass | 1.52 | 64.17 | |
| 15 | | | Infinity | 0.290 | - | | | | |
| 16 | Image | Plano | Infinity | - | - | | | | |

**Table 19**

| Aspheric Coefficients | | | | | |
|---|---|---|---|---|---|
| Surface # | Conic | A4 | A6 | A8 | A10 |
| 2 | -4.21E-01 | 6.50E-04 | -1.01E-05 | 1.56E-06 | -5.69E-08 |
| 3 | -2.24E+02 | 2.36E-03 | -1.58E-04 | 5.38E-06 | -7.57E-08 |
| 4 | -4.52E+00 | -5.19E-04 | 5.31E-05 | -6.85E-06 | 3.53E-07 |
| 5 | -2.24E+00 | 2.21E-03 | 1.61E-05 | -1.54E-06 | 7.95E-07 |
| 6 | -8.98E-03 | -7.71E-05 | -5.52E-05 | 5.85E-06 | -8.17E-07 |
| 7 | 6.54E-01 | 6.97E-04 | -2.34E-05 | -6.13E-07 | -5.58E-07 |
| 8 | -6.59E+01 | 4.55E-03 | -1.90E-03 | 2.62E-05 | 3.32E-06 |
| 9 | -4.32E-01 | 1.47E-02 | -3.66E-03 | 2.57E-04 | -5.76E-06 |
| 10 | -4.54E+00 | -2.21E-02 | -1.28E-03 | 3.91E-04 | -2.22E-05 |
| 11 | -1.73E+00 | -3.64E-02 | 4.33E-03 | -2.94E-04 | 6.72E-06 |
| 12 | -2.40E+01 | 1.32E-03 | 3.07E-04 | -3.67E-05 | -4.21E-07 |
| 13 | -1.13E+00 | 6.63E-04 | -3.99E-04 | 6.48E-05 | -3.13E-06 |

**Table 20**

| Embodiment **1300** | | | |
|---|---|---|---|
| Variation of surface thicknesses | | | |
| Surface # | Config. A | Config. B | Config. C |
| 0 | 1.00E+06 | 100 | 50 |
| 5 | 2.625 | 1.946 | 1.303 |
| 13 | 0.344 | 2.941 | 6.318 |

**Table 21**

| Embodiment **1300** | | | |
|---|---|---|---|
| Config. # | HFOV | Magnification | f/# |
| A | 13.1 deg | 0 | 1.2 - 1.9 |
| B | 11.3 deg | -0.17 | 1.3 - 2.2 |
| C | 9.3 deg | -0.40 | 1.7 - 2.5 |

The focusing range of some examples of lens systems such as **800, 850, 900, 1000, 1100, 1200** and **1300** may be from infinity to less than 150mm, from infinity to e.g. 1m or 2m, and from e.g. 350mm to less than 150mm, e.g. to 50mm. The focusing range of a lens system is defined as all u that can be focused to by means of a camera mechanism that controls the distance between lens and image sensor. That is, for each object that is located within the focus range, a focusing mechanism can set a particular v that results in maximum contrast for the object's image. Maximum contrast means that for lens-image sensor distances other than the particular lens-image sensor distance, the object's contrast will decrease. A minimal object distance (MIOD) is defined as the lower limit of the focusing range, i.e. the MIOD is the smallest u that the lens system can focus to. For example, some embodiments shown above can focus from infinity to 50mm, i.e. MIOD is 50mm.

FIG. 14A shows a known sensor shift setup. The sensor is shown from a viewing point on the camera's optical axis (camera not shown). Most of today's mobile devices equipped with OIS correct for undesired device motion in Yaw and Pitch directions. As indicated by arrow **1402,** for correction in Yaw direction, the sensor is moved parallel to X. As indicated by arrow **1404,** for Pitch correction, the sensor is moved parallel to Y.

FIG. 14B shows a sensor shift setup disclosed herein. The sensor is shown in the same perspective as in FIG. 14A. As shown in FIG. 14B, a correction of undesired linear motion in X (indicated by arrow **1406**) and Y direction (indicated by arrow **1408**) may be performed along the same axes used for Yaw and Pitch correction respectively. Correction for undesired linear motion in X and Y may be superposed on correction of rotational hand motion in Yaw and Pitch.

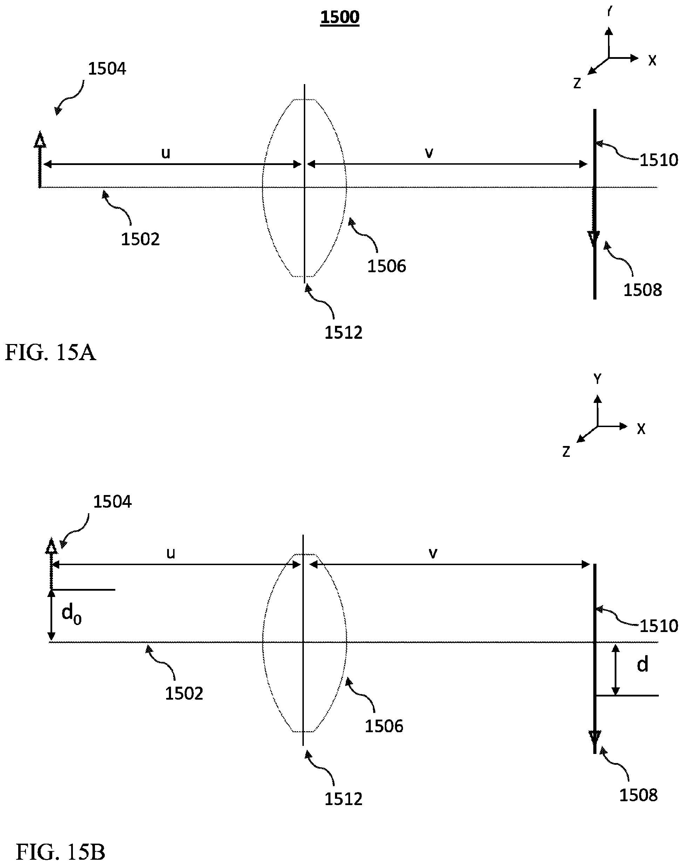

FIG. 15A shows an exemplary optical system **1500** having an optical axis **1502** parallel to X that comprises an object **1504,** a lens **1506** and an image **1508** of object **1504** formed at an image sensor **1510.** Lens **1506** may have a principal plane **1512.** FIG. 15A shows optical system **1500** at an initial time, e.g. when starting image sensor exposure for image capture. Optical system **1500** has a M of 1:1.

FIG. 15B shows optical system **1500** at a later time during exposure of image sensor **1510** for image capture and after the camera hosting device underwent an undesired linear motion in the negative Y direction by a distance d₀ (relative to the object at rest). The undesired linear motion results in a linear shift of an object point in the positive Y direction by a distance d₀. On image sensor **1510,** this results in a linear image shift in the negative Y direction by a distance d and eventually in image blurring. d does not only depend on the magnitude and direction of the actual undesired linear motion, but also on u: on image sensor **1510,** the actual undesired linear motion is amplified or attenuated according to $M = \frac{v}{u}$ with u and v. According to eq. 2, dₛₑₙₛₒᵣ relates to d₀ according to: ${d}_{sensor} = {d}_{0} \frac{EFL}{u - EFL}$ (Eq. 3).

From eq. 3 we learn that for a typical image capture scenario for a Wide camera (Wide example: EFL=5mm, u>10cm) or a Tele camera (Tele example: EFL=13mm, u>100cm) a linear shift at the object plane d₀ leads to a linear shift d_{S} at image sensor **1510** of d_{S}≈0.05·d₀ for the Wide example (u=10cm) and d_{S}≈0.01·d₀ for the Tele example (u=100cm). In general, it is assumed that u>>EFL and that an undesired linear motion such as d₀ does not deteriorate image quality significantly. However, this assumption is not valid for cameras with large magnifications M such as the pop-out camera in Macro configuration described herein. Consider as an example a Tele camera having EFL =13mm that is focused to u=10cm (first Macro example: EFL=13mm, u=10cm) and u=5cm object-lens distance (second Macro example: EFL=13mm, u=5cm). For the first Macro example d_{S}≈0.15·d₀, for the second Macro example d_{S}≈0.35·d₀. This shows that significant image quality deterioration caused by undesired linear motion in X and Y is expected. An undesired linear motion of a handheld device may be sensed by a motion sensor such as an inertial measurement unit (IMU). An IMU provides data on the linear acceleration which is to be integrated for determining the linear shift.

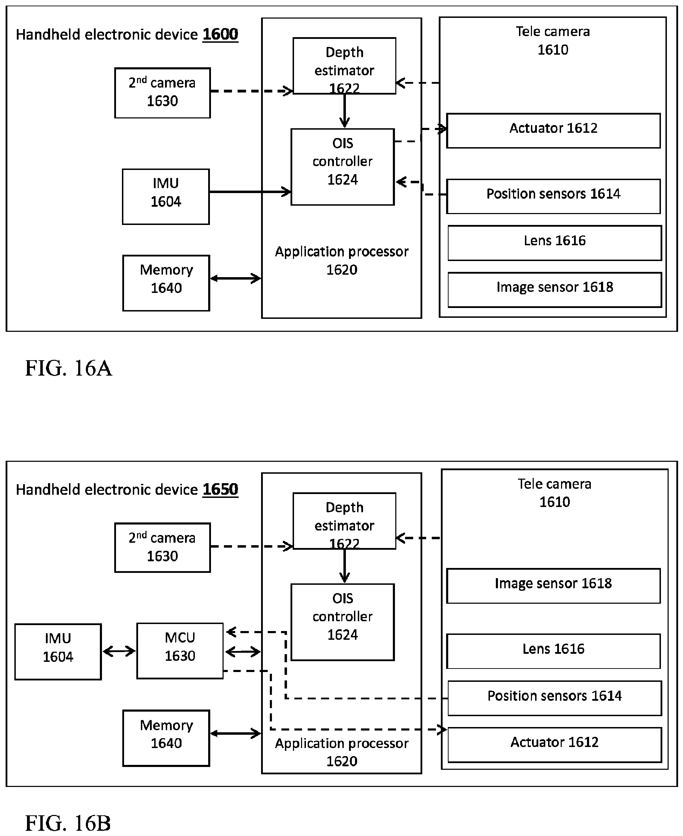

FIG. 16A shows schematically in a block diagram a device **1600** operative to perform OIS for correcting undesired linear motion in X and Y directions as described herein. Device **1600** comprises a Tele camera **1610** having FOV_{T}. In some examples, camera **1610** is a Macro capable (upright) pop-out camera. In other examples, camera **1610** is a Macro capable folded or upright Tele camera. Tele camera **1610** comprises of an actuator **1612** and a position sensor **1614** (e.g. a Hall sensor) for closed loop actuation and control, a lens **1616** and an image sensor **1618.** If Tele camera **1610** is a pop-out camera, lens **1616** may comprise a collapsible lens. If Tele camera **1610** is a folded camera, it may comprise an optical path folding element (OPFE, not shown) for folding an optical path, in general by 90 degrees. If Tele camera **1610** is a double-folded camera, it may comprise two OPFEs (not shown) for folding an optical path twice, in general by 90 degrees per folding. OIS may be performed as "lens shift" OIS or as "sensor shift" OIS. In a folded Tele camera, OIS may be performed as "prism OIS", i.e. the one or two OPFEs may be rotated or moved linearly for performing OIS as described herein. For sensor shift OIS, image sensor **1618** is moved relative to lens **1616** and to device **250.** For sensor shift OIS, a sensor shift by d_{S} is required for correcting an undesired linear motion by d₀ as given by eq. 3. In lens shift OIS, the lens is moved relative to image sensor **1618** and to device **250.** For lens shift OIS a lens shift by d_{L} is required for correcting an undesired linear motion by d₀. Lens shift d₁ depends on d_{S} (eq. 4) and d₀ (eq. 5) according to: ${d}_{Lens} = {d}_{sensor} \frac{u}{u + v}$ (Eq. 4) and ${d}_{Lens} = {d}_{0} \frac{EFL}{u}$ (Eq. 5) In other examples, OIS may be performed by moving the entire Tele camera, i.e. the Tele camera's components such as lens, image sensor etc. do not move relative to each other for performing OIS, but they move together relative to device **1600.** Device **1600** comprises an application processor (AP) **1620** that includes a depth estimator **1622,** an OIS controller **1624** and a microcontroller unit (MCU, not shown). Device **1600** further comprises an IMU **1604,** at least one second camera **1630** and a memory **1640.** The MCU may be used to read and process data of IMU **1604.** In some examples, the MCU may be controlled by an OIS controller **1624** which is part of AP **1620.** Camera **1630** may e.g. be a W camera or an UW camera. FOVw may e.g. be 60 - 90 degrees, FOVuw may e.g. be 90-130 degrees. In other examples, **1600** may comprise additional cameras. The additional cameras may e.g. be a W camera, an UW camera, an additional Tele camera, a Time of Flight (ToF) camera. Memory **1640** may e.g. be a NVM (non-volatile memory) used to store calibration data. Calibration data may e.g. be for calibration between Tele camera **1610** and second camera **1630.** In other examples, calibration data may be stored in memory element **1640** and/or in additional memory elements (not shown). The additional memory elements may be integrated in the camera **1610** and in the second camera **1630** or only in one of the camera modules and may be EEPROMs (electrically erasable programmable read-only memory). Memory **1640** may also store image data, depth data or metadata of a specific scene, scene segment or object. Metadata may e.g. be one or more depth values.

Another example of a device numbered **1650** and operative to perform OIS for correcting undesired linear motion in X and Y direction as described herein is shown in FIG. 16B. Device **1650** includes a MCU **1630** which is configured for reading and processing motion data provided by IMU **1604** and for reading and supplying OIS control signals to the Tele camera **1610,** i.e. reading and processing of data from position sensor **1614** and supplying control signals to the driver of actuator **1612.**

For depth estimation, image data from Tele camera **1610** or from camera **1630** or from additional cameras or components is transmitted to the depth estimator **1622.** Depth estimator **1622** calculates depth as known in the art. In some examples, depth estimator **1622** calculates a depth map of the entire scene covered by FOV_{T}. In other examples, depth estimator **1622** calculates a depth map of the image segments of the scene that include a specific object of interest (OOI) or object of interest (ROI). In yet other examples, depth estimator **1622** calculates a single value only, whereas the single value corresponds to a depth range of an object in focus. In yet other examples, depth information may be provided by a laser range finder ("Laser AF") which performs a Time-of-Flight measurement. Image data transmitted to the depth estimator **1622** may e.g. be:
▪ Phase detection auto focus (PDAF) data from the second camera **1630;**
▪ PDAF data from the Tele camera **1610;**
▪ Stereo image data, e.g. from Tele camera **1610** and from second camera **1630;**
▪ Focus stacking visual image data;
▪ Focus stacking PDAF data;
▪ Visual image data from Tele camera **1610** and/or from second camera **1630** (for estimating depth from defocus);
▪ Visual image data from Tele camera **1610** and/or from second camera **1630** (for estimating depth from object motion);
▪ Depth data from second camera **1630** that may be a Time of Flight (ToF) camera.

In some examples, visual image data from Tele camera **1610** and/or from camera **1630** may be used to estimate depth from motion, e.g. from a pre-view video stream comprising a plurality of images. Depth from motion may be estimated by turning OIS off, estimating d₀ between two or more frames from IMU information, estimating d_{S} from the movement of an image point between two or more frames and estimating u according to eq. 3.

OIS controller **1624** receives data on the linear acceleration of device **1600** from IMU **1604** and depth data on u of the object in focus (or larger segments of the scene) from depth estimator **1622.** For OIS on undesired linear motion in X and Y, OIS controller **1624** and/or a MCU such as MCU **1630** estimates d₀ from the IMU's data on linear acceleration and calculates d_{S} or d_{L} for sensor shift OIS or lens shift OIS respectively according to eq. 3 or eq. 5 respectively. OIS controller **1624** and/or MCU **1630** transmit control signals to actuator **1612.** Actuator **1612** may actuate an image sensor for sensor shift OIS and/or a lens for lens shift OIS. OIS controller **1624** and/or MCU **1630** receive data on the position of lens **1616** (for lens shift OIS) or image sensor **1618** (for sensor shift OIS) from position sensors **1614** for performing closed loop control.

In all the lens examples, the EFL of the entire G1 group is marked EFL_{G1} (or "EFL(G1)"), the EFL of the entire G2 group is marked EFL_{G2} and focal lengths of individual lens elements are marked by the element number, i.e. the power of L1 is marked f₁ the focal length of L2 is marked f₂, etc.

A mean glass thickness ("MGT") of a lens group or an entire lens is defined by the average thickness of the single lens elements it includes. The mean glass thickness of a group, e.g. G1, is marked "MGT(G1)", while the mean glass thickness of an entire lens is marked "MGT".

A mean air gap ("MAG") of a lens group or an entire lens is defined by the average thickness of the air gaps along the optical axis between the single lens elements within its lens groups G1 and G2. This means that calculating the mean air gap takes into account only intra-lens group distances but not distances between lens groups. Specifically BG, BG1, BG2 and BFL are not considered for calculating MAG. The mean air gap of a group, e.g. G1, is marked "MAG(G1)", while the mean air gap of an entire lens marked "MAG".

All pop-out optical lens systems described below may be focused by moving an entire lens with respect to an image sensor.

Table 22 summarizes values and ratios thereof of various features that are included in the lens systems shown above and in the following (TTL, c-TTL, EFL, f, BG, c-BG, BFL, c-BFL, TG1, TG2, T1, T3, MGT, MAG given in mm, H-FOV given in degrees). For c-TTL, a minimum value is given. "P-O method" refers to the method used for switching the respective lens system between a pop-out and a collapsed state, wherein the number "i" refers to the i-th method embodiment (e.g. "1" refers to switching according to a 1^{st} method embodiment, "2" refers to switching according to a 2^{nd} method embodiment, etc.).

**Table 22**

| | **1700** | **1800** | **1900** | **2000** | **2100** | **Min. value** | **Max. value** |
|---|---|---|---|---|---|---|---|
| **TTL** | 12.50 | 10.86 | 12.50 | 12.50 | 12.50 | 10.86 | 12.50 |
| **c-TTL** | 7.78 | 7.08 | 7.80 | 8.13 | 7.50 | 7.08 | 8.13 |
| **EFL** | 13.90 | 11.94 | 14.60 | 14.70 | 13.90 | 11.94 | 14.70 |
| **BG** | 0.97 | 0.58 | 3.32 | 3.53 | 1.58 | 0.58 | 3.53 |
| **c-BG** | 0.97 | 0.58 | 0.75 | 1.00 | 0.20 | 0.20 | 1.00 |
| **BFL** | 5.52 | 5.00 | 2.88 | 2.60 | 0.85 | 0.85 | 5.52 |
| **c-BFL** | 0.81 | 1.21 | 0.75 | 0.75 | 0.85 | 0.75 | 1.21 |
| **TG1** | 3.68 | 2.76 | 3.73 | 3.91 | 3.46 | 2.76 | 3.91 |
| **TG2** | 2.33 | 2.54 | 2.57 | 2.47 | 2.14 | 2.14 | 2.57 |
| **H-FOV** | 13.40 | 16.80 | 12.80 | 12.70 | 13.50 | 12.70 | 16.80 |
| **EFL(G1)** | 11.71 | 8.57 | 10.29 | 10.31 | 9.95 | 8.57 | 11.71 |
| **EFL(G2)** | -34.58 | -16.24 | -12.44 | -13.01 | -13.32 | -34.58 | -12.44 |
| **T1** | 2.30 | 1.25 | 2.08 | 2.12 | 1.44 | 1.25 | 2.30 |
| **T3** | 0.30 | 1.23 | 0.27 | 0.28 | 0.31 | 0.28 | 1.23 |
| **Lens power sequence** | ++---+ | +-+---+ | ++--+- | ++-+-+ | ++---+- | | |
| **MGT(G1)** | 1.19 | 0.90 | 1.21 | 0.94 | 1.09 | 0.90 | 1.21 |
| **MGT(G2)** | 0.36 | 0.28 | 0.45 | 0.53 | 0.37 | 0.28 | 0.53 |
| **MGT** | 0.77 | 0.59 | 0.83 | 0.73 | 0.73 | 0.59 | 0.83 |
| **MAG(G1)** | 0.06 | 0.03 | 0.04 | 0.05 | 0.10 | 0.03 | 0.10 |
| **MAG(G2)** | 0.63 | 0.47 | 0.60 | 1.42 | 0.52 | 0.47 | 1.42 |
| **MAG** | 0.34 | 0.25 | 0.32 | 0.73 | 0.31 | 0.25 | 0.73 |
| **BFL/c-BFL** | 6.81 | 4.13 | 3.84 | 3.47 | 1.00 | 1.00 | 6.81 |
| **EFL(G1)/EFL(G2)** | -0.34 | -0.53 | -0.83 | -0.79 | -0.75 | -0.83 | -0.34 |
| **EFL(G1)/EFL** | 0.84 | 0.72 | 0.70 | 0.70 | 0.72 | 0.70 | 0.84 |
| **EFL(G2)/EFL** | -2.49 | -1.36 | -0.85 | -0.89 | -0.96 | -2.49 | -0.85 |
| **BG/TTL** | 0.08 | 0.05 | 0.27 | 0.28 | 0.13 | 0.05 | 0.28 |
| **BFL/TTL** | 0.44 | 0.46 | 0.23 | 0.21 | 0.07 | 0.07 | 0.46 |
| **c-TTL/TTL** | 0.62 | 0.65 | 0.62 | 0.65 | 0.60 | 0.60 | 0.65 |
| **TG1/TTL** | 0.29 | 0.25 | 0.30 | 0.31 | 0.28 | 0.25 | 0.31 |
| **TTL/EFL** | 0.90 | 0.91 | 0.86 | 0.85 | 0.90 | 0.85 | 0.91 |
| **T1/TTL** | 0.18 | 0.12 | 0.17 | 0.17 | 0.12 | 0.12 | 0.18 |
| **T1/MGT** | 2.99 | 2.12 | 2.55 | 2.90 | 1.97 | 1.97 | 2.99 |
| **T1/T3** | 7.67 | 1.02 | 5.17 | 5.17 | 4.65 | 1.02 | 7.67 |
| **TG1/(TTL-BFL)** | 0.53 | 0.47 | 0.39 | 0.39 | 0.30 | 0.30 | 0.53 |
| **MGT(G1)/MGT** | 1.55 | 1.53 | 1.46 | 1.29 | 1.49 | 1.29 | 1.55 |
| **MGT(G2)/MGT** | 0.47 | 0.47 | 0.54 | 0.73 | 0.51 | 0.47 | 0.73 |
| **MGT(G1)/MGT(G2)** | 3.31 | 3.21 | 2.69 | 1.77 | 2.95 | 1.77 | 3.31 |
| **MAG/ MAG(G1)** | 5.67 | 8.33 | 8.00 | 14.60 | 3.10 | 3.10 | 14.60 |
| **MAG/MAG(G2)** | 0.54 | 0.53 | 0.53 | 0.51 | 0.60 | 0.51 | 0.60 |
| **MAG(G2)/ MAG(G1)** | 10.50 | 15.67 | 15.00 | 28.40 | 5.20 | 5.20 | 28.40 |
| **MAG/MGT** | 0.44 | 0.42 | 0.39 | 1.00 | 0.42 | 0.39 | 1.00 |
| **MAG(G1)/ MGT(G1)** | 0.05 | 0.03 | 0.03 | 0.05 | 0.09 | 0.03 | 0.09 |
| **MAG(G2)/MGT(G2)** | 1.75 | 1.68 | 1.33 | 2.68 | 1.41 | 1.33 | 2.68 |
| P-O method | 2 | 2 | 3 | 3 | 4 | | |

**Table 22 (cont.)**

| | **800** | **850** | **900** | **1000** | **1100 Tele** | **1100 Macro** | **1200 Tele** | **1200 Macro** | **1300 Tele** | **1300 Macro** | **MIN** | **MAX** |
|---|---|---|---|---|---|---|---|---|---|---|---|---|
| **TTL** | 19.84 | 13.50 | 7.78 | 15.00 | 15.00 | 20.90 | 15.00 | 20.90 | 15.80 | 20.40 | 7.78 | 20.90 |
| **c-TTL** | 12.60 | 5.00 | 3.60 | 6.20 | 8.50 | 8.50 | 8.90 | 8.90 | 9.50 | 9.50 | 3.60 | 12.60 |
| **EFL** | 13.00 | 15.15 | 7.97 | 16.00 | 14.98 | 14.80 | 15.00 | 9.80 | 15.00 | 15.00 | 7.97 | 16.00 |
| **BG** | 6.22 | 1.78 | 0.97 | 1.55 | 1.91 | 1.44 | 5.07 | 2.91 | 2.63 | 1.30 | 0.97 | 6.22 |
| **BG2** | | | | | | | 4.81 | 9.18 | | | 4.81 | 9.18 |
| **BFL** | 1.02 | 5.49 | 3.27 | 6.99 | 0.59 | 6.96 | 0.95 | 0.95 | 0.84 | 6.82 | 0.59 | 6.99 |
| **BG/TTL** | 0.31 | 0.13 | 0.12 | 0.10 | 0.13 | 0.07 | 0.34 | 0.14 | 0.17 | 0.06 | 0.06 | 0.34 |
| **BFL/TTL** | 0.05 | 0.41 | 0.42 | 0.47 | 0.04 | 0.33 | 0.06 | 0.05 | 0.05 | 0.33 | 0.04 | 0.47 |
| **c-TTL/TTL** | 0.64 | 0.37 | 0.46 | 0.41 | 0.57 | 0.41 | 0.59 | 0.43 | 0.60 | 0.47 | 0.37 | 0.64 |
| **TTL/EFL** | 1.53 | 0.89 | 0.98 | 0.94 | 1.00 | 1.41 | 1.00 | 2.13 | 1.05 | 1.36 | 0.89 | 2.13 |
| **Number lenses** | 8 | 6 | 5 | 5 | 6 | 6 | 6 | 6 | 6 | 6 | 5 | 8 |
| **Number lens groups** | 2 | 2 | 2 | 2 | 2 | 2 | 3 | 3 | 2 | 2 | 2 | 3 |
| **Number collapsible air gaps** | 2 | 2 | 2 | 2 | 3 | 3 | 2 | 2 | 2 | 2 | 2 | 3 |
| P-O method | 1 | 2, 3 | 2, 3 | 2, 3 | 4 | 4 | 4 | 4 | 4 | 4 | | |

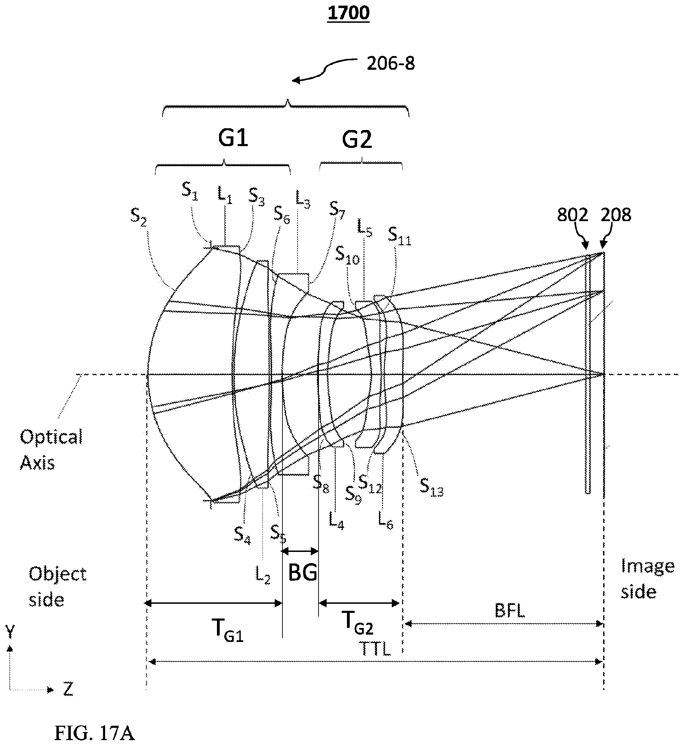

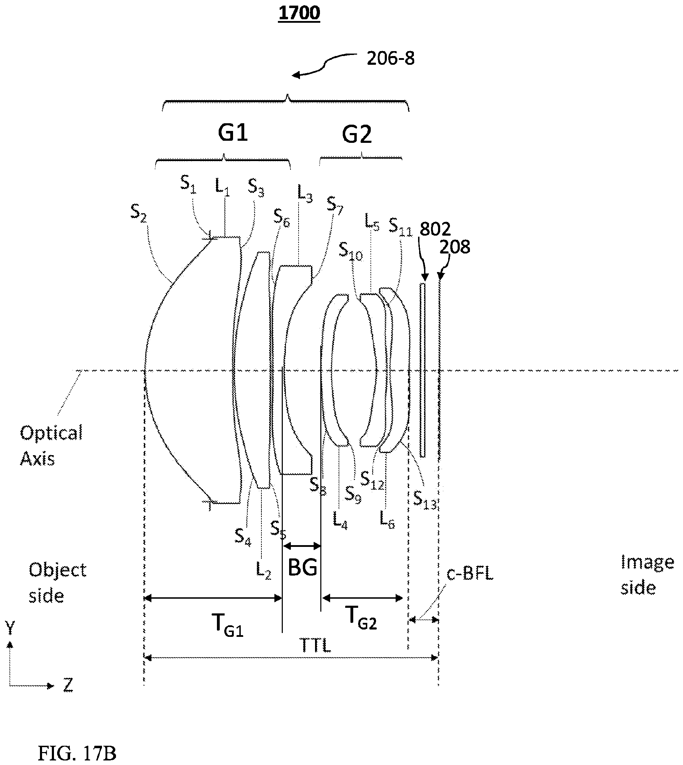

FIG. 17A shows an example of a pop-out optical lens system disclosed herein and numbered **1700** in a pop-out state. Lens system **1700** comprises a pop-out lens **206-8** divided into two lens groups G1 and G2, an image sensor **208** and, optionally, an optical element ("window") **802.** FIG. 4B shows pop-out optical lens system **1700** in a collapsed state.

Optical element **802** may be for example infra-red (IR) filter, and/or a glass image sensor dust cover. Optical rays pass through lens **206-8** and form an image on image sensor **208.** FIG. 17A shows 3 fields with 3 rays for each: the upper marginal-ray, the lower marginal-ray and the chief-ray. All further figures show these 3 rays as well.

Detailed optical data and surface data for pop-out lens **206-8** are given in Tables 23-26. Table 23 provides surface types, Table 24 provides aspheric coefficients, and Table 25 shows the BFL ("T") for lens **206-8** being in a pop-out state and c-BFL for lens **206-8** being in a collapsed state. Table 26 shows the distance of a first, second and third deflection point ("DP1", "DP2" and "DP3") respectively from the optical axis for lens elements L_{N-1} and L_{N}.

The surface types are:
a) Plano: flat surfaces, no curvature
b) Q type 1 (QT1) surface sag formula: $\begin{matrix}z \left(r\right) = \frac{{cr}^{2}}{1 + \sqrt{1 - \left(1+k\right) {c}^{2} {r}^{2}}} + {D}_{con} \left(u\right) \\ {D}_{con} \left(u\right) = {u}^{4} {\sum }_{n = 0}^{N} {A}_{n} {Q}_{n}^{con} \left({u}^{2}\right) \\ u = \frac{r}{{r}_{norm}} , x = {u}^{2} \\ {Q}_{0}^{con} \left(x\right) = 1 {Q}_{1}^{con} = - \left(5-6x\right) {Q}_{2}^{con} = 15 - 14 x \left(3-2x\right) \\ {Q}_{3}^{con} = - \left\{35-12x\left[14-x\left(21-10x\right)\right]\right\} \\ {Q}_{4}^{con} = 70 - 3 x \left\{168-5x\left[84-11x\left(8-3x\right)\right]\right\} \\ {Q}_{5}^{con} = - \left[126-x\left(1260-11x\left\{420-x\left[720-13x\left(45-14x\right)\right]\right\}\right)\right]\end{matrix}$ (Eq. 1)
where {z, r} are the standard cylindrical polar coordinates, c is the paraxial curvature of the surface, k is the conic parameter, rₙₒᵣₘ is generally one half of the surface's clear aperture (CA), and Aₙ are the aspheric coefficients shown in lens data tables. The Z axis is positive towards image. Values for CA are given as a clear aperture radius, i.e. D/2. The reference wavelength is 555.0 nm. Units are in mm except for refraction index ("Index") and Abbe #. Each lens element Li has a respective focal length fi, and all lens elements of a group Gi together have a respective focal length fi, both given in Table 23. The FOV is given as half FOV (HFOV). The definitions for surface types, Z axis, CA values, reference wavelength, units, focal length and HFOV are valid for all following Tables.

**Table 23**

| EFL = 13.9mm, F# = 2, HFoV = 13.4deg, Sensor Height Full Diagonal = 6.5mm | | | | | | | | | | |
|---|---|---|---|---|---|---|---|---|---|---|
| Group | Lens | Surface | Type | R [mm] | T [mm] | D/2 [mm] | Nd | Vd | Focal Length [mm] | |
| Object | | S₀ | Flat | Infinity | Infinity | | | | | |
| Stop | | S₁ | Flat | Infinity | -1.72 | 3.47 | | | | |
| G1 | L1 | S₂ | QTYP | 4.64 | 2.31 | 3.47 | 1.54 | 55.99 | 8.56 | 11.71 |
| | | S₃ | QTYP | 15.13 | 0.05 | 3.31 | | | | |
| | L2 | S₄ | QTYP | 7.31 | 0.96 | 3.09 | 1.51 | 56.81 | 14.08 | |
| | | S₅ | QTYP | -851.44 | 0.06 | 2.96 | | | | |
| | L3 | S₆ | QTYP | -24.50 | 0.30 | 2.73 | 1.66 | 20.27 | -7.31 | |
| | | S₇ | QTYP | 6.11 | 0.97 | 2.25 | | | | |
| G2 | L4 | S₈ | QTYP | 4.75 | 0.28 | 2.00 | 1.53 | 56.16 | -67.48 | - 34.58 |
| | | S₉ | QTYP | 4.11 | 1.19 | 1.83 | | | | |
| | L5 | S₁₀ | QTYP | -2.36 | 0.28 | 1.76 | 1.54 | 55.93 | -8.83 | |
| | | S₁₁ | QTYP | -4.81 | 0.08 | 1.96 | | | | |
| | L6 | S₁₂ | QTYP | 4.07 | 0.51 | 1.98 | 1.66 | 20.37 | 10.38 | |
| | | S₁₃ | QTYP | 9.40 | See Table 25 | 2.12 | | | | |
| Glass window | | S₁₄ | Flat | Infinity | 0.11 | | 1.52 | 64.17 | | |
| | | S₁₅ | Flat | Infinity | 0.39 | | | | | |
| Image sensor | | S₁₆ | | | | | | | | |

Table 24 shows the aspheric coefficients.

**Table 24**

| Surface | Conic (k) | NR | A₀ | A₁ | A₂ | A₃ |
|---|---|---|---|---|---|---|
| S₂ | 0.00E+00 | 3.74E+00 | 1.05E+00 | -3.12E-01 | 1.88E-02 | 5.78E-02 |
| S₃ | 0.00E+00 | 3.34E+00 | -1.17E-01 | -5.93E-02 | -8.16E-03 | 1.01E-02 |
| S₄ | 0.00E+00 | 3.28E+00 | -9.90E-02 | -2.37E-03 | -1.87E-02 | -1.24E-02 |
| S₅ | 0.00E+00 | 3.08E+00 | -4.11E-02 | 2.68E-02 | -1.53E-02 | -9.81E-03 |
| S₆ | 0.00E+00 | 2.80E+00 | 3.89E-01 | -1.16E-02 | -7.22E-03 | 7.80E-03 |
| S₇ | 0.00E+00 | 2.18E+00 | 2.09E-01 | 3.99E-02 | -1.44E-02 | 2.71E-03 |
| S₈ | 0.00E+00 | 2.19E+00 | -7.23E-02 | 1.77E-01 | -6.07E-02 | -7.24E-03 |
| S₉ | 0.00E+00 | 2.00E+00 | -3.32E-02 | 1.14E-01 | -5.52E-02 | -2.03E-02 |
| S₁₀ | 0.00E+00 | 1.94E+00 | 5.79E-01 | -2.43E-01 | -2.56E-02 | -3.33E-02 |
| S₁₁ | 0.00E+00 | 2.04E+00 | 3.33E-01 | -1.98E-01 | 1.11E-02 | 4.27E-03 |
| S₁₂ | 0.00E+00 | 2.25E+00 | -1.23E+00 | 1.41E-02 | -2.02E-02 | 3.84E-03 |
| S₁₃ | 0.00E+00 | 2.29E+00 | -9.54E-01 | 2.44E-02 | -1.08E-02 | 3.70E-03 |

**Table 24 cont.**

| Surface | A₄ | A₅ | A₆ | A₇ | A₈ |
|---|---|---|---|---|---|
| S₂ | -3.56E-02 | 5.97E-03 | 4.36E-03 | -3.56E-03 | 1.04E-03 |
| S₃ | -5.46E-03 | 2.97E-03 | -1.43E-03 | 4.94E-04 | -8.28E-05 |
| S₄ | -1.87E-02 | 2.49E-03 | -2.79E-03 | 6.86E-05 | 4.79E-05 |
| S₅ | -2.40E-03 | 2.79E-03 | -1.11E-03 | 5.21E-04 | -1.37E-04 |
| S₆ | -3.11E-03 | -2.70E-04 | 8.21E-04 | -2.32E-04 | 5.68E-05 |
| S₇ | 1.70E-03 | -1.06E-03 | -5.85E-05 | 2.45E-05 | 2.71E-05 |
| S₈ | -1.53E-02 | -7.79E-03 | -1.79E-03 | -8.27E-04 | -5.60E-05 |
| S₉ | -2.15E-02 | -1.26E-02 | -5.18E-03 | -1.83E-03 | -4.49E-04 |
| S₁₀ | -1.51E-02 | -7.29E-03 | -1.93E-03 | -5.05E-04 | 5.89E-05 |
| S₁₁ | -3.92E-03 | 4.72E-04 | -4.90E-04 | 3.78E-04 | -5.23E-05 |
| S₁₂ | -2.17E-02 | -8.24E-03 | -3.14E-03 | 5.49E-04 | -2.74E-04 |
| S₁₃ | -5.43E-03 | -2.52E-03 | -1.44E-03 | -2.31E-04 | -1.55E-04 |

**Table 25**

| | | On State (Pop Out) | Off State (Collapsed) |
|---|---|---|---|
| T [mm] | S₁₃ | 5.0156 | 0.2144 |

**Table 26**

| | | DP1 [mm] | DP2 [mm] | DP3 [mm] |
|---|---|---|---|---|
| L6 | S₁₂ | 0.5001 | 1.6672 | N/A |
| | S₁₃ | 0.5902 | N/A | N/A |
| L7 | S₁₄ | 2.0629 | N/A | N/A |
| | S₁₅ | 0.1689 | 1.1203 | 2.0314 |

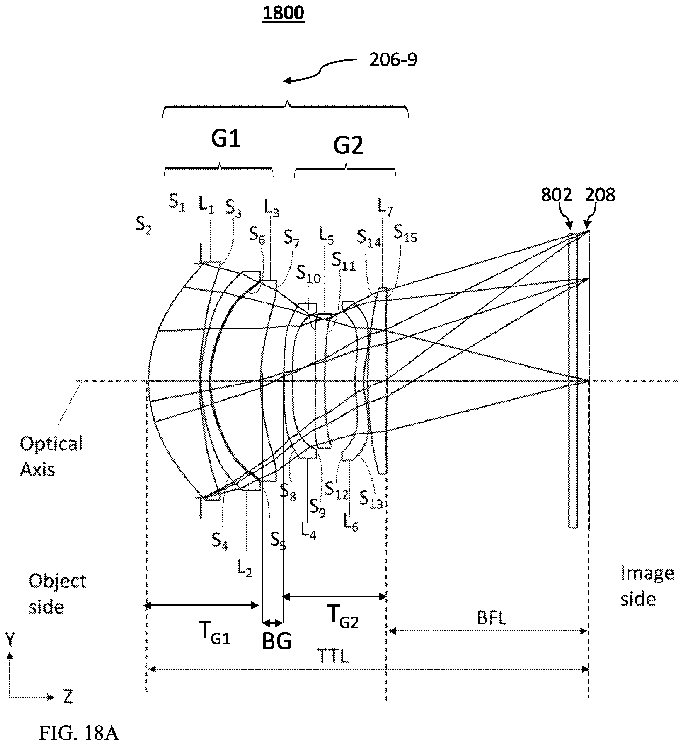

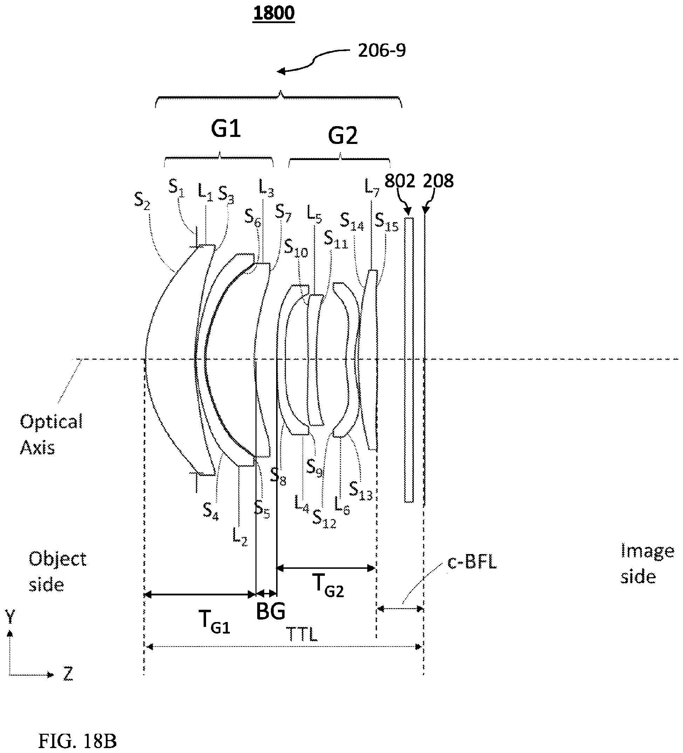

FIG. 18A shows another embodiment of a pop-out optical lens system disclosed herein and numbered **1800.** FIG. 18B shows pop-out optical lens system **1800** in a collapsed state. Lens system **1800** comprises a pop-out lens **206-9** divided into two lens groups G1 and G2, an image sensor **208** and, optionally, an optical element **802.** Table 27 provides surface types, Table 28 provides aspheric coefficients, Table 29 shows the BFL and c-BFL and Table 30 shows the deflection point distances from the optical axis.

**Table 27**

| EFL = 11.94mm, F# = 2.08, HFoV = 16.8deg, Sensor Height Full Diagonal = 7mm | | | | | | | | | | |
|---|---|---|---|---|---|---|---|---|---|---|
| Group | Lens | Surface | Type | R [mm] | T [mm] | D/2 [mm] | Nd | Vd | Focal Length [mm] | |
| Object | | S₀ | Flat | Infinity | Infinity | | | | | |
| Stop | | S₁ | Flat | Infinity | -1.29 | 2.87 | | | | |
| G1 | L1 | S₂ | QTYP | 3.31 | 1.25 | 2.87 | 1.54 | 55.91 | 13.76 | 8.57 |
| | | S₃ | QTYP | 5.11 | 0.03 | 2.77 | | | | |
| | L2 | S₄ | QTYP | 3.48 | 0.21 | 2.64 | 1.67 | 19.44 | -17.72 | |
| | | S₅ | QTYP | 2.63 | 0.03 | 2.42 | | | | |
| | L3 | S₆ | QTYP | 2.61 | 1.23 | 2.41 | 1.54 | 55.91 | 9.48 | |
| | | S₇ | QTYP | 4.38 | 0.58 | 2.23 | | | | |
| G2 | L4 | S₈ | QTYP | 24.80 | 0.21 | 1.85 | 1.66 | 20.37 | -126.21 | -16.24 |
| | | S₉ | QTYP | 19.09 | 0.58 | 1.64 | | | | |
| | L5 | S₁₀ | QTYP | -22.16 | 0.21 | 1.65 | 1.64 | 23.53 | -10.42 | |
| | | S₁₁ | QTYP | 9.68 | 0.75 | 1.62 | | | | |
| | L6 | S₁₂ | QTYP | 2.87 | 0.22 | 1.72 | 1.54 | 56.18 | -23.25 | |
| | | S₁₃ | QTYP | 2.28 | 0.10 | 1.90 | | | | |
| | L7 | S₁₄ | QTYP | 7.40 | 0.48 | 2.19 | 1.67 | 19.44 | 11.69 | |
| | | S₁₅ | QTYP | 115.56 | See Table 29 | 2.23 | | | | |
| Glass window | | S₁₆ | Flat | Infinity | 0.21 | | 1.52 | 64.17 | | |
| | | S₁₇ | Flat | Infinity | 0.30 | | | | | |
| Image sensor | | S₁₈ | | | | | | | | |

**Table 28**

| Surface | Conic (k) | NR | A₀ | A₁ | A₂ | A₃ |
|---|---|---|---|---|---|---|
| S₂ | 0 | 2.21E+00 | -4.24E-02 | -7.81E-03 | -8.54E-04 | 5.91E-05 |
| S₃ | 0 | 2.21E+00 | -2.22E-01 | 3.42E-02 | -2.36E-03 | 6.05E-05 |
| S₄ | 0 | 1.56E+00 | -8.85E-02 | 5.13E-03 | 4.16E-04 | -1.19E-04 |
| S₅ | 0 | 2.21E+00 | -3.27E-01 | 4.50E-02 | 5.36E-03 | -2.18E-03 |
| S₆ | 0 | 1.56E+00 | -1.08E-01 | 2.21E-03 | 4.34E-04 | 2.13E-04 |
| S₇ | 0 | 1.56E+00 | -5.97E-02 | 2.50E-03 | 3.62E-04 | 2.70E-04 |
| S₈ | 0 | 1.52E+00 | 1.22E-01 | 8.04E-03 | -1.60E-03 | 8.07E-04 |
| S₉ | 0 | 1.52E+00 | 2.53E-01 | 2.11E-02 | 1.25E-03 | 1.53E-03 |
| S₁₀ | 0 | 1.63E+00 | 9.13E-02 | 1.50E-02 | -6.30E-04 | 1.66E-03 |
| S₁₁ | 0 | 1.63E+00 | 2.11E-02 | 2.33E-02 | -2.91E-03 | 1.68E-03 |
| S₁₂ | 0 | 1.47E+00 | -5.03E-01 | 1.75E-02 | -5.67E-04 | -8.94E-04 |
| S₁₃ | 0 | 1.47E+00 | -4.88E-01 | 1.82E-02 | -2.08E-03 | -2.28E-04 |
| S₁₄ | 0 | 1.49E+00 | -5.09E-02 | 1.08E-02 | -2.14E-03 | 4.66E-04 |
| S₁₅ | 0 | 1.49E+00 | -4.51E-02 | 1.15E-02 | -1.27E-03 | 1.12E-04 |

**Table 28 cont.**

| Surface | A₄ | A₅ | A₆ | A₇ |
|---|---|---|---|---|
| S₂ | -3.02E-06 | -1.32E-05 | 1.12E-06 | 3.76E-08 |
| S₃ | -2.45E-04 | 6.08E-05 | -6.27E-06 | 4.05E-07 |
| S₄ | 1.49E-05 | -7.22E-07 | -3.42E-09 | 1.07E-10 |
| S₅ | -2.66E-04 | -3.74E-04 | -1.20E-04 | -7.15E-06 |
| S₆ | -5.64E-05 | 6.68E-06 | -4.46E-07 | -4.18E-09 |
| S₇ | -1.78E-04 | 2.85E-05 | -1.67E-06 | 2.44E-08 |
| S₈ | -5.47E-04 | 1.41E-04 | -1.73E-05 | 7.96E-07 |
| S₉ | -4.28E-04 | 2.76E-04 | -6.70E-06 | 2.25E-05 |
| S₁₀ | 3.67E-04 | 3.20E-04 | -2.29E-05 | 1.37E-05 |
| S₁₁ | 4.08E-04 | 3.09E-04 | -3.07E-05 | 3.00E-05 |
| S₁₂ | 1.82E-04 | 2.78E-06 | 4.51E-06 | 1.14E-06 |
| S₁₃ | 7.63E-05 | -4.39E-07 | -2.13E-06 | 2.57E-07 |
| S₁₄ | -8.85E-05 | 1.06E-05 | -6.23E-07 | 8.60E-09 |
| S₁₅ | -3.53E-05 | 7.82E-06 | -7.35E-07 | 2.27E-08 |

**Table 29**

| | | On State (Pop Out) | Off State (Collapsed) |
|---|---|---|---|
| T [mm] | S₁₅ | 4.4783 | 0.7000 |

**Table 30**

| | | DP1 [mm] | DP2 [mm] | DP3 [mm] |
|---|---|---|---|---|
| L6 | S₁₂ | 0.5001 | 1.6672 | N/A |
| | S₁₃ | 0.5902 | N/A | N/A |
| L7 | S₁₄ | 2.0629 | N/A | N/A |
| | S₁₅ | 0.1689 | 1.1203 | 2.0314 |

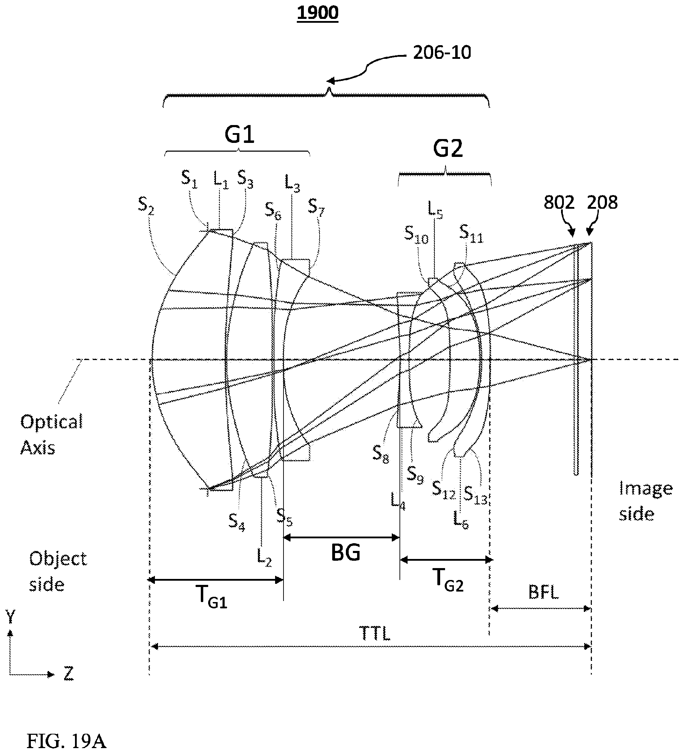

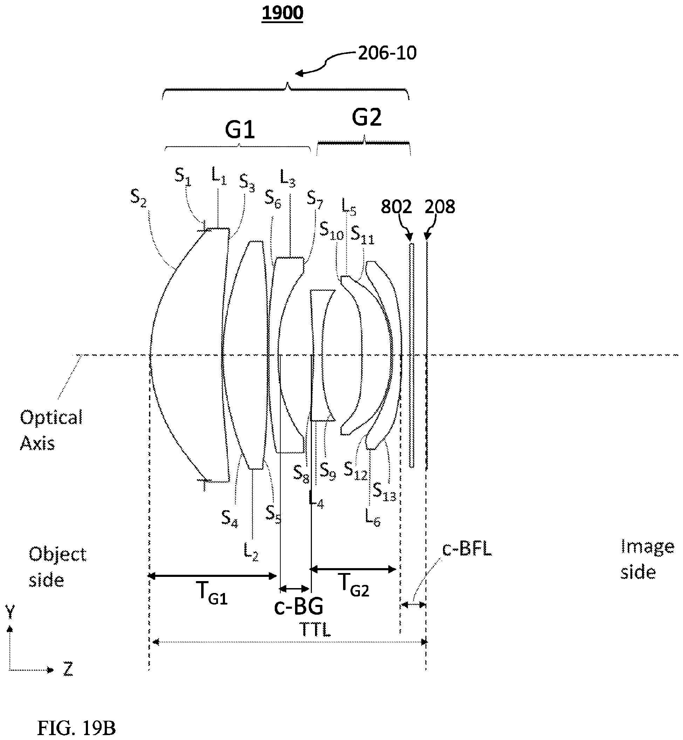

FIG. 19A shows yet another embodiment of a pop-out optical lens system disclosed herein and numbered **1900** in a pop-out state. FIG. 19B shows pop-out optical lens system **1900** in a collapsed state. Lens system **1900** comprises a pop-out lens **206-10** divided into two lens groups G1 and G2, an image sensor **208** and, optionally, an optical element **802.**

Table 31 provides surface types, Table 32 provides aspheric coefficients, and Table 33 shows the BG and the BFL for the pop-out state and the c-BG and the c-BFL for the collapsed state. Table 34 shows the deflection point distances from the optical axis.

**Table 31**

| EFL = 14.6mm, F# = 2, HFoV = 12.8deg, Sensor Height Full Diagonal = 6.5mm | | | | | | | | | | |
|---|---|---|---|---|---|---|---|---|---|---|
| Group | Lens | Surface | Type | R [mm] | T [mm] | D/2 [mm] | Nd | Vd | Focal Length [mm] | |
| Object | | S₀ | Flat | Infinity | Infinity | | | | | |
| Stop | | S₁ | Flat | Infinity | -1.5744 | 3.659 5 | | | | |
| G1 | L1 | S₂ | QTY P | 4.4361 | 2.0811 | 3.659 5 | 1.533 3 | 56.162 5 | 10.5748 | 10.2898 |
| | | S₃ | QTY P | 17.1831 | 0.0371 | 3.491 7 | | | | |
| | L2 | S₄ | QTY P | 5.6555 | 1.2961 | 3.281 0 | 1.510 9 | 56.746 7 | 14.9745 | |
| | | S₅ | QTY P | 19.8249 | 0.0505 | 3.125 1 | | | | |
| | L3 | S₆ | QTY P | 175.7762 | 0.2670 | 2.811 3 | 1.660 4 | 20.267 6 | 11.9103 | |
| | | S₇ | QTY P | 8.3152 | See Table 33 | 2.376 8 | | | | |
| G2 | L4 | S₈ | QTY P | -6.5426 | 0.2590 | 1.788 9 | 1.533 9 | 55.828 4 | 11.2510 | 12.4375 |
| | | S₉ | QTY P | 77.3828 | 1.1602 | 1.864 8 | | | | |
| | L5 | S₁₀ | QTY P | -15.1296 | 0.8481 | 2.065 8 | 1.608 0 | 25.644 3 | 13.0264 | |
| | | S₁₁ | QTY P | -5.3338 | 0.0451 | 2.270 2 | | | | |
| | L6 | S₁₂ | QTY P | -7.5609 | 0.2554 | 2.619 5 | 1.543 7 | 55.955 6 | - 14.3694 | |
| | | S₁₃ | QTY P | - 216.3040 | See **Table** 33 | 2.704 4 | | | | |
| Glass window | | S₁₄ | Flat | Infinity | 0.1100 | | 1.516 8 | 64.167 3 | | |
| | | S₁₅ | Flat | Infinity | 0.3900 | | | | | |
| Image sensor | | S₁₆ | | | | | | | | |

**Table 32**

| Surface | Conic (k) | NR | A₀ | A₁ | A₂ | A₃ |
|---|---|---|---|---|---|---|
| S₂ | 0 | 3.63E+00 | -2.91E-01 | -8.05E-02 | -2.62E-02 | -4.27E-03 |
| S₃ | 0 | 3.48E+00 | -2.65E-01 | -7.73E-02 | 2.94E-02 | -7.70E-03 |
| S₄ | 0 | 3.34E+00 | -3.37E-01 | -8.26E-02 | 4.49E-02 | -1.18E-02 |
| S₅ | 0 | 3.25E+00 | -4.14E-01 | 1.15E-02 | 7.94E-04 | -3.69E-03 |
| S₆ | 0 | 2.80E+00 | 1.78E-01 | -5.55E-02 | 1.16E-02 | 3.08E-03 |
| S₇ | 0 | 2.35E+00 | 2.66E-01 | -5.92E-02 | 1.10E-02 | -2.21E-03 |
| S₈ | 0 | 2.00E+00 | 9.75E-02 | -1.02E-02 | -2.53E-03 | 2.44E-03 |
| S₉ | 0 | 1.91E+00 | 7.56E-02 | 5.35E-03 | -3.61E-03 | 2.18E-03 |
| S₁₀ | 0 | 1.97E+00 | -2.06E-01 | -7.41E-03 | 1.20E-02 | 1.23E-02 |
| S₁₁ | 0 | 2.23E+00 | -7.22E-02 | -6.08E-03 | -4.02E-03 | 3.52E-03 |
| S₁₂ | 0 | 2.53E+00 | -2.88E-01 | 3.29E-02 | -9.09E-04 | -1.65E-03 |
| S₁₃ | 0 | 2.56E+00 | -5.32E-01 | 2.37E-02 | 1.08E-03 | 3.36E-03 |

**Table 32 cont.**

| Surface | A₄ | A₅ | A₆ | A₇ | A₈ |
|---|---|---|---|---|---|
| S₂ | -1.06E-03 | 6.89E-04 | 2.45E-04 | 1.36E-04 | -7.34E-05 |
| S₃ | -2.39E-03 | 6.73E-03 | -4.20E-03 | 1.24E-03 | -1.28E-04 |
| S₄ | -7.89E-03 | 1.05E-02 | -3.05E-03 | -3.70E-04 | 4.94E-04 |
| S₅ | -6.79E-03 | 1.08E-02 | -5.13E-03 | 8.77E-04 | 1.17E-04 |
| S₆ | -2.71E-03 | 8.88E-04 | -2.85E-04 | 1.16E-04 | -2.50E-05 |
| S₇ | 1.85E-03 | -1.35E-03 | 5.37E-04 | -3.12E-05 | -2.07E-05 |
| S₈ | 2.31E-04 | -1.22E-05 | -2.13E-04 | 7.09E-05 | -6.57E-06 |
| S₉ | -5.62E-04 | 3.85E-04 | -2.40E-04 | 5.87E-05 | -4.84E-06 |
| S₁₀ | 9.85E-03 | 6.56E-03 | 3.37E-03 | 1.23E-03 | 3.22E-04 |
| S₁₁ | 4.14E-03 | 2.69E-03 | 7.37E-06 | -4.58E-04 | -2.90E-04 |
| S₁₂ | -3.35E-03 | -1.95E-03 | -8.35E-04 | -2.85E-04 | -3.85E-05 |
| S₁₃ | -4.54E-04 | -5.31E-04 | -6.51E-04 | -2.79E-04 | -1.69E-04 |

**Table 33**

| | | On State (Pop Out) | Off State (Collapsed) |
|---|---|---|---|
| T [mm] | S₉ | 3.3200 | 0.7500 |
| | S₁₃ | 2.3809 | 0.2500 |

**Table 34**

| | | DP1 [mm] | DP2 [mm] | DP3 [mm] |
|---|---|---|---|---|
| L5 | S₁₀ | 1.9372 | N/A | N/A |
| | S₁₁ | 2.1333 | N/A | N/A |
| L6 | S₁₂ | 2.1267 | N/A | N/A |
| | S₁₃ | 2.5492 | N/A | N/A |

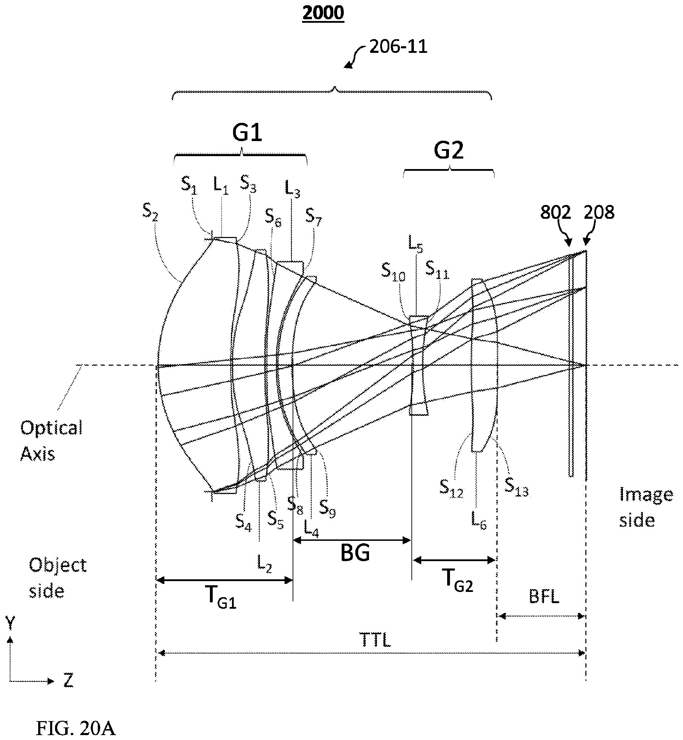

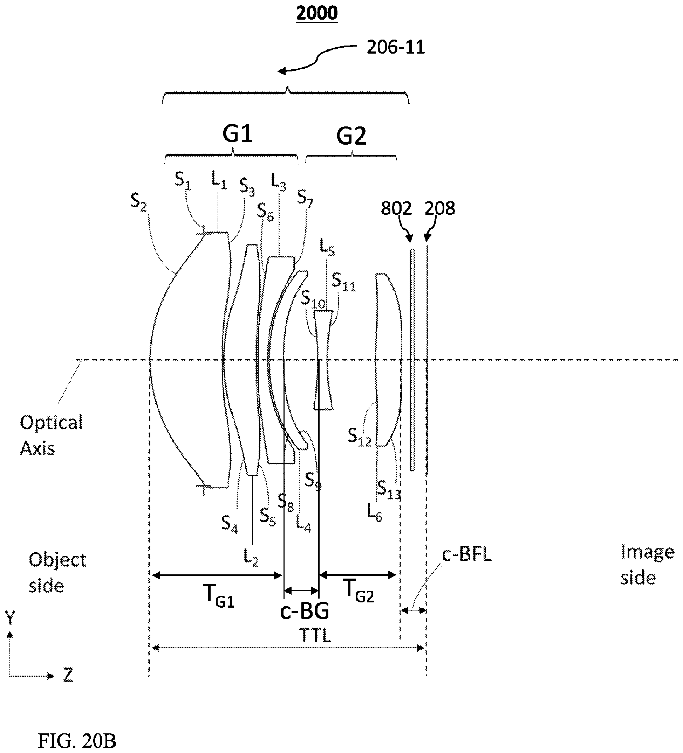

FIG. 20A shows yet another embodiment of a pop-out optical lens system disclosed herein and numbered **2000** in a pop-out state. FIG. 20B shows pop-out optical lens system **2000** in a collapsed state. Lens system **2000** comprises a pop-out lens **206-11** divided into two lens groups G1 and G2, an image sensor **208** and, optionally, an optical element **802.**

Table 35 provides surface types, Table 36 provides aspheric coefficients, and Table 37 shows the BG and the BFL for the pop-out state and the c-BG and the c-BFL for collapsed state. Table 38 shows the deflection point distances from the optical axis.

The focal length of L3+L4 together is f₃₊₄ = -17.34.

**Table 35**

| EFL = 14.7mm, F# = 2, HFoV = 12.7deg, Sensor Height Full Diagonal = 6.5mm | | | | | | | | | | | |
|---|---|---|---|---|---|---|---|---|---|---|---|
| Lens | | Surface | Type | R [mm] | T [mm] | D/2 [mm] | Nd | Vd | Focal Length [mm] | | |
| Object | | S₀ | Flat | Infinity | Infinity | | | | | | |
| Stop | | S₁ | Flat | Infinity | -1.56 | 3.68 | | | | | |
| G1 | L1 | S₂ | QTY P | 4.30 | 2.12 | 3.68 | 1.53 | 56.16 | 11.37 | | 10.31 |
| | | S₃ | QTY P | 12.20 | 0.05 | 3.55 | | | | | |
| | L2 | S₄ | QTY P | 5.78 | 0.95 | 3.32 | 1.54 | 55.99 | 18.93 | | |
| | | S₅ | QTY P | 12.34 | 0.06 | 3.22 | | | | | |
| | L3 | S₆ | QTY P | 31.14 | 0.28 | 2.97 | 1.67 | 19.44 | -13.96 | -17.34 | |
| | | S₇ | QTY P | 7.21 | 0.05 | 2.60 | | | | | |
| | L4 | S₈ | QTY P | 5.77 | 0.41 | 2.55 | 1.51 | 56.81 | 64.80 | | |
| | | S₉ | QTY P | 6.81 | See Table 37 | 2.40 | | | | | |
| G2 | L5 | S₁₀ | QTY P | -11.79 | 0.28 | 1.72 | 1.54 | 55.90 | | -7.33 | -13.01 |
| | | S₁₁ | QTY P | 6.11 | 1.42 | 1.84 | | | | | |
| | L6 | S₁₂ | QTY P | 12.04 | 0.77 | 2.34 | 1.61 | 25.64 | | 20.17 | |
| | | S₁₃ | QTY | 466.66 | See Table 37 | 2.46 | | | | | |
| Glass window | | S₁₄ | Flat | Infinity | 0.11 | | 1.52 | 64.17 | | | |
| | | S₁₅ | Flat | Infinity | 0.39 | | | | | | |
| Image sensor | | S₁₆ | | | | | | | | | |

**Table 36**

| Surface | Conic (k) | NR | A₀ | A₁ | A₂ | A₃ |
|---|---|---|---|---|---|---|
| S₂ | 0 | 3.63E+00 | -2.91E-01 | -8.05E-02 | -2.62E-02 | -4.27E-03 |
| S₃ | 0 | 3.48E+00 | -2.65E-01 | -7.73E-02 | 2.94E-02 | -7.70E-03 |
| S₄ | 0 | 3.34E+00 | -3.37E-01 | -8.26E-02 | 4.49E-02 | -1.18E-02 |
| S₅ | 0 | 3.25E+00 | -4.14E-01 | 1.15E-02 | 7.94E-04 | -3.69E-03 |
| S₆ | 0 | 2.80E+00 | 1.78E-01 | -5.55E-02 | 1.16E-02 | 3.08E-03 |
| S₇ | 0 | 2.35E+00 | 2.66E-01 | -5.92E-02 | 1.10E-02 | -2.21E-03 |
| S₈ | 0 | 2.00E+00 | 9.75E-02 | -1.02E-02 | -2.53E-03 | 2.44E-03 |
| S₉ | 0 | 1.91E+00 | 7.56E-02 | 5.35E-03 | -3.61E-03 | 2.18E-03 |
| S₁₀ | 0 | 1.97E+00 | -2.06E-01 | -7.41E-03 | 1.20E-02 | 1.23E-02 |
| S₁₁ | 0 | 2.23E+00 | -7.22E-02 | -6.08E-03 | -4.02E-03 | 3.52E-03 |
| S₁₂ | 0 | 2.53E+00 | -2.88E-01 | 3.29E-02 | -9.09E-04 | -1.65E-03 |
| S₁₃ | 0 | 2.56E+00 | -5.32E-01 | 2.37E-02 | 1.08E-03 | 3.36E-03 |

**Table 36 cont.**

| Surface | A₄ | A₅ | A₆ | A₇ | A₈ |
|---|---|---|---|---|---|
| S₂ | -1.06E-03 | 6.89E-04 | 2.45E-04 | 1.36E-04 | -7.34E-05 |
| S₃ | -2.39E-03 | 6.73E-03 | -4.20E-03 | 1.24E-03 | -1.28E-04 |
| S₄ | -7.89E-03 | 1.05E-02 | -3.05E-03 | -3.70E-04 | 4.94E-04 |
| S₅ | -6.79E-03 | 1.08E-02 | -5.13E-03 | 8.77E-04 | 1.17E-04 |
| S₆ | -2.71E-03 | 8.88E-04 | -2.85E-04 | 1.16E-04 | -2.50E-05 |
| S₇ | 1.85E-03 | -1.35E-03 | 5.37E-04 | -3.12E-05 | -2.07E-05 |
| S₈ | 2.31E-04 | -1.22E-05 | -2.13E-04 | 7.09E-05 | -6.57E-06 |
| S₉ | -5.62E-04 | 3.85E-04 | -2.40E-04 | 5.87E-05 | -4.84E-06 |
| S₁₀ | 9.85E-03 | 6.56E-03 | 3.37E-03 | 1.23E-03 | 3.22E-04 |
| S₁₁ | 4.14E-03 | 2.69E-03 | 7.37E-06 | -4.58E-04 | -2.90E-04 |
| S₁₂ | -3.35E-03 | -1.95E-03 | -8.35E-04 | -2.85E-04 | -3.85E-05 |
| S₁₃ | -4.54E-04 | -5.31E-04 | -6.51E-04 | -2.79E-04 | -1.69E-04 |

**Table 37**

| | | On State (Pop Out) | Off State (Collapsed) |
|---|---|---|---|
| T [mm] | S₉ | 3.5280 | 1.0000 |
| | S₁₃ | 2.0865 | 0.2500 |

**Table 38**

| | | DP1 [mm] | DP2 [mm] | DP3 [mm] |
|---|---|---|---|---|
| L5 | S₁₀ | N/A | N/A | N/A |
| | S₁₁ | 1.7781 | N/A | N/A |
| L6 | S₁₂ | 0.8539 | 2.1100 | N/A |
| | S₁₃ | 0.0957 | N/A | N/A |

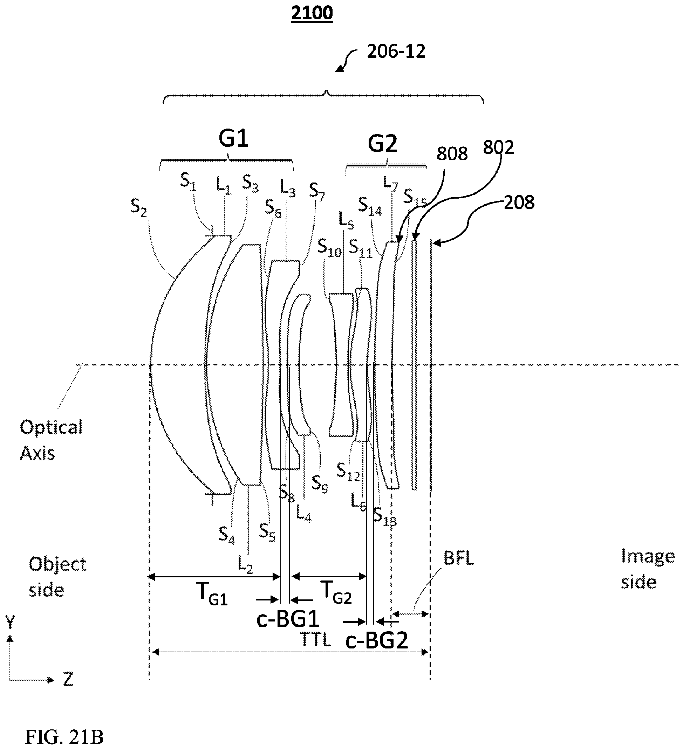

FIG. 21A shows yet another embodiment of a pop-out optical lens system disclosed herein and numbered **2100** in a pop-out state. FIG. 21B shows pop-out optical lens system **2100** in a collapsed state. Lens system **2100** comprises a pop-out lens **206-12** which is divided into three lens groups G1, G2 and Field lens **808,** an image sensor **208** and, optionally, an optical element **802.**

Table 39 provides surface types, Table 40 provides aspheric coefficients, and Table 41 shows BG1 and BG2 for the pop-out state and c-BG1 and c-BG2 for collapsed state. Table 42 shows the deflection point distances from the optical axis.

**Table 39**

| EFL = 13.9mm, F# = 2, HFoV = 13.5deg, Sensor Height Full Diagonal = 6.5mm | | | | | | | | | | |
|---|---|---|---|---|---|---|---|---|---|---|
| Group | Lens | Surface | Type | R [mm] | T [mm] | D/2 [mm] | Nd | Vd | Focal Length [mm] | |
| Object | | S₀ | Flat | Infinity | Infinity | | | | | |
| Stop | | S₁ | Flat | Infinity | -1.66 | 3.47 | | | | |
| G1 | L1 | S₂ | QTYP | 4.41 | 1.44 | 3.47 | 1.55 | 55.64 | 16.37 | 9.95 |
| | | S₃ | QTYP | 7.27 | 0.05 | 3.33 | | | | |
| | L2 | S₄ | QTYP | 4.32 | 1.51 | 3.23 | 1.51 | 56.81 | 7.82 | |
| | | S₅ | QTYP | -52.11 | 0.15 | 3.05 | | | | |
| | L3 | S₆ | QTYP | -3.92 | 0.31 | 2.82 | 1.67 | 19.44 | -9.80 | |
| | | S₇ | QTYP | -9.93 | See Table 41 | 2.45 | | | | |
| G2 | L4 | S₈ | QTYP | 21.91 | 0.32 | 1.92 | 1.55 | 56.85 | -27.93 | -13.32 |
| | | S₉ | QTYP | 8.97 | 0.99 | 1.76 | | | | |
| | L5 | S₁₀ | QTYP | -5.89 | 0.32 | 1.73 | 1.55 | 56.02 | -11.76 | |
| | | S₁₁ | QTYP | -69.36 | 0.05 | 1.91 | | | | |
| | L6 | S₁₂ | QTYP | 3.04 | 0.46 | 1.94 | 1.67 | 19.44 | 19.56 | |
| | | S₁₃ | QTYP | 3.70 | See Table 41 | 2.05 | | | | |
| Field Lens | L7 | S₁₄ | QTYP | 15.39 | 0.47 | 3.29 | 1.67 | 19.44 | | -448.46 |
| | | S₁₅ | QTYP | 14.47 | 0.54 | 3.30 | | | | |
| Glass window | | S₁₆ | Flat | Infinity | 0.11 | | 1.52 | 64.17 | | |
| | | S₁₇ | Flat | Infinity | 0.39 | | | | | |
| Image sensor | | S₁₈ | | | | | | | | |

**Table 40**

| Surface | Conic (k) | NR | A₀ | A₁ | A₂ | A₃ | A₄ |
|---|---|---|---|---|---|---|---|
| S₂ | 0 | 3.52E+00 | 3.05E-01 | -1.75E-01 | 1.08E-01 | -5.69E-02 | 2.67E-02 |
| S₃ | 0 | 3.33E+00 | -1.44E-01 | 9.96E-02 | -6.22E-02 | 1.75E-02 | -1.58E-02 |
| S₄ | 0 | 3.26E+00 | -5.61E-01 | 1.16E-01 | -5.80E-02 | 2.25E-02 | -1.65E-02 |
| S₅ | 0 | 3.10E+00 | 2.25E-02 | 7.68E-04 | -9.98E-04 | -2.60E-03 | -9.16E-04 |
| S₆ | 0 | 2.75E+00 | 1.38E+00 | -2.15E-01 | 5.41E-02 | -1.88E-02 | 6.37E-03 |
| S₇ | 0 | 2.32E+00 | 8.26E-01 | -1.09E-01 | 2.21E-02 | -8.06E-03 | 1.87E-03 |
| S₈ | 0 | 2.14E+00 | 3.84E-01 | 7.32E-02 | -2.03E-02 | -1.12E-03 | -1.91E-03 |
| S₉ | 0 | 1.99E+00 | 2.37E-01 | 6.43E-02 | -2.65E-02 | -7.56E-03 | -4.58E-03 |
| S₁₀ | 0 | 1.83E+00 | 1.22E-01 | -8.70E-02 | 9.67E-03 | -4.42E-03 | 2.08E-04 |
| S₁₁ | 0 | 1.97E+00 | 2.29E-01 | -1.18E-01 | 2.15E-02 | -5.51E-03 | 1.70E-03 |
| S₁₂ | 0 | 1.98E+00 | -6.03E-01 | 1.22E-02 | -1.01E-02 | -1.09E-03 | -1.71E-04 |
| S₁₃ | 0 | 2.10E+00 | -6.99E-01 | 4.54E-02 | -1.48E-02 | 1.08E-03 | -8.96E-04 |
| S₁₄ | 0 | 3.30E+00 | -8.94E-0 02 | 9.94E-02 | -2.24E-02 | -1.68E-03 | -2.82E-03 |
| S₁₅ | 0 | 3.35E+00 | -2.82E-01 | 1.19E-01 | -3.61E-02 | -4.14E-03 | -5.42E-03 |

**Table 40 cont.**

| Surface | A₅ | A₆ | A₇ | A₈ | A₉ | A₁₀ |
|---|---|---|---|---|---|---|
| S₂ | -1.04E-02 | 4.42E-03 | -2.44E-03 | 1.02E-03 | -2.68E-04 | -1.40E-07 |
| S₃ | 4.39E-03 | -1.08E-03 | 3.34E-04 | 6.27E-05 | - | - |
| S₄ | 2.94E-03 | -9.67E-04 | 3.08E-04 | 2.63E-04 | - | - |
| S₅ | -5.21E-06 | 6.89E-04 | -3.89E-04 | -4.99E-06 | - | - |
| S₆ | -2.07E-03 | 8.82E-04 | -1.35E-04 | -4.51E-05 | - | - |
| S₇ | -2.41E-04 | 4.11E-05 | 4.76E-05 | -2.17E-05 | - | - |
| S₈ | -2.84E-04 | -1.03E-04 | -4.12E-06 | -6.60E-06 | - | - |
| S₉ | -1.24E-03 | -3.84E-04 | -6.86E-05 | -2.03E-05 | - | - |
| S₁₀ | -1.08E-04 | 2.49E-05 | 1.66E-05 | 4.91E-06 | - | - |
| S₁₁ | 7.12E-04 | 2.28E-04 | 1.31E-04 | -1.71E-05 | - | - |
| S₁₂ | 7.13E-04 | 2.54E-04 | 1.50E-04 | 9.66E-06 | - | - |
| S₁₃ | 4.06E-04 | -1.37E-05 | 5.28E-05 | -1.11E-05 | - | - |
| S₁₄ | 3.35E-04 | -5.87E-04 | - | - | - | - |
| S₁₅ | 5.37E-04 | -8.14E-04 | - | - | - | - |

**Table 41**

| | | On State (Pop Out) | Off State (Collapsed) |
|---|---|---|---|
| T [mm] | S₇ | 1.58 | 0.20 |
| | S₁₃ | 3.82 | 0.20 |

**Table 42**

| | | DP1 [mm] | DP2 [mm] | DP3 [mm] |
|---|---|---|---|---|
| L6 | S₁₂ | 0.8851 | N/A | N/A |
| | S₁₃ | 0.7231 | N/A | N/A |
| L7 (FL) | S₁₄ | 3.1393 | N/A | N/A |
| | S₁₅ | 0.8056 | 1.8548 | 3.0509 |

While this disclosure has been described in terms of certain embodiments and generally associated methods, alterations and permutations of the embodiments and methods will be apparent to those skilled in the art. The disclosure is to be understood as not limited by the specific embodiments described herein, but only by the scope of the appended claims.

Unless otherwise stated, the use of the expression "and/or" between the last two members of a list of options for selection indicates that a selection of one or more of the listed options is appropriate and may be made.

It should be understood that where the claims or specification refer to "a" or "an" element, such reference is not to be construed as there being only one of that element.

Furthermore, for the sake of clarity the term "substantially" is used herein to imply the possibility of variations in values within an acceptable range. According to one example, the term "substantially" used herein should be interpreted to imply possible variation of up to 5% over or under any specified value. According to another example, the term "substantially" used herein should be interpreted to imply possible variation of up to 2.5% over or under any specified value. According to a further example, the term "substantially" used herein should be interpreted to imply possible variation of up to 1% over or under any specified value.

All references mentioned in this specification are herein incorporated in their entirety by reference into the specification, to the same extent as if each individual reference was specifically and individually indicated to be incorporated herein by reference. In addition, citation or identification of any reference in this application shall not be construed as an admission that such reference is available as prior art to the present disclosure.
The following numbered clauses contain further statements of various aspects of the present invention:
1. A camera, comprising:
   a lens comprising N lens elements L₁-L_{N} arranged along a lens optical axis starting with L₁ on an object side and ending with L_{N} on an image side, wherein N ≥ 5, wherein the lens elements are divided into two or more lens groups and wherein two adjacent lens groups are separated by a respective air-gap d₁ along the lens optical axis;
   an image sensor separated from lens element L_{N} by an air-gap d₂ along the lens optical axis, the image sensor having a sensor diagonal S_{D} between 7 and 20mm; and
   an actuator operative to control the air-gaps d₁ and d₂ to switch the camera between M ≥1 operative pop-out states and a collapsed state and to focus the camera on an object at an object-lens distance u of less than 30cm, wherein in each operative pop-out state m ∈ {1,2,...M} the lens has a respective effective focal length EFLₘ and a total track length TTLₘ, wherein in the collapsed state the lens has a total track length c-TTL, wherein a minimal EFLₘᵢₙ of the M effective focal lengths EFLₘ is equal to or greater than 7mm, and wherein c-TTL < 0.65·EFLₘᵢₙ.
2. The camera of clause 1, wherein M=2.
3. The camera of clause 1, wherein M=3.
4. The camera of clause 1, wherein M=4.
5. The camera of clause 1, wherein the operative pop-out states are continuous such that the EFLₘ change continuously from EFL₁ to EFL_{M}.
6. The camera of clause 1, wherein c-TTL < 0.7·EFLₘᵢₙ.
7. The camera of clause 1, wherein the actuator is operative to focus the lens to an object at a distance of less than 25cm.
8. The camera of clause 1, wherein the actuator is operative to focus the lens to an object at a distance of less than 15cm.
9. The camera of clause 1, wherein the actuator comprises one or more springs.
10. The camera of clause 1, wherein d₁ is larger than TTLₘ/6.
11. The camera of clause 1, wherein d₁ is larger than TTLₘ/5.
12. The camera of clause 1, further comprising an optical window that is not in direct contact with the lens.
13. The camera of any of the clauses 1-12, wherein the actuator comprises a plurality of springs and a guiding and positioning mechanism, wherein the guiding mechanism enables sufficient z-decenter and xy-decenter accuracy between lens elements in the operative state and repeatability in switching between operative and collapsed states, and wherein the sufficient decenter accuracy is less than 0.1mm decenter and the repeatability is less than 0.05mm decenter.
14. The camera of clause 13, wherein the sufficient decenter accuracy is less than 0.8mm decenter and wherein the repeatability is less than 0.04mm decenter.
15. The camera of any of the clauses 1-12, wherein the switching from the operative state to the collapsed state is performed by a window frame pressing on the optics module to bring the camera to a collapsed state height.
16. The camera of clause14, wherein the switching from the operative state to the collapsed state is performed by a window frame pressing on the optics module to bring the camera to a collapsed state height.
17. The camera of clause 1, wherein the lens is movable for correcting undesired rotational hand motion in Yaw and Pitch.
18. The camera of clause 1, wherein the image sensor is movable for correcting undesired rotational hand motion in Yaw and Pitch.
19. The camera of clause 1, wherein the focusing of the camera on an object at an object-lens distance of less than 30cm is continuous.
20. The camera of clause 1, wherein the actuator is further operative to, in a first operative pop-out state, focus the camera to an object at an object-lens distance of equal or less than 100cm, and wherein, the focusing of the camera to an object-lens distance of less than 30cm is in a second pop-out state different from the first pop-out state.
21. The camera of clause 1, wherein TTLₘ/EFLₘ is smaller than 1.0 and larger than 0.7.
22. The camera of clause 1, wherein S_{D} is in the range of 8mm to 14mm.
23. The camera of clause 1, wherein the actuator comprises a guiding and positioning mechanism based on a kinematic coupling mechanism.
24. A handheld electronic device, comprising the camera of any of the clauses 1-12 and 17-23.
25. A camera system comprising the camera of any of the clauses 1 to 12 and 17-23 together with a second camera comprising a second lens system having at least one air-gap, wherein the actuator also is further operative to control the at least one air-gap of the second camera to switch the second camera between O ≥ 1 second camera operative pop-out states and a second camera collapsed state, and wherein the actuator is further operative to control the at least one air-gap of the second camera for simultaneously switching the camera of any of the clauses 1 to 12 and 17-23 and the second camera between the O ≥ 1 second camera operative pop-out states and the second camera collapsed state.
26. The camera system of clause 25, wherein in the second camera collapsed state the second lens has a total track length c-TTL2 and wherein cTTL₂ = cTTL ±10%.
27. A handheld electronic device comprising the camera system of clause 25.
28. The handheld electronic device of clause 25, wherein the device has a device exterior surface, wherein in an operative state either of the first or second cameras extends beyond the device exterior surface by 2mm-10mm, and wherein in a non-operative state either of the first or second cameras extends beyond the device exterior surface by less than 2mm.
29. A handheld electronic device, comprising:
   a Tele camera having a camera optical axis and comprising an image sensor and a lens having a lens axis substantially parallel to the camera optical axis, the Tele camera having an effective focal length EFL_{T} ≥ 9mm;
   a motion sensor for sensing an undesired linear motion of the handheld electronic device;
   a depth estimator for estimating the distance between the Tele camera and an object; and
   an actuator operative to move the Tele camera or a component of the Tele camera to compensate for the undesired linear motion of the handheld electronic device, wherein the compensation depends on the undesired linear motion and on the distance between the Tele camera and the object when the distance is smaller than 50cm.
30. The handheld electronic device of clause 29, wherein the handheld device further comprises an Ultra-Wide camera having a field of view FOV_{UW} larger than a field of view FOV_{T} of the Tele camera.
31. The handheld electronic device of clause 29, wherein the handheld device further comprises a Wide camera having a field of view FOV_{W} larger than a field of view FOV_{T} of the Tele camera.
32. The handheld electronic device of clause 29, wherein the depth estimator estimates the distance between the Tele camera and the object using phase detection auto focus.
33. The handheld electronic device of clause 29, wherein the depth estimator estimates the distance between the Tele camera and the object using Time-of-Flight image data.
34. The handheld electronic device of clause 29, wherein the depth estimator estimates the distance between the Tele camera and the object using depth from motion.
35. The handheld electronic device of clause 29, wherein the depth estimator estimates the distance between the Tele camera and the object using depth from defocus.
36. The handheld electronic device of any of the clauses 30-35, wherein the depth estimator estimates the distance between the Tele camera and the object using stereo image data selected from the group consisting of image data from the Wide camera and from the Tele camera, image data from the Ultra-Wide camera and the Tele camera, and image data from the Wide camera and the Ultra-Wide camera.
37. The handheld electronic device of clause 29, wherein the compensation for the undesired linear motion of the handheld electronic device is in one direction.
38. The handheld electronic device of clause 29, wherein the compensation for the undesired linear motion of the handheld electronic device is in two or more directions.
39. The handheld electronic device of clause 29, wherein the moving component is the lens.
40. The handheld electronic device of clause 39, wherein an amount of lens movement d_{Lens} is calculated as ${d}_{Lens} = {d}_{0} \frac{EFL}{u}$, wherein d₀ is an undesired linear motion of the device, EFL is the effective focal length and u is an object-lens distance.
41. The handheld electronic device of clause 29, wherein the moving component is the image sensor.
42. The handheld electronic device of clause 41, wherein an amount of image sensor movement d_{Sensor} is calculated as ${d}_{sensor} = {d}_{0} \frac{EFL}{u - EFL}$ wherein d₀ is an undesired linear motion of device and u is an object-lens distance.
43. The handheld electronic device of clause 29, wherein the motion sensor includes an inertial measurement unit.
44. The handheld electronic device of clause 29, wherein the Tele camera is a pop-out Tele camera.
45. The handheld electronic device of clause 29, wherein the Tele camera is a folded Tele camera including an optical path folding element.
46. The handheld electronic device of clause 29, wherein the Tele camera is a double-folded Tele camera including two optical path folding elements.
47. A lens system, comprising:
   an image sensor; and
   a lens distanced by a back focal length (BFL) from the image sensor and having a field of view FOV < 40deg, an effective focal length (EFL) and a lens mean glass thickness (MGT), the lens including i lens elements L1-Li starting with L1 from an object side toward an image side, wherein 1 ≤ i ≤ N, wherein each lens element Li has a respective thickness Tᵢ and a focal length fᵢ, with a magnitude |fᵢ|, wherein at least some lens elements are organized in two lens groups G1 and G2 separated by a big gap (BG) and having, respectively for G1 and G2, effective focal lengths EFL(G1) and EFL(G2), mean glass thicknesses MGT(G1) and MGT(G2) and mean air gaps MAG(G1) and MAG(G2), wherein the lens has a pop-out total track length TTL < 20mm in a pop-out state and a collapsed total track length c-TTL in a collapsed state, wherein TTL < 0.95 x EFL, and wherein a ratio c-TTL/ TTL < 0.7.
48. The lens system of clause 47, wherein G1 includes three or more lens elements and wherein G2 includes two or more lens elements.
49. The lens system of clause 47, wherein the lens elements are organized in three lens groups G1, G2 and a Field lens, wherein G1 and G2 are separated by a first big gap BG1 and wherein G2 and the Field lens are separated by a second big gap BG2, and wherein the lens system is switched to a collapsed state by collapsing BG1 to a collapsed first big gap c-BG1 and by collapsing BG2 to a collapsed second big gap c-BG2.
50. The lens system of clause 47, wherein the lens system is switched to the collapsed state by collapsing the BFL to a collapsed back focal length c-BFL.
51. The lens system of clause 47, wherein the lens system is switched to the collapsed state by collapsing the BFL to a collapsed c-BFL and collapsing BG to a collapsed big gap c-BG.
52. The lens system of clause 47, wherein the ratio c-TTL/TTL < 0.65.
53. The lens system of clause 47, wherein the ratio c-TTL/TTL < 0.625.
54. The lens system of clause47, wherein BG > 0.1 x TTL.
55. The lens system of clause 47, wherein BG > 0.2 x TTL.
56. The lens system of clause 47, wherein TTL < 0.9 x EFL.
57. The lens system of clause 47, wherein TTL < 0.87 x EFL.
58. The lens system of clause 47, wherein MGT(G1) > 1.5 x MGT(G2).
59. The lens system of clause 47, wherein MGT(G1) > 2.5 x MGT(G2).
60. The lens system of clause 47, wherein MGT(G1) > 3.0 x MGT(G2).
61. The lens system of clause 47, wherein MGT(G1) > 1.25 x MGT.
62. The lens system of clause 47, wherein MGT(G1) > 1.4 x MGT.
63. The lens system of clause 47, wherein MAG(G2) > 5 x MAG(G1).
64. The lens system of clause 47, wherein MAG(G2) > 10 x MAG(G1).
65. The lens system of clause 47, wherein MAG(G2) > 15 x MAG(G1).
66. The lens system of clause 47, wherein MAG > 3 x MAG(G1).
67. The lens system of clause 47, wherein MAG > 5 x MAG(G1).
68. The lens system of clause 47, wherein MAG > 7 x MAG(G1).
69. The lens system of clause 47, wherein a thickness T_{G1} of G1 fulfills 0.2xTTL < T_{G1} < 0.35xTTL.
70. The lens system of clause 47, wherein a thickness T_{G1} of G1 fulfills T_{G1} ≥ 0.3 x (TTL-BFL).
71. The lens system of clause 47, wherein a thickness T_{G1} of G1 fulfills T_{G1} ≥ 0.4 x (TTL-BFL).
72. The lens system of clause 47, wherein a thickness T₁ of L1 fulfills T_{G1} ≥ 0.4 x (TTL-BFL).
73. The lens system of clause 47, wherein T₁ > 0.1xTTL.
74. The lens system of clause 47, wherein T₁ > 0.15xTTL.
75. The lens system of clause 47, wherein T₁ > 1.5xMGT.
76. The lens system of clause 47, wherein T₁ > 2.0xMGT.
77. The lens system of clause 47, EFL(G1) > 0 and wherein EFL(G2) < 0.
78. The lens system of clause 47, wherein a ratio between a magnitude of EFL(G1) of G1, |EFL(G1)|, and a magnitude of a EFL(G2) of G2, |EFL(G2)|, |EFL(G1) | / |EFL(G2)| < 0.85.
79. The lens system of clause 47, wherein a ratio between a magnitude of EFL(G1) of G1, |EFL(G1)|, and a magnitude of a EFL(G2) of G2, |EFL(G2)|, |EFL(G1) | / |EFL(G2)| < 0.6.
80. The lens system of clause 47, wherein a sequence of the Abbe numbers of the first 3 lens elements L1, L2 and L3 fulfills: high, high and low, and wherein a high lens-sensor distance is more than twice a low lens-sensor distance.
81. The lens system of clause 47, wherein a sequence of the Abbe numbers of the first 3 lens elements L1, L2 and L3 fulfills: high, low and high, and wherein a high lens-sensor distance is more than twice a low lens-sensor distance.
82. The lens system of clause 47, wherein a sequence of the signs of the focal lengths f₁, f₂, f₃ of L1, L2, L3 fulfills: + + -.
83. The lens system of clause 47, wherein a sequence of the signs of all focal lengths f₁, f₂,..., f_{N} fulfills: + + - - - +.
84. The lens system of clause 47, wherein a sequence of the signs of all focal lengths f₁, f₂,..., f_{N} fulfills: + - + - - - +.
85. The lens system of clause 47, wherein a sequence of the signs of all focal lengths f₁, f₂,..., f_{N} fulfills: + + - - + -.
86. The lens system of clause 47, wherein a sequence of the signs of all focal lengths f₁, f₂,..., f_{N} fulfills: + + - + - +.
87. The lens system of clause 47, wherein a sequence of the signs of all focal lengths f₁, f₂,..., f_{N} fulfills: + + - - - + -.
88. The lens system of clause 47, wherein curvatures of both the first surface and the second surface of the first lens element of G2 are positive and the sign of the focal length is negative.
89. The lens system of clause 47, wherein the curvature of both the first surface and the second surface of L4 are positive and wherein the sign of the focal length is negative.
90. The lens system of clause 47, wherein the magnitude of the focal length of L4, |f₄|, fulfills |f₄| > 4x |fᵢ|, i=1, 2, 3, 5, 6..N.
91. The lens system of clause 47, wherein the magnitude of the focal length of the fourth lens element L4, |f₄|, fulfills |f₄| > 5x |fᵢ|, i= 5, 6..N.
92. The lens system of clause 47, wherein a first deflection point at the rear surface of L_{N-1} is located at a distance d-r measured from an optical axis of the lens, and a first deflection point at the front surface of L_{N-1} is located at a distance d-f measured from an optical axis of the lens, and wherein 0.5mm < d-r, d-f > 1.0mm.
93. The lens system of clause 47, wherein a first deflection point at the rear surface of L_{N-1} is located at a distance d-r measured from an optical axis of the lens, and wherein d-r > 1.5mm.
94. The lens system of clause 47, wherein a first deflection point at the front surface of L_{N} is located at a distance d-f measured from an optical axis of the lens, and wherein d-f > 0.8mm.
95. The lens system of clause 47, wherein a first deflection point at the rear surface of L_{N} is located at a distance d-r measured from an optical axis of the lens, and wherein d-r > 0.15mm.
96. The lens system of clause 47, wherein a first deflection point at the rear surface of L_{N} is located at a distance d-r measured from an optical axis of the lens, and wherein d-r > 2mm.
97. The lens system of clause 47, wherein the first lens element L₁ is meniscus.
98. The lens system of clause 47, wherein EFL(G1) < 0.9 x EFL.
99. The lens system of clause 47, wherein EFL(G1) < 0.8 x EFL.

## Claims

1. A camera, comprising:
a lens assembly comprising N ≥ 7 lens elements L1-LN starting with a first lens element L1 on an object side and having a field-of-view (FOV) in the range of 30 degrees to 65 degrees, an f number (f/#) < 2.25 and a back focal length (BFL) larger than any air-gap between lens elements;
a pop-out mechanism configured to actuate the camera between an operative pop-out state and a collapsed state by collapsing the BFL to a collapsed (c-BFL) < BFL; and
an image sensor having an image sensor diagonal (SD) in the range of 5mm to 20mm,
wherein the camera has a total track length (TTL) in the operative pop-out state in the range of 7mm - 15mm and a collapsed total track length (c-TTL) in the collapsed state in the range of 4.5mm - 13mm, wherein 0.64 < c-TTL/TTL < 0.9, wherein cTTL/SD < 1.1, and wherein the camera is included in a mobile device.

2. The camera of claim 1, wherein the lens assembly has a 35mm equivalent focal length larger than 24mm.

3. The camera of claim 1, wherein the lens has an effective focal length (EFL), and wherein c-TTL/EFL ≥ 0.97.

4. The camera of claim 1, wherein L1 has positive lens power, a second lens element L2 has negative lens power and a third lens element L3 has positive lens power.

5. The camera of claim 4, wherein a last lens element LN has positive lens power.

6. The camera of claim 1, wherein c-BFL is in the range of 0.2mm to 1.2mm.

7. The camera of claim 1, wherein BFL/c-BFL > 2.5.

8. The camera of claim 1, wherein BFL/c-BFL > 3.

9. The camera of claim 1, wherein SD > 11mm.

10. The camera of claim 1, wherein SD < 14mm.

11. The camera of claim 1, wherein the pop-out mechanism comprises an external module seal configured to prevent liquids and particles from penetrating the mobile device.

12. The camera of claim 11, wherein the pop-out mechanism is configured to raise and lower a moving window element relative to a stationary surface of the mobile device, wherein the external module seal has a collapsible structure, an inner edge and an outer edge, and wherein the external module seal collapses into a peripheral bulge formed between its inner and outer edges in response to the pop-out mechanism lowering the moving window element.

13. The camera of claim 11, wherein the external module seal supports an ingress protection ranking IP68 of the mobile device.

14. The camera of claim 1, wherein the pop-up mechanism includes a window frame engageable with the optics module, wherein the window frame does not touch the optics module in the operative pop-out state, and wherein the window frame is operable to press on the optics module to bring the camera to the collapsed state.

15. The camera of claim 1, wherein the mobile device is a smartphone.
